# EUROPEAN PATENT APPLICATION

(11) **EP 4 184 899 A1**
(43) Date of publication of application: **24.05.2023**
(21) Application number: 21849928.3
(22) Date of filing: 31.07.2021
(51) Int. Cl.: H04M 1/02, H04N 5/235, H04N 5/225

(54) **LIGHT FILL METHOD IN PHOTOGRAPHING AND RELATED APPARATUS**

(30) Priority: 31.07.2020 CN 202010762166; 31.07.2020 CN 202010762143; 30.10.2020 CN 202011198299
(71) Applicant: Huawei Technologies Co., Ltd., Shenzhen, Guangdong 518129 (CN)
(72) Inventor: BIAN, Chao, Shenzhen, Guangdong 518129 (CN)
(74) Representative: Goddar, Heinz J.
(86) International application number: PCT/CN2021/109943
(87) International publication number: WO 2022/022731

(57) **Abstract**

A light compensation method for photographing is disclosed, and is applied to an electronic device. The electronic device includes M flashes, and M is a positive integer. Illumination directions of the M flashes and a photographing direction of a camera of the electronic device are on a same side of the electronic device. The method includes: The electronic device receives a first user operation; enables a photographing function in response to the first user operation; displays a first interface corresponding to the photographing function, where the first interface includes a preview image captured by the camera and a control; determines a light compensation intensity based on image luminance of the preview image; and adjusts luminance of the flashes based on the light compensation intensity. Embodiments of this application can effectively improve users' photographing experience in a dark environment.

## Description

This application claims priorities to Chinese Patent Application No. 202010762143.1, filed with the China National Intellectual Property Administration on July 31, 2020 and entitled "LIGHT COMPENSATION METHOD FOR PHOTOGRAPHING AND RELATED APPARATUS", to Chinese Patent Application No. 202010762166.2, filed with the China National Intellectual Property Administration on July 31, 2020 and entitled "LIGHT COMPENSATION METHOD FOR PHOTOGRAPHING AND RELATED APPARATUS", and to Chinese Patent Application No. 202011198299.8, filed with the China National Intellectual Property Administration on October 30, 2020 and entitled "LIGHT COMPENSATION METHOD FOR PHOTOGRAPHING AND RELATED APPARATUS", which are incorporated herein by reference in their entireties.

### TECHNICAL FIELD

This application relates to the field of electronic technologies, and in particular, to a light compensation method for photographing and a related apparatus.

### BACKGROUND

With development of terminal technologies, users have higher requirements on performance and functions of cameras of smartphones. Currently, to meet users' photographing requirement in a dark or weak light scenario, most manufacturers perform post-processing on captured photos, to achieve better image quality by using an image processing algorithm. However, an effect of such post-processing is not satisfactory, especially in a photographing scenario of a front-facing camera.

In conclusion, users' photographing experience is poor in the dark or weak light scenario.

### SUMMARY

Embodiments of this application provide a light compensation method for photographing and a related apparatus, to effectively improve users' photographing experience in a dark environment.

According to a first aspect, this application provides a light compensation method for photographing, applied to an electronic device. The electronic device includes a display and a front-facing camera. The method includes: The electronic device receives a first user operation, enables a photographing function in response to the first user operation, and displays a first interface corresponding to the photographing function. The first interface includes a preview image captured by the front-facing camera and a control. The preview image includes a preview region and a light compensation region, and the preview region displays a preview image obtained by performing light compensation on the light compensation region. A light compensation intensity of the light compensation region is controlled by the electronic device by adjusting a light compensation parameter of the light compensation region.

In this embodiment of this application, after enabling the photographing function, the electronic device performs light compensation by using the light compensation region in the preview image on the first interface, so that users can observe a light compensation effect in real time in the preview region in the preview image on the first interface. In this way, users' photographing experience can be effectively improved in a dark environment.

In a possible implementation, the light compensation parameter of the light compensation region includes at least one of transparency of the light compensation region, pixel luminance of the light compensation region of the display, and luminance of a backlight source of the display.

In a possible implementation, that the electronic device displays the first interface corresponding to the photographing function includes: The electronic device displays, based on a preset light compensation parameter of the light compensation region, the first interface corresponding to the photographing function.

In a possible implementation, the light compensation region includes a first light compensation subregion and a second light compensation subregion, and the light compensation intensity of the light compensation region is controlled by the electronic device by adjusting a light compensation parameter of at least one of the first light compensation subregion and the second light compensation subregion.

In a possible implementation, the method further includes: The electronic device receives a second user operation, and the electronic device determines a shape of the preview region or the light compensation region on the first interface in response to the second user operation.

In a possible implementation, the method further includes: The electronic device receives a third user operation, and the electronic device determines a size of the preview region or the light compensation region on the first interface in response to the third user operation.

In a possible implementation, the method further includes: The electronic device receives a fourth user operation, and the electronic device determines a location of the preview region or the light compensation region on the first interface in response to the fourth user operation.

In a possible implementation, the method further includes: The electronic device receives a fifth user operation, the electronic device determines the light compensation parameter of the light compensation region in response to the fifth user operation, and the electronic device controls the light compensation intensity of the light compensation region based on the light compensation parameter of the light compensation region.

In a possible implementation, that the electronic device controls the light compensation intensity of the light compensation region based on the light compensation parameter of the light compensation region includes: The electronic device controls the light compensation intensity of the light compensation region based on the light compensation parameter of at least one of the first light compensation subregion and the second light compensation subregion.

In a possible implementation, before the electronic device receives a second user operation, the method further includes: The electronic device displays a first control on the first interface, where the first control is for determining the shape of the preview region, and the preview region has at least two shapes; the electronic device receives a sixth user operation performed on the first control; and the electronic device displays an icon of the shape of the preview region in response to the sixth user operation. That the electronic device receives the second user operation specifically includes: The electronic device receives the second user operation performed on the icon.

In a possible implementation, the second user operation includes a gesture of sliding a finger of a user on the display. That the electronic device determines the shape of the preview region or the light compensation region on the first interface in response to the second user operation specifically includes: The electronic device determines the shape of the preview region or the light compensation region on the first interface based on a sliding track of the gesture in the second user operation in response to the second user operation.

In a possible implementation, before the electronic device receives the fifth user operation, the first interface displays a first selection control and a second selection control. The first selection control and the second selection control correspond to different light compensation parameters, and the first selection control corresponds to a first light compensation parameter. That the electronic device receives the fifth user operation specifically includes: The electronic device receives the fifth user operation performed on the first selection control. That the electronic device determines the light compensation parameter of the light compensation region in response to the fifth user operation specifically includes: The electronic device determines the light compensation parameter of the light compensation region as the first light compensation parameter in response to the fifth user operation.

In a possible implementation, the first selection control corresponds to the first light compensation parameter and a first image processing algorithm. After the electronic device determines the light compensation parameter of the light compensation region as the first light compensation parameter in response to the fifth user operation, the method further includes performing, by using the first image processing algorithm, image processing on the preview image captured by the front-facing camera.

In a possible implementation, before the electronic device receives the fifth user operation, the first interface displays a first luminance adjustment bar corresponding to the first light compensation subregion and a second luminance adjustment bar corresponding to the second light compensation subregion. The first luminance adjustment bar includes a first identifier. A length from a first end of the first luminance adjustment bar to the first identifier is for indicating a light compensation intensity of the first light compensation subregion, and a total length from the first end of the first luminance adjustment bar to a second end of the first luminance adjustment bar is for indicating a maximum light compensation intensity. That the electronic device receives the fifth user operation specifically includes: The electronic device receives the fifth user operation performed on the first luminance adjustment bar, and adjusts a location of the first identifier on the first luminance adjustment bar. That the electronic device determines the light compensation parameter of the light compensation region in response to the fifth user operation specifically includes: The electronic device determines, in response to the fifth user operation, a light compensation parameter of the first light compensation subregion based on a light compensation intensity indicated by the length from the first end to the first identifier.

In a possible implementation, the second selection control corresponds to a second light compensation parameter and a second image processing algorithm, and the first image processing algorithm is different from the second image processing algorithm.

According to a second aspect, this application provides a light compensation method for photographing, applied to an electronic device. The electronic device includes M flashes, and M is a positive integer. Illumination directions of the M flashes and a photographing direction of a camera of the electronic device are on a same side of the electronic device. The method includes: The electronic device receives a first user operation; enables a photographing function in response to the first user operation; displays a first interface corresponding to the photographing function, where the first interface includes a preview image captured by the camera and a control; determines a light compensation intensity of the flashes based on image luminance of the preview image; and adjusts luminance of the flashes based on the light compensation intensity of the flashes.

In this embodiment of this application, after enabling the photographing function, the electronic device determines the light compensation intensity of the flashes based on the image luminance of the preview image, and adjusts the luminance of the flashes based on the light compensation intensity of the flashes. Users can observe a light compensation effect in real time through the preview image on the first interface. In this way, users' photographing experience can be effectively improved in a dark environment.

In a possible implementation, before the electronic device determines a light compensation intensity of the flashes based on image luminance of the preview image, the method further includes: The electronic device receives a seventh user operation. That the electronic device determines the light compensation intensity of the flashes based on the image luminance of the preview image specifically includes: The electronic device determines the light compensation intensity of the flashes based on the image luminance of the preview image in response to the received seventh user operation.

In a possible implementation, before the electronic device receives a seventh user operation, the method further includes: The electronic device displays a third selection control and a fourth selection control on the first interface. The third selection control corresponds to a first light compensation intensity, and the fourth selection control corresponds to a second light compensation intensity. That the electronic device receives the seventh user operation specifically includes: The electronic device receives the seventh user operation performed on the third selection control. That the electronic device determines the light compensation intensity of the flashes based on the image luminance of the preview image in response to the received seventh user operation specifically includes: The electronic device determines, based on the image luminance of the preview image, the first light compensation intensity corresponding to the third selection control as the light compensation intensity of the flashes in response to the received seventh user operation.

In a possible implementation, the third selection control corresponds to the first light compensation intensity and a third image processing algorithm. After the electronic device determines, based on the image luminance of the preview image, the first light compensation intensity corresponding to the third selection control as the light compensation intensity of the flashes in response to the received seventh user operation, the method further includes performing, by using the third image processing algorithm, image processing on the preview image captured by the camera. That the electronic device adjusts the luminance of the flashes based on the light compensation intensity of the flashes includes: The electronic device adjusts the luminance of the flashes based on the first light compensation intensity.

In a possible implementation, the first interface includes M regions, the M regions are determined based on locations of the M flashes on the electronic device, and the M flashes one-to-one correspond to the M regions. That the electronic device determines the light compensation intensity of the flashes based on the image luminance of the preview image specifically includes: The electronic device determines a third light compensation intensity based on ambient light luminance; the electronic device determines a fourth light compensation intensity based on image luminance of the preview image in a first region of the M regions, where the first region corresponds to a first flash in the M flashes; and the electronic device determines, based on the third light compensation intensity and the fourth light compensation intensity, a light compensation intensity corresponding to the first flash. The electronic device stores a correspondence between the fourth light compensation intensity and the image luminance.

In a possible implementation, that the electronic device determines, based on the third light compensation intensity and the fourth light compensation intensity, the light compensation intensity corresponding to the first flash specifically includes: When a difference between the third light compensation intensity and the fourth light compensation intensity is greater than a first threshold, the electronic device determines the light compensation intensity corresponding to the first flash as the fourth light compensation intensity; or when the difference between the third light compensation intensity and the fourth light compensation intensity is less than or equal to the first threshold, the electronic device determines the light compensation intensity corresponding to the first flash as the third light compensation intensity.

In a possible implementation, at least two regions of the M regions overlap.

In a possible implementation, that the electronic device determines the third light compensation intensity based on the ambient light luminance includes: The electronic device determines a fifth light compensation intensity based on the ambient light luminance; the electronic device identifies a target object in the preview image; the electronic device determines an area of the target object in each of the M regions in the preview image; and the electronic device determines the third light compensation intensity based on the fifth light compensation intensity and an area of the target object in the M regions in the preview image.

In a possible implementation, before the electronic device displays a third selection control and a fourth selection control on the first interface, the method further includes: The electronic device displays a second control on the first interface, and the electronic device receives an eighth user operation performed on the second control. That the electronic device displays the third selection control and the fourth selection control on the first interface includes: The electronic device displays the third selection control and the fourth selection control on the first interface in response to the eighth user operation.

In a possible implementation, the fourth selection control corresponds to the second light compensation intensity and a fourth image processing algorithm, and the third image processing algorithm is different from the fourth image processing algorithm.

According to a third aspect, this application provides an electronic device, including one or more processors, a display, one or more memories, and a front-facing camera. The one or more memories and the display are coupled to the one or more processors. The one or more memories are configured to store computer program code. The computer program code includes computer instructions. When the one or more processors execute the computer instructions, the electronic device is enabled to: receive a first user operation; enable a photographing function in response to the first user operation; and display a first interface corresponding to the photographing function. The first interface includes a preview image captured by the front-facing camera and a control. The preview image includes a preview region and a light compensation region, and the preview region displays a preview image obtained by performing light compensation on the light compensation region. A light compensation intensity of the light compensation region is controlled by the electronic device by adjusting a light compensation parameter of the light compensation region.

In a possible implementation, the light compensation parameter of the light compensation region includes at least one of transparency of the light compensation region, pixel luminance of the light compensation region of the display, and luminance of a backlight source of the display.

In a possible implementation, that the electronic device displays the first interface corresponding to the photographing function includes: The electronic device displays, based on a preset light compensation parameter of the light compensation region, the first interface corresponding to the photographing function.

In a possible implementation, the light compensation region includes a first light compensation subregion and a second light compensation subregion, and the light compensation intensity of the light compensation region is controlled by the electronic device by adjusting a light compensation parameter of at least one of the first light compensation subregion and the second light compensation subregion.

In a possible implementation, when the one or more processors execute the computer instructions, the electronic device is further enabled to: receive a second user operation; and determine a shape of the preview region or the light compensation region on the first interface in response to the second user operation.

In a possible implementation, when the one or more processors execute the computer instructions, the electronic device is further enabled to: receive a third user operation; and determine a size of the preview region or the light compensation region on the first interface in response to the third user operation.

In a possible implementation, when the one or more processors execute the computer instructions, the electronic device is further enabled to: receive a fourth user operation; and determine a location of the preview region or the light compensation region on the first interface in response to the fourth user operation.

In a possible implementation, when the one or more processors execute the computer instructions, the electronic device is further enabled to: receive a fifth user operation; determine the light compensation parameter of the light compensation region in response to the fifth user operation; and control the light compensation intensity of the light compensation region based on the light compensation parameter of the light compensation region.

In a possible implementation, that the electronic device controls the light compensation intensity of the light compensation region based on the light compensation parameter of the light compensation region includes: The electronic device controls the light compensation intensity of the light compensation region based on the light compensation parameter of at least one of the first light compensation subregion and the second light compensation subregion.

In a possible implementation, before receiving the second user operation, the electronic device further displays a first control on the first interface, where the first control is for determining the shape of the preview region, and the preview region has at least two shapes; receives a sixth user operation performed on the first control; and displays an icon of the shape of the preview region in response to the sixth user operation. That the electronic device receives the second user operation specifically includes: The electronic device receives the second user operation performed on the icon.

In a possible implementation, the second user operation includes a gesture of sliding a finger of a user on the display. That the electronic device determines the shape of the preview region or the light compensation region on the first interface in response to the second user operation specifically includes: The electronic device determines the shape of the preview region or the light compensation region on the first interface based on a sliding track of the gesture in the second user operation in response to the second user operation.

In a possible implementation, before the fifth user operation is received, the first interface displays a first selection control and a second selection control. The first selection control and the second selection control correspond to different light compensation parameters, and the first selection control corresponds to a first light compensation parameter. That the electronic device receives the fifth user operation includes: The electronic device receives the fifth user operation performed on the first selection control. That the electronic device determines the light compensation parameter of the light compensation region in response to the fifth user operation specifically includes: The electronic device determines the light compensation parameter of the light compensation region as the first light compensation parameter in response to the fifth user operation.

In a possible implementation, the first selection control corresponds to the first light compensation parameter and a first image processing algorithm. After the electronic device determines the light compensation parameter of the light compensation region as the first light compensation parameter in response to the fifth user operation, the electronic device further performs, by using the first image processing algorithm, image processing on the preview image captured by the front-facing camera.

In a possible implementation, before the fifth user operation is received, the first interface displays a first luminance adjustment bar corresponding to the first light compensation subregion and a second luminance adjustment bar corresponding to the second light compensation subregion. The first luminance adjustment bar includes a first identifier. A length from a first end of the first luminance adjustment bar to the first identifier is for indicating a light compensation intensity of the first light compensation subregion, and a total length from the first end of the first luminance adjustment bar to a second end of the first luminance adjustment bar is for indicating a maximum light compensation intensity. That the electronic device receives the fifth user operation specifically includes: The electronic device receives the fifth user operation performed on the first luminance adjustment bar, and adjusts a location of the first identifier on the first luminance adjustment bar. That the electronic device determines the light compensation parameter of the light compensation region in response to the fifth user operation specifically includes: The electronic device determines, in response to the fifth user operation, a light compensation parameter of the first light compensation subregion based on a light compensation intensity indicated by the length from the first end to the first identifier.

In a possible implementation, the second selection control corresponds to a second light compensation parameter and a second image processing algorithm, and the first image processing algorithm is different from the second image processing algorithm.

According to a fourth aspect, this application provides an electronic device, including one or more processors, a display, one or more memories, a camera, and M flashes. Illumination directions of the M flashes and a photographing direction of a camera of the electronic device are on a same side of the electronic device. The one or more memories and the display are coupled to the one or more processors. The one or more memories are configured to store computer program code. The computer program code includes computer instructions. When the one or more processors execute the computer instructions, the electronic device is enabled to: receive a first user operation; enable a photographing function in response to the first user operation; display a first interface corresponding to the photographing function, where the first interface includes a preview image captured by the camera and a control; determine a light compensation intensity of the flashes based on image luminance of the preview image; and adjust luminance of the flashes based on the light compensation intensity of the flashes.

In a possible implementation, before determining the light compensation intensity of the flashes based on the image luminance of the preview image, the electronic device further receives a seventh user operation. That the electronic device determines the light compensation intensity of the flashes based on the image luminance of the preview image specifically includes: The electronic device determines the light compensation intensity of the flashes based on the image luminance of the preview image in response to the received seventh user operation.

In a possible implementation, before receiving the seventh user operation, the electronic device further displays a third selection control and a fourth selection control on the first interface. The third selection control corresponds to a first light compensation intensity, and the fourth selection control corresponds to a second light compensation intensity. That the electronic device receives the seventh user operation specifically includes: The electronic device receives the seventh user operation performed on the third selection control. That the electronic device determines the light compensation intensity of the flashes based on the image luminance of the preview image in response to the received seventh user operation specifically includes: The electronic device determines, based on the image luminance of the preview image, the first light compensation intensity corresponding to the third selection control as the light compensation intensity of the flashes in response to the received seventh user operation.

In a possible implementation, the third selection control corresponds to the first light compensation intensity and a third image processing algorithm. After determining, based on the image luminance of the preview image, the first light compensation intensity corresponding to the third selection control in response to the received seventh user operation, the electronic device further performs, by using the third image processing algorithm, image processing on the preview image captured by the camera. That the electronic device adjusts the luminance of the flashes based on the light compensation intensity of the flashes includes: The electronic device adjusts the luminance of the flashes based on the first light compensation intensity.

In a possible implementation, the first interface includes M regions, the M regions are determined based on locations of the M flashes on the electronic device, and the M flashes one-to-one correspond to the M regions. That the electronic device determines the light compensation intensity of the flashes based on the image luminance of the preview image specifically includes: The electronic device determines a third light compensation intensity based on ambient light luminance; determines a fourth light compensation intensity based on image luminance of the preview image in a first region of the M regions, where the first region corresponds to a first flash in the M flashes; and determines, based on the third light compensation intensity and the fourth light compensation intensity, a light compensation intensity corresponding to the first flash. The electronic device stores a correspondence between the fourth light compensation intensity and the image luminance.

In a possible implementation, that the electronic device determines, based on the third light compensation intensity and the fourth light compensation intensity, the light compensation intensity corresponding to the first flash specifically includes: When a difference between the third light compensation intensity and the fourth light compensation intensity is greater than a first threshold, the electronic device determines the light compensation intensity corresponding to the first flash as the fourth light compensation intensity; or when the difference between the third light compensation intensity and the fourth light compensation intensity is less than or equal to the first threshold, the electronic device determines the light compensation intensity corresponding to the first flash as the third light compensation intensity.

In a possible implementation, at least two regions of the M regions overlap.

In a possible implementation, that the electronic device determines the third light compensation intensity based on the ambient light luminance includes: The electronic device determines a fifth light compensation intensity based on the ambient light luminance; identifies a target object in the preview image; determines an area of the target object in each of the M regions in the preview image; and determines the third light compensation intensity based on the fifth light compensation intensity and an area of the target object in the M regions in the preview image.

In a possible implementation, before displaying the third selection control and the fourth selection control on the first interface, the electronic device further displays a second control on the first interface, and receives an eighth user operation performed on the second control. That the electronic device displays the third selection control and the fourth selection control on the first interface includes: The electronic device displays the third selection control and the fourth selection control on the first interface in response to the eighth user operation.

In a possible implementation, the fourth selection control corresponds to the second light compensation intensity and a fourth image processing algorithm, and the third image processing algorithm is different from the fourth image processing algorithm.

According to a fifth aspect, a computer-readable storage medium is provided, including computer instructions. When the computer instructions are executed on a terminal device, the terminal device is enabled to perform any one of the possible implementations of the first aspect or the second aspect.

According to a sixth aspect, a computer product is provided. When the computer program product is run on a computer, the computer is enabled to perform any one of the possible implementations of the first aspect or the second aspect.

### BRIEF DESCRIPTION OF DRAWINGS

FIG. 1A is a schematic diagram of a structure of an electronic device according to an embodiment of this application;
FIG. 1B to FIG. 1E each are a schematic diagram of distribution of flashes according to an embodiment of this application;
FIG. 1F is a schematic diagram of light ranges of flashes according to an embodiment of this application;
FIG. 2A to FIG. 2C each are a schematic diagram of a user interface according to an embodiment of this application;
FIG. 3A to FIG. 3N each are a schematic diagram of a user interface according to an embodiment of this application;
FIG. 4A to FIG. 4G each are a schematic diagram of a user interface according to an embodiment of this application;
FIG. 5A to FIG. 5D each are a schematic diagram of a user interface according to an embodiment of this application;
FIG. 6A to FIG. 6F each are a schematic diagram of a user interface according to an embodiment of this application;
FIG. 7A and FIG. 7B each are a schematic diagram of a user interface according to an embodiment of this application;
FIG. 8A to FIG. 8J each are a schematic diagram of a user interface according to an embodiment of this application;
FIG. 9A to FIG. 9I each are a schematic diagram of a user interface according to an embodiment of this application;
FIG. 10A and FIG. 10B each are a schematic diagram of a structure of a display panel according to an embodiment of this application;
FIG. 11A is a schematic diagram of a time sequence of page drawing according to an embodiment of this application;
FIG. 11B is a schematic diagram of chart layers according to an embodiment of this application;
FIG. 12 is a schematic diagram of a software architecture according to an embodiment of this application;
FIG. 13A to FIG. 13F each are a schematic diagram of a user interface according to an embodiment of this application;
FIG. 14A to FIG. 14D each are a schematic diagram of a user interface according to an embodiment of this application;
FIG. 15A to FIG. 15G each are a schematic diagram of a user interface according to an embodiment of this application;
FIG. 16A to FIG. 16C each are a schematic diagram of a user interface according to an embodiment of this application;
FIG. 17A to FIG. 17C each are a schematic diagram of a user interface according to an embodiment of this application;
FIG. 18A and FIG. 18B each are a schematic diagram of a user interface according to an embodiment of this application;
FIG. 19A to FIG. 19C each are a schematic diagram of a user interface according to an embodiment of this application; and
FIG. 20 is a schematic diagram of another software structure according to an embodiment of this application.

### DESCRIPTION OF EMBODIMENTS

The following describes technical solutions of embodiments of this application with reference to the accompanying drawings. In descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The terms "first" and "second" mentioned below are merely intended for description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

An embodiment of this application provides a light compensation method for photographing. In the provided method, an electronic device 100 provides a user with an intelligent light compensation function for front-facing photographing. When the user performs photographing by using a front-facing camera, the electronic device 100 may display a light compensation control on a front-facing photographing interface, determine one or more light compensation regions on the front-facing photographing interface by receiving a user operation performed on the light compensation control, and adjust light compensation intensities of the light compensation regions based on a requirement of the user, to improve a light condition of a front-facing photographing environment, effectively improve image quality of front-facing photographing, and improve front-facing photographing experience of the user.

The following first describes an example of the electronic device 100 provided in the following embodiments of this application.

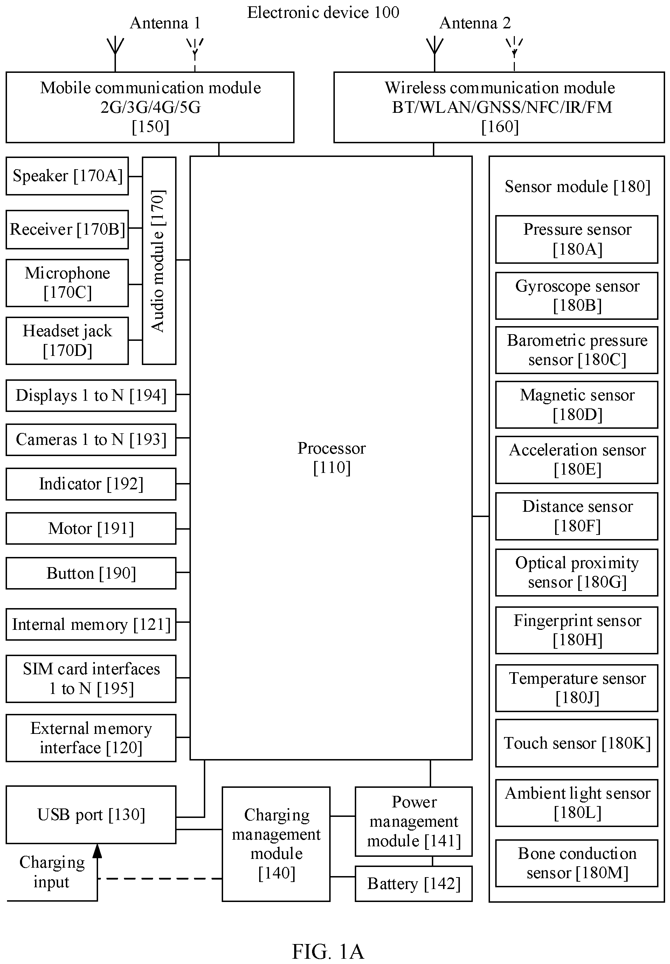

FIG. 1A shows a schematic diagram of a structure of the electronic device 100.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or may combine some components, or may split some components, or may have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to control instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) port, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through an I2C interface, so that the processor 110 communicates with the touch sensor 180K through an I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through a I2S bus, to implement communication between the processor 110 and the audio module 170. In some embodiments, the audio module 170 may transfer an audio signal to the wireless communication module 160 through the I2S interface, to implement a function of answering a call by using a Bluetooth headset.

The PCM interface may also be configured to: perform audio communication, and sample, quantize, and code an analog signal. In some embodiments, the audio module 170 may be coupled to the wireless communication module 160 through a PCM bus interface. In some embodiments, the audio module 170 may also transfer an audio signal to the wireless communication module 160 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB port 130 is a port that conforms to a USB standard specification, and may be specifically a mini USB port, a micro USB port, a USB Type-C port, or the like. The USB port 130 may be configured to connect to the charger to charge the electronic device 100, or may be configured to transmit data between the electronic device 100 and a peripheral device. The USB port 130 may alternatively be configured to connect to a headset, to play audio by using the headset. Alternatively, the port may be configured to connect to another electronic device, for example, an AR device.

It may be understood that an interface connection relationship between the modules that is shown in this embodiment of this application is merely an example for description, and does not constitute a limitation on a structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input from a wired charger through the USB port 130. In some embodiments of wireless charging, the charging management module 140 may receive a wireless charging input through a wireless charging coil of the electronic device 100. The charging management module 140 may further supply power to the electronic device by using the power management module 141 while charging the battery 142.

The power management module 141 is configured to connect the battery 142 and the charging management module 140 to the processor 110. The power management module 141 receives an input of the battery 142 and/or an input of the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may further be multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to a modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium- or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like and that is applied to the electronic device 100. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode or active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

In this embodiment of this application, the display 194 may be configured to display a control, and the control may be configured to listen to an operation of displaying, in an expanded manner, a control corresponding to a light compensation function that can be currently provided by the electronic device. In response to the operation, the display 194 may be further configured to display a control corresponding to a light compensation function currently provided by the electronic device.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as an RGB format or a YUV format. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to: compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. The NPU can implement applications such as intelligent cognition of the electronic device 100, such as image recognition, facial recognition, speech recognition, and text understanding.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and a phone book) and the like that are created during use of the electronic device 100. In addition, the internal memory 121 may include a high-speed random access memory, or may include a nonvolatile memory such as at least one magnetic disk storage device, a flash memory, or a universal flash storage (universal flash storage, UFS). The processor 110 runs the instructions stored in the internal memory 121 and/or the instructions stored in the memory disposed in the processor, to perform various function applications and data processing of the electronic device 100.

The electronic device 100 may implement audio functions, for example, music playing and recording, by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to: code and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or audio information is listened to by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB port 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines a pressure intensity based on a capacitance change. When a touch operation is performed on the display 194, the electronic device 100 detects an intensity of the touch operation by using the pressure sensor 180A. The electronic device 100 may also calculate a touch location based on a detection signal of the pressure sensor 180A. In some embodiments, touch operations that are performed at a same touch location but have different touch operation intensities may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating an SMS message is executed.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be configured to perform image stabilization during photographing. For example, when a shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a flip phone, the terminal device 100 may detect opening and closing of a flip cover by using the magnetic sensor 180D. Further, a feature such as automatic unlocking upon opening of the flip cover is set based on a detected opening or closing state of the flip cover.

The acceleration sensor 180E may detect magnitudes of accelerations of the electronic device 100 in various directions (usually on three axes), and may detect a magnitude and a direction of gravity when the electronic device 100 is still. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F to implement quick focusing.

The optical proximity sensor 180G may include, for example, a light-emitting diode (LED) and an optical detector such as a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear for a call, to automatically turn off a screen for power saving. The optical proximity sensor 180G may also be used in a flip cover mode or a pocket mode to automatically perform screen unlocking or locking.

The ambient light sensor 180L is configured to sense ambient light luminance. The ambient light sensor 180L has characteristics such as a small dark current, a low illumination response, high sensitivity, and a linear change of a current with illumination enhancement. The ambient light sensor 180L is implemented by using photosensitive elements such as a phototransistor, a photoresistor, a photodiode, and a photodiode. An output signal of the ambient light sensor 180L may be a current signal, a voltage signal, or a digital signal. The electronic device 100 may convert the output signal of the ambient light sensor 180L into ambient light luminance. The electronic device 100 may adaptively adjust luminance of the display 194 based on a sensed ambient light luminance, so that power consumption of the electronic device 100 can be reduced, and a working time of the electronic device 100 can be prolonged to a maximum extent. The ambient light sensor 180L may also be configured to automatically adjust a white balance during photographing. The ambient light sensor 180L may further cooperate with the optical proximity sensor 180G to detect whether the electronic device 100 is in a pocket, to prevent an accidental touch.

In this embodiment of this application, the electronic device 100 may determine the ambient light luminance by using the ambient light sensor 180L, and calculate, based on the ambient light luminance, an optimal light compensation intensity required in a current photographing environment.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor located near the temperature sensor 180J, to reduce power consumption to implement thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown due to a low temperature.

The touch sensor 180K is also referred to as a "touch panel". The touch sensor 180K may be disposed on the display 194, and the touch sensor 180K and the display 194 constitute a touchscreen. The touch sensor 180K is configured to detect a touch operation performed on or near the touch sensor 180K. The touch sensor may transfer the detected touch operation to the application processor, to determine a type of a touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal part. The bone conduction sensor 180M may also be in contact with a human pulse, to receive a blood pressure beating signal. In some embodiments, the bone conduction sensor 180M may alternatively be disposed in the headset, to obtain a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type or of different types. The SIM card interface 195 may also be compatible with different types of SIM cards. The SIM card interface 195 may also be compatible with an external storage card. The electronic device 100 interacts with a network through the SIM card, to implement functions such as calling and data communication. In some embodiments, the electronic device 100 uses an eSIM, namely, an embedded SIM card. The eSIM card may be embedded into the electronic device 100, and cannot be separated from the electronic device 100.

The electronic device 100 may further include one or more flashes 196. A type of flashes 196 of the electronic device 100 is not specifically limited in embodiments of this application. The type of flashes 196 of the electronic device 100 may include an LED light, a xenon light, or the like. Types of different flashes 196 of the electronic device 100 may be different. One LED-type flash 196 may include a plurality of LED lights. In some embodiments, the flash 196 may emit white light and light of another color (for example, yellow, red, green, or blue). For example, a flash includes a white light LED light, a yellow light LED light, a red light LED light, and a green light LED light. The electronic device 100 may control, by adjusting brightness of each LED in the flash, the flash to emit light of different colors.

In some embodiments, the flash 196 may be disposed on the rear side of the electronic device 100 (namely, a side without the display 194), and the flash disposed on the rear side of the electronic device 100 may be configured to supplement light when the rear-facing camera 193A collects image data, to improve ambient light luminance for rear photographing. In some embodiments, the flash may alternatively be disposed on a front side of the electronic device 100 (namely, a side including the display 194). The flash disposed on the front side of the electronic device 100 may be configured to supplement light when the front-facing camera 193B collects image data, to improve ambient light luminance for front-facing photographing.

In some embodiments, a plurality of flashes may be disposed on the rear side (or the front side) of the electronic device 100, and soft light may be created by using multi-angle light of the plurality of flashes. It may be understood that direct light of a single flash is hard, which may cause a reflective spot and an undesirable shadow to be formed on a photographed object or a photographing background, and a photographing effect is poor. The soft light created by the plurality of flashes can alleviate the problem.

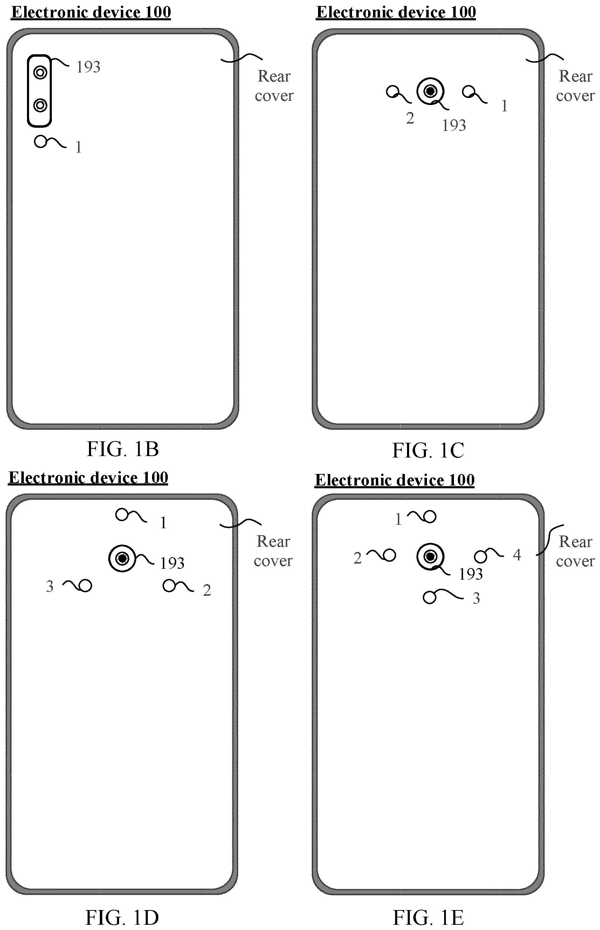

For example, FIG. 1B to FIG. 1E show several layout manners of a flash 193 on the back side of the electronic device 100 according to this application. For example, as shown in FIG. 1B, the rear side of the electronic device 100 includes a rear-facing camera 193A and a flash 1. For example, as shown in FIG. 1C, the rear side of the electronic device 100 includes a rear-facing camera 193A, a flash 1, and a flash 2. For example, as shown in FIG. 1D, the rear side of the electronic device 100 includes a rear-facing camera 193A, a flash 1, a flash 2, and a flash 3. For example, as shown in FIG. 1E, the rear side of the electronic device 100 includes a rear-facing camera 193A, a flash 1, a flash 2, a flash 3, and a flash 4.

It should be noted that distribution of the camera and the flash on the electronic device shown in FIG. 1B to FIG. 1E is merely an example for description, and does not constitute a specific limitation on the electronic device 100. For example, distribution of a same quantity of flashes on the electronic device 100 may be different from that in FIG. 1B to FIG. 1E.

A framing range of the camera 193 is determined based on a focal length. A smaller focal length indicates a larger angle of view of the camera and a larger framing range. On the contrary, a larger focal length indicates a smaller angle of view of the camera and a smaller framing range. In some embodiments, when a light range of the flash 196 includes the framing range of the camera 193, a better light compensation effect can be achieved. In some embodiments, a plurality of flashes 196 are disposed on the rear side (or the front side) of the electronic device 100, so that light ranges of the plurality of flashes 196 may include a framing range with a preset focal length. For example, the preset focal length is 50 mm, a photographing angle of view corresponding to the preset focal length is 46 degrees, light angles of the plurality of flashes 196 are greater than or equal to 46 degrees, and the light ranges of the plurality of flashes 196 may include a framing range with the preset focal length.

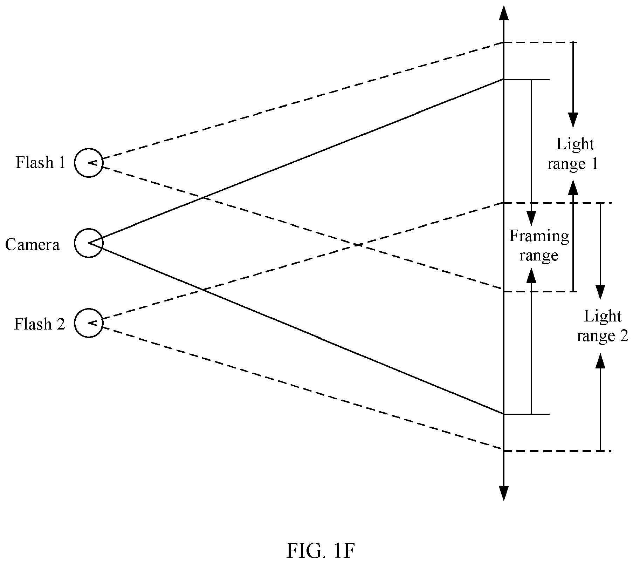

For example, FIG. 1F is a schematic diagram of light ranges provided based on distribution of the flashes shown in FIG. 1C according to an embodiment of this application.

The light compensation method for photographing in this embodiment of this application may be used to adjust a light compensation effect of a rear-facing flash when the electronic device 100 performs rear photographing. A photographing direction of a rear-facing camera and an illumination direction of a rear-facing flash are on different sides of the electronic device from a display direction of the display 194. The light compensation method for photographing in this embodiment of this application may also be applied to adjust a light compensation effect of a front-facing flash during front-facing photographing of the electronic device 100. A photographing direction of a front-facing camera and an illumination direction of the front-facing flash are on a same side of the electronic device as a display direction of the display 194. Currently, a flash of a smartphone usually has only two adjustment states: on and off, and cannot meet users' diversified photographing requirements, resulting in poor photographing experience. In this embodiment of this application, a light compensation effect of a flash may be adjusted based on users' actual requirements. The proposed solution can improve a light condition of a photographing environment, meet users' diversified photographing requirements, and effectively improve users' photographing experience.

An example graphical user interface (user interface, UI) provided in embodiments of this application is first described. The user interface is a medium interface for interaction and information exchange between an application or an operating system and a user, and implements conversion between an internal form of information and a form acceptable to the user. A user interface of the application is source code written in a specific computer language such as java or an extensible markup language (extensible markup language, XML). The source code of the interface is parsed and rendered on a terminal device, and finally is presented as user-recognizable content, for example, a control such as a picture, a text, or a button. An attribute and content of the control in the interface are defined by using a tag or a node. For example, the control included in the interface is defined in the XML by using a node such as <Textview>, <ImgView>, or <VideoView>. One node corresponds to one control or attribute in the interface. After being parsed and rendered, the node is presented as user-visible content.

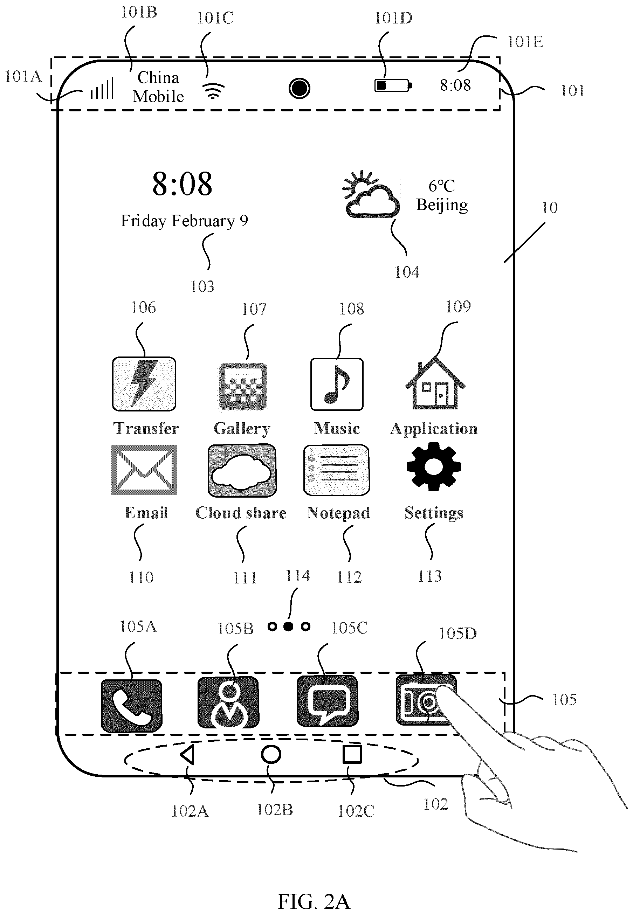

FIG. 2A shows an example of a user interface 10 that is on the electronic device 100 and that is for displaying an application installed on the electronic device 100.

The user interface 10 may include a status bar 101, a navigation bar 102, a calendar indicator 103, a weather indicator 104, a tray 105 with icons of frequently used applications, and application icons.

The status bar 101 may include one or more signal strength indicators 101A of a mobile communication signal (also referred to as a cellular signal), an operator name (for example, "China Mobile") 101B, one or more signal strength indicators 101C of a wireless fidelity (wireless fidelity, Wi-Fi) signal, a battery status indicator 101D, and a time indicator 101E.

The navigation bar 102 may include system navigation buttons such as a back button 102A, a home screen button 102B, and a multitask button 102C. When detecting that the user taps the back button 102A, the electronic device 100 may display a previous page of a current page. When detecting that the user taps the home screen button 102B, the electronic device 100 may display a home screen. When detecting that the user taps the multitask button 102C, the electronic device 100 may display a task recently started by the user. Names of the navigation buttons may alternatively be other names. This is not limited in this application. In addition to a virtual button, each navigation button in the navigation bar 102 may be further implemented as a physical button.

The calendar indicator 103 may be used to indicate current time, for example, a date, a day of a week, and hour-minute information.

The weather indicator 104 may be used to indicate a weather type, for example, cloudy to sunny or light rain, and may be further used to indicate information such as a temperature.

The tray 105 with the icons of frequently used applications may display a Phone icon 105A, a Contacts icon 105B, a Messages icon 105C, and a Camera icon 105D.

The other application icons may be, for example, an EasyShare icon 106, a Gallery icon 107, a Music icon 108, an Application icon 109, an Email icon 110, a Cloud share icon 111, a Notepad icon 112, and a Settings icon 113. The user interface 10 may further include a page indicator 114. The other application icons may be distributed on a plurality of pages, and the page indicator 106 may be used to indicate a specific page on which an application is currently viewed by the user. The user may slide leftward or rightward in a region including the other application icons, to view an application icon on another page.

In some embodiments, for example, the user interface 10 shown in FIG. 2A may be a home screen (Home screen).

In some other embodiments, the electronic device 100 may further include a front-facing camera. The front-facing camera may also be referred to as a secondary camera, and is mainly located above a screen of the electronic device 100. The front-facing camera may be configured to take a selfie, make a video call, or the like.

It may be understood that FIG. 2A merely shows the example of the user interface on the electronic device 100, and should not constitute a limitation on this embodiment of this application.

Currently, to meet users' front-facing photographing requirement in a dark or weak light scenario, most manufacturers perform post-processing on captured photos, to achieve better image quality by using an image processing algorithm. However, an effect of such post-processing is not satisfactory, and users' front-facing photographing experience is poor.

An embodiment of this application provides a light compensation method. In the provided method, when the electronic device 100 displays a photographing interface, the electronic device may adjust display brightness of a light compensation region on the photographing interface by controlling a light compensation parameter of the light compensation region, to supplement light in a framing range of a front-facing camera of the electronic device 100. By viewing a preview image obtained by performing light compensation in a preview region displayed on the photographing interface, users can observe a light compensation effect in real time. This effectively improves users' photographing experience. With reference to the accompanying drawings, the following describes a light compensation method for photographing provided in embodiments of this application.

In some embodiments, an electronic device receives a first user operation, enables a photographing function in response to the first user operation, and displays a photographing interface corresponding to the photographing function.

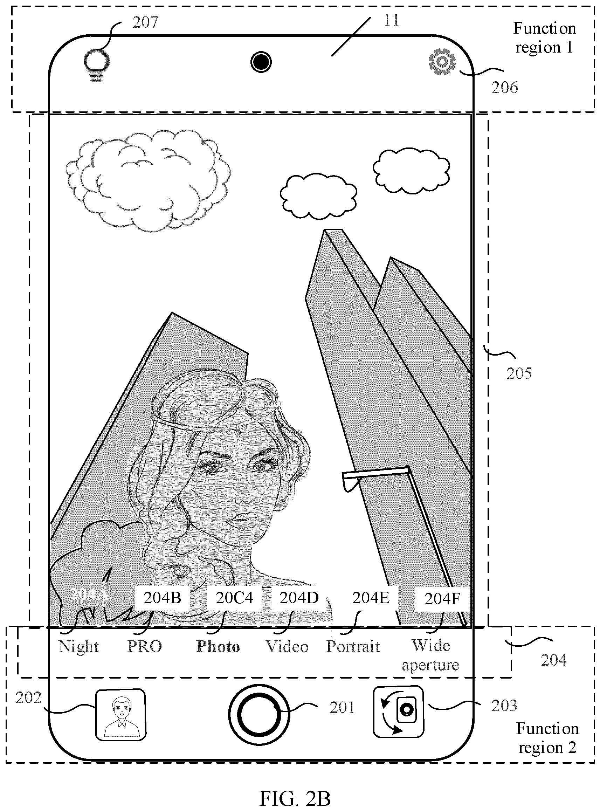

For example, as shown in FIG. 2A and FIG. 2B, the first user operation may be that a user may tap the Camera icon 105D on the user interface 10. The electronic device 100 detects the user operation. In response to the user operation, the electronic device 100 enables a photographing function to display a photographing interface 11 of the camera.

The photographing interface 11 may include at least a photographing control 201, an album control 202, a camera switching control 203, a photographing mode 204, a display region 205, and a Settings icon 206.

The photographing control 201 may receive a user operation (for example, a touch operation). The electronic device 100 may collect, in response to the detected user operation, image data by using a camera, and display an image.

The album control 202 may receive a user operation (for example, a touch operation). The electronic device 100 may display a latest photo stored in an album in response to the detected user operation. A representation form of the album control 202 may be a reduced image of the latest photo.

The camera switching control 203 is configured to switch between cameras. The electronic device 100 may detect a touch operation performed on the camera switching control 203 (for example, a tap operation on the camera switching control 203), and the electronic device 100 may switchbetween cameras in response to the operation. For example, a camera used by the electronic device 100 for photographing is switched from a front-facing camera to a rear-facing camera, or the camera used by the electronic device 100 for photographing is switched from a rear-facing camera to a front-facing camera.

The photographing mode 204 may include a night mode 204A, a professional mode 204B, a photo mode 204C, a video mode 204D, a portrait mode 204E, and the like. The night mode 204A, the professional mode 204B, and the portrait mode 204E are all photographing modes optimized for a specific scenario. A user operation (for example, a touch operation) may be received in any photographing mode of the photographing modes 205. The electronic device 100 may display a photographing interface in the photographing mode in response to the detected user operation.

It may be understood that, if the current photographing mode is the photo mode, the photographing control 201 may be configured to take a photo; or if the current photographing mode is the video mode, the photographing control 201 may be configured to enable or disable video recording.

The display region 205 may be used for displaying image data collected by a front-facing camera or a rear-facing camera (namely, a camera currently used for photographing) of the electronic device 100, namely, a preview image.

It may be understood that, if the camera currently used by the electronic device 100 for photographing is the front-facing camera, the display region 205 is for displaying the image data collected by the front-facing camera of the electronic device 100; or if the camera currently used by the electronic device 100 for photographing is the rear-facing camera, the display region 205 is for displaying the image data collected by the rear-facing camera of the electronic device 100.

The Settings icon 206 may receive a user operation (for example, a touch operation). The electronic device 100 may display a setting interface of the camera in response to the detected user operation.

As shown in FIG. 2B, the camera currently used by the electronic device 100 for photographing is the front-facing camera. When the display region 205 is for displaying an image captured by the front-facing camera of the electronic device 100, the photographing interface 11 further includes a light compensation icon 207. The light compensation icon 207 may receive a user operation (for example, a touch operation). The electronic device 100 may display one or more light compensation controls in response to the detected user operation.

As shown in FIG. 2B, the display region 205 occupies a part of a region on the photographing interface 11, and regions that are on the photographing interface 11 and that are outside the display region 205 include a function region 1 and a function region 2. The function region 1 includes the Settings icon 206 and the light compensation icon 207. The function region 2 includes the photographing control 201, the album control 202, the camera switching control 203, and the photographing mode 204. Background colors of the function region 1 and the function region 2 may be white, black, or another color.

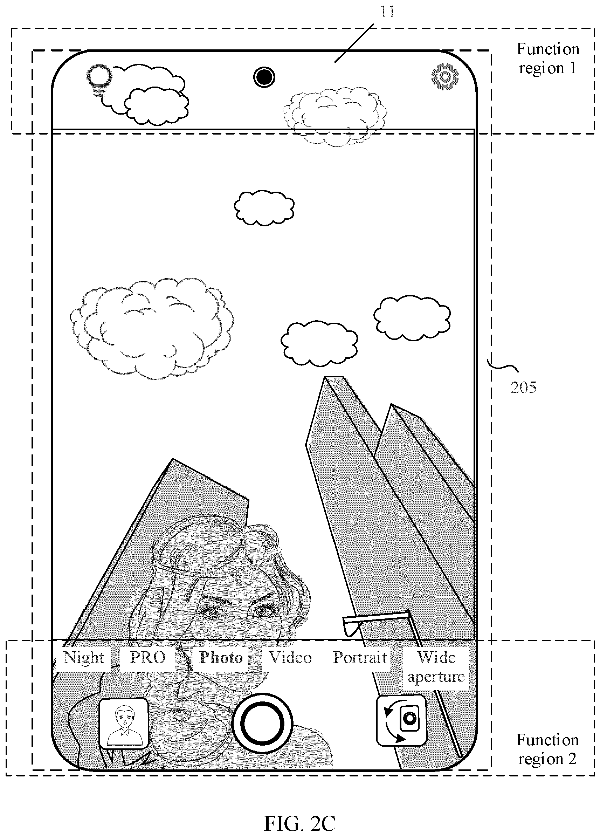

In some embodiments, the electronic device 100 may further display, in full screen, the image data collected by the camera, that is, the display region 205 occupies the entire region of the photographing interface 11. For example, as shown in FIG. 2C, the electronic device 100 displays the photographing interface 11 in response to a user operation on the camera icon 105D on the user interface 10. In the display region 205 of the photographing interface 11, the electronic device 100 displays, in full screen, the image data collected by the camera, and controls in the function region 1 and the function region 2 are displayed on the display region 205 in a floating manner.

It should be noted that, in embodiments of this application, the photographing interface 11 may also be referred to as a first interface. In addition to tapping the camera icon 105D shown in FIG. 2A to enable the photographing function, in embodiments of this application, the photographing function may be enabled in another manner. This is not specifically limited herein. For example, a user may enable a photographing function by tapping a photographing control in a third-party application (instant messaging software, payment software, shopping software, or the like).

It should be noted that the solution provided in embodiments of this application is applicable to front-facing photographing in any photographing mode in the photographing mode 204. The following uses the photo mode shown in FIG. 2B as an example for description. FIG. 2B is merely an example for describing this embodiment of this application, and shall not constitute any limitation on this application.

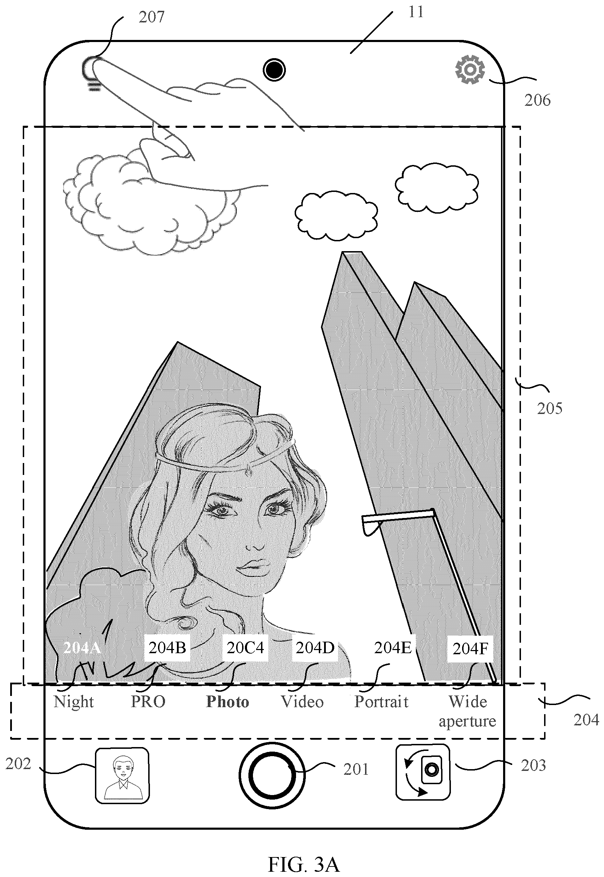

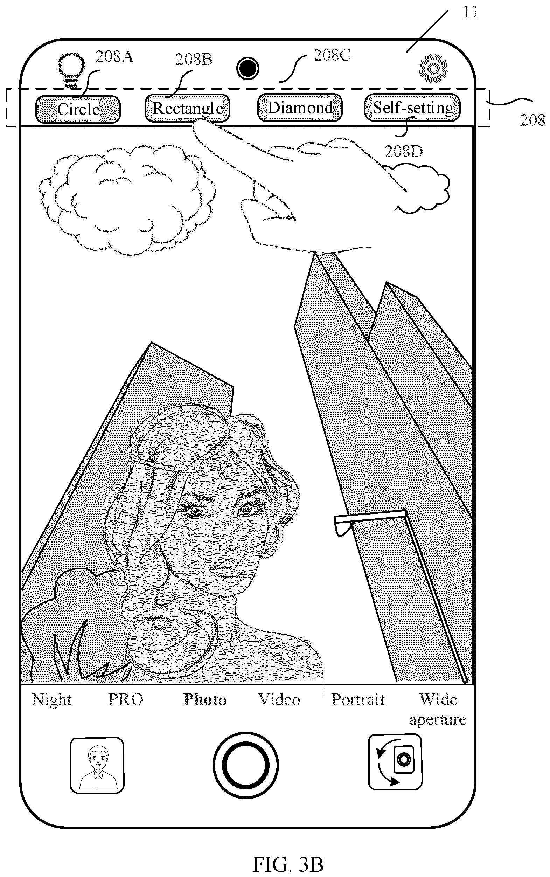

In some embodiments, the electronic device 100 displays the light compensation icon 207 on the photographing interface 11. The light compensation icon 207 is for determining a shape of a non-light compensation region 210, and the non-light compensation region 210 has at least two shapes. The electronic device 100 may receive a sixth user operation performed on the light compensation icon 207. The electronic device displays an icon of the shape of the non-light compensation region 210 in response to the sixth user operation. In embodiments of this application, a first control may be the light compensation icon 207. For example, as shown in FIG. 3A and FIG. 3B, the electronic device 100 may receive an input operation (for example, a touch operation) performed on the light compensation icon 207. The electronic device 100 may display a shape bar 208 in response to the input operation. The shape bar 208 may include one or more shape controls and a self-setting control 208D. The one or more shape controls may include a circular control 208A, a rectangular control 208B, and a diamond control 208C. The icon of the shape of the non-light compensation region 210 may include the one or more shape controls. The shape bar 208 is not limited to the circular control 208A, the rectangular control 208B, and the diamond control 208C. The shape bar 208 may also include a control of another preset shape.

Any shape control may receive a user operation (for example, a touch operation). The electronic device 100 may display a non-light compensation region with a corresponding shape on the display in response to the detected user operation.

In some embodiments, the electronic device 100 may receive a second user operation. The electronic device determines a shape of a non-light compensation region or a light compensation region on the photographing interface in response to the second user operation.

In some embodiments, the second user operation may be that the user taps the circular control 208A, the rectangular control 208B, or the diamond control 208C.

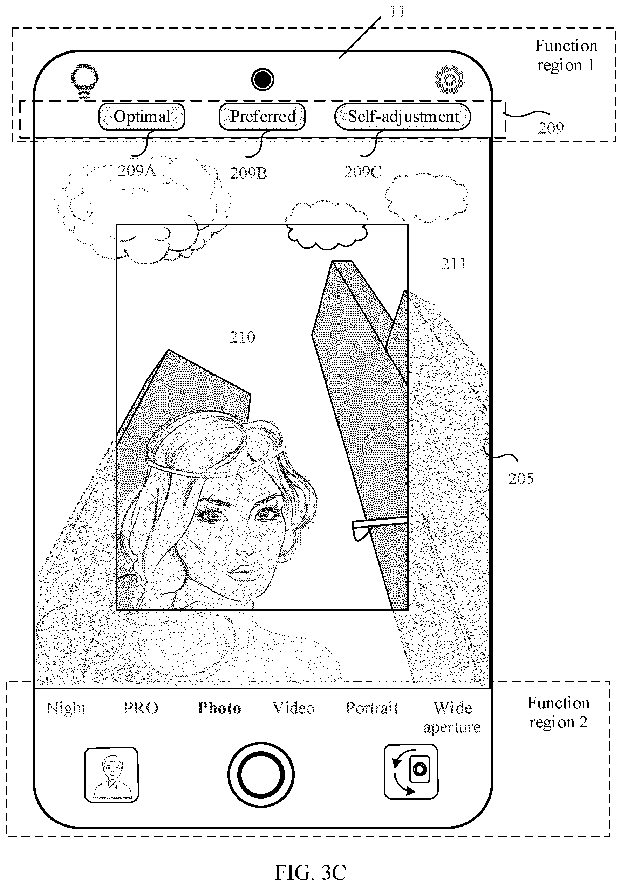

For example, as shown in FIG. 3B and FIG. 3C, the electronic device 100 receives a user operation performed on the rectangular control 208B. In response to the detected user operation, the electronic device 100 may display a light compensation effect bar 209 and the rectangular non-light compensation region 210 on the photographing interface 11, and determine a light compensation region 211 based on the non-light compensation region 210. The light compensation effect bar 209 is for adjusting a light compensation effect of the light compensation region. An initial location and a size of a non-light compensation region 210 corresponding to the circular control 208A, the rectangular control 208B, or the diamond control 208C on the display may be set by default before delivery of the electronic device 100, or may be set by the user. In addition, a light compensation intensity of a light compensation region is controlled by the electronic device 100 by adjusting a light compensation parameter of the light compensation region.

In some embodiments, the non-light compensation region 210 corresponding to the circular control 208A, the rectangular control 208B, or the diamond control 208C is in the display region 205, and the electronic device 100 determines a region that is in the display region 205 and that is outside the non-light compensation region 210 as the light compensation region 211 on the display. Alternatively, the electronic device 100 determines a region that is on the photographing interface 11 and that is outside the non-light compensation region 210 as the light compensation region 211 on the display. In some embodiments, the non-light compensation region 210 corresponding to the circular control 208A, the rectangular control 208B, or the diamond control 208C may include some or all of function regions (including the function region 1 and the function region 2 shown in FIG. 3C) outside the display region 205. The electronic device 100 determines a region that is on the photographing interface 11 and that is outside the non-light compensation region 210 as the light compensation region 211 on the display.

It should be noted that the photographing interface 11 includes a plurality of layers, and before displaying the photographing interface 11, the electronic device 100 disposes, draws, and renders the photographing interface 11 that includes the plurality of layers.

In some embodiments of this application, refer to FIG. 3C. The electronic device 100 determines a light compensation region in response to a received user operation, and displays a light compensation layer in the light compensation region. Transparency of the light compensation layer is initial transparency, and the initial transparency may be set by the electronic device by default, or may be preset by the user. In some embodiments, the light compensation region is inside the display region 205. In a process of disposing, drawing, and rendering the photographing interface 11, the electronic device superimposes a layer at which the light compensation layer is located on a layer at which a preview image is located. In some embodiments, the light compensation region includes some or all of the function regions of the photographing interface 11. In a process of disposing, drawing, and rendering the photographing interface 11, the electronic device may superimpose the light compensation layer on the layer at which the preview image is located and a layer at which a background of the function regions is located, and superimpose a layer at which controls in the function regions are located on the light compensation layer to avoid affecting use of the controls in the function regions.

In some embodiments, the light compensation intensity of the light compensation region is controlled by the electronic device by adjusting the light compensation parameter of the light compensation region. The light compensation parameter of the light compensation region includes at least one of transparency of the light compensation region, pixel luminance of the light compensation region of the display, and luminance of a backlight source of the display. The transparency of the light compensation region may include transparency of the light compensation layer.

In some embodiments, the electronic device enables a photographing function in response to a first user operation, and displays a photographing interface corresponding to the photographing function. A light compensation parameter of a light compensation region on the photographing interface is a preset light compensation parameter.

In embodiments of this application, the non-light compensation region 210 may include a part or all of the display region. In some embodiments, refer to FIG. 3C. The non-light compensation region 210 may include a part of the display region. The non-light compensation region 210 may be referred to as a preview region, and the preview region displays a preview image obtained by performing light compensation on the light compensation region. The user may view, by using the non-light compensation region 210, the preview image obtained by performing light compensation, and observe a light compensation effect of the preview image in real time.

It should be noted that, in embodiments of this application, the light compensation layer may be displayed on the light compensation region, or the light compensation layer may not be displayed. In the following accompanying drawings, a case in which the light compensation layer is displayed is used as an example to further describe the solution provided in embodiments of this application.

In some embodiments, the electronic device receives a fifth user operation. The electronic device determines the light compensation parameter of the light compensation region in response to the fifth user operation. The electronic device controls the light compensation intensity of the light compensation region based on the light compensation parameter of the light compensation region.

In some embodiments, the photographing interface 11 displays a first selection control and a second selection control. In an implementation, the first selection control corresponds to a first light compensation parameter, and the second selection control corresponds to a second light compensation parameter. The first selection control may receive a fifth user operation, and determine the light compensation parameter corresponding to the light compensation intensity corresponding to the light compensation region as the first light compensation parameter in response to the detected fifth user operation. In another implementation, the first selection control corresponds to the first light compensation parameter and a first image processing algorithm, and the second selection control corresponds to the second light compensation parameter and a second image processing algorithm. The first selection control may receive a fifth user operation, determine the light compensation parameter corresponding to the light compensation intensity corresponding to the light compensation region as the first light compensation parameter in response to the detected fifth user operation, and perform, by using the first image processing algorithm, image processing on the preview image captured by the front-facing camera.

For example, as shown in FIG. 3C, the light compensation effect bar 209 may include a maximum control 209A, a beautification control 209B, and a self-adjustment control 209C.

In some embodiments, the maximum control 209A may be a first selection control or a second selection control. The first selection control may be the maximum control 209A, and the fifth user operation may be that a user taps the maximum control 209A. The electronic device determines a light compensation parameter corresponding to the maximum control 209A. The electronic device controls the light compensation intensity of the light compensation region based on the light compensation parameter corresponding to the maximum control 209A, and may perform image processing on the preview image by using an image processing algorithm corresponding to the maximum control 209A.

In some embodiments, the light compensation effect of the preview image on the display is adjusted to a maximum light compensation effect, that is, the light compensation intensity of the light compensation region is adjusted to a maximum light compensation intensity. In some other embodiments, the light compensation effect of the preview image on the display is adjusted to the maximum light compensation effect, that is, the light compensation intensity of the light compensation region is adjusted to the maximum light compensation intensity, and the preview image displayed on the display region 205 is optimized by using an image processing algorithm 1. The image processing algorithm 1 may include processing such as enhancement, filtering, and color optimization of an image. The image processing algorithm 1 is not limited to an image processing algorithm such as enhancement, filtering, color optimization, and sharpening. The image processing algorithm 1 may further include another image processing. This is not specifically limited herein.

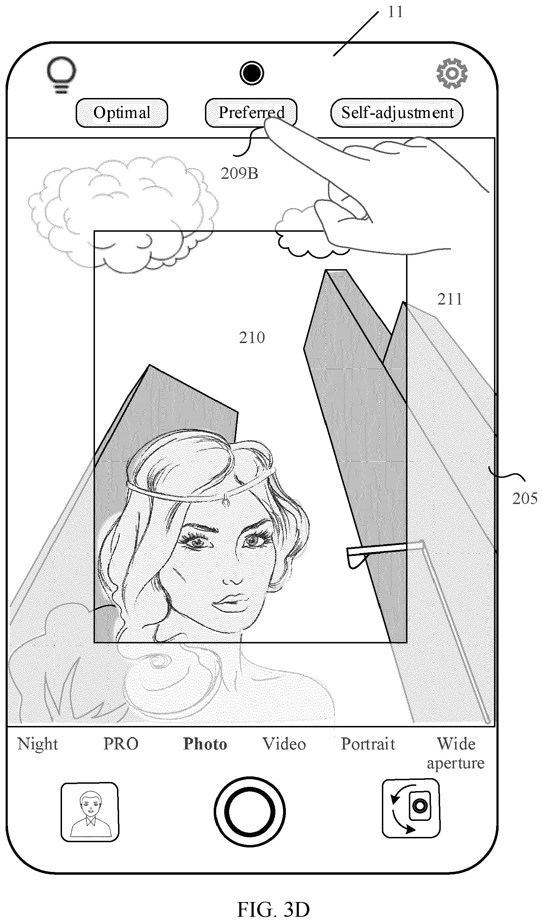

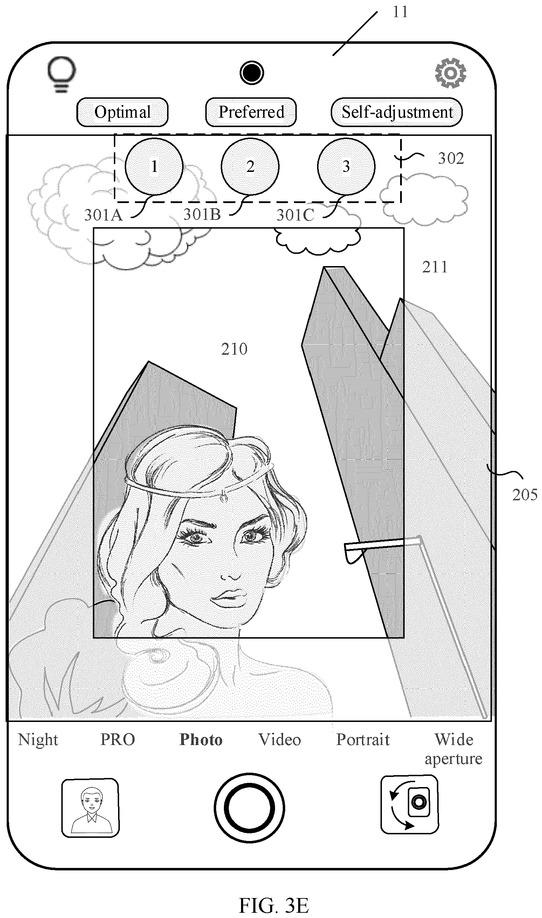

Refer to FIG. 3D and FIG. 3E. The beautification control 209B may receive a user operation (for example, a touch operation). The electronic device 100 displays a beautification control bar 301 in response to the detected user operation. The beautification control bar 301 may include a beautification control 301A, a beautification control 301B, and a beautification control 301C.

In some embodiments, the beautification control 301A, the beautification control 301B, or the beautification control 301C may include a first selection control and/or a second selection control. For example, the first selection control may be the beautification control 301A, and the fifth user operation may be a user operation performed on the beautification control 301A. For example, a user taps the beautification control 301A. The electronic device determines a light compensation parameter corresponding to the beautification control 301A. The electronic device controls the light compensation intensity of the light compensation region based on the light compensation parameter corresponding to the beautification control 301A, and may perform image processing on the preview image by using an image processing algorithm corresponding to the beautification control 301A.

Specifically, the beautification control 301A may receive a user operation (for example, a touch operation). The electronic device 100 adjusts the light compensation effect of the preview image to a light compensation effect 1 in response to the detected user operation. In some embodiments, the adjusting the light compensation effect of the preview image to a light compensation effect 1 includes adjusting the light compensation intensity of the light compensation region to a light compensation intensity 1. In some other embodiments, the light compensation effect of the preview image is adjusted to a light compensation effect 1, that is, the light compensation intensity of the light compensation region is adjusted to the light compensation intensity 1, and image processing is performed on the preview image displayed on the display region 205 by using an image processing algorithm 2. The image processing algorithm 2 includes one of image processing algorithms such as an enhancement algorithm, a filtering algorithm, a color optimization algorithm, or a sharpening algorithm, for example, an enhancement algorithm of the image.

The beautification control 301B may receive a user operation (for example, a touch operation). The electronic device 100 adjusts the light compensation effect of the preview image to a light compensation effect 2 in response to the detected user operation. In some embodiments, the light compensation effect of the preview image is adjusted to a light compensation effect 2, that is, the light compensation intensity of the light compensation region is adjusted to a light compensation intensity 2. In some other embodiments, the light compensation effect of the preview image is adjusted to the light compensation effect 2, that is, the light compensation intensity of the light compensation region is adjusted to the light compensation intensity 2, and image processing is performed on the preview image displayed on the display region 205 by using an image processing algorithm 2. The image processing algorithm 3 includes one of image processing algorithms such as an enhancement algorithm, a filtering algorithm, a color optimization algorithm, or a sharpening algorithm, for example, a filtering algorithm of the image.

The beautification control 301C may receive a user operation (for example, a touch operation). The electronic device 100 adjusts the light compensation effect of the preview image to a light compensation effect 3 in response to the detected user operation. In some embodiments, the light compensation effect of the preview image is adjusted to a light compensation effect 3, that is, the light compensation intensity of the light compensation region is adjusted to a light compensation intensity 1. In some other embodiments, the light compensation effect of the preview image is adjusted to a light compensation effect 3, that is, the light compensation intensity of the light compensation region is adjusted to the light compensation intensity 3, and image processing is performed on the preview image displayed on the display region 205 by using an image processing algorithm 2. The image processing algorithm 4 includes one of image processing algorithms such as an enhancement algorithm, a filtering algorithm, a color optimization algorithm, or a sharpening algorithm, for example, a color optimization algorithm of the image.

It should be noted that different beautification controls may perform optimization processing with different focuses on the preview image. The beautification controls are not limited to the beautification control 301A, the beautification control 301B, and the beautification control 301C. The beautification control bar 301 may further include another beautification control, which brings a light compensation effect of different focuses. In some embodiments, the image processing algorithm 2, the image processing algorithm 3, and the image processing algorithm 4 are different, and the light compensation intensity 1, the light compensation intensity 2, and the light compensation intensity 3 may be the same or different.

In some embodiments, the electronic device 100 may control the light compensation intensity of the light compensation region based on a light compensation parameter of at least one of a first light compensation subregion and a second light compensation subregion.

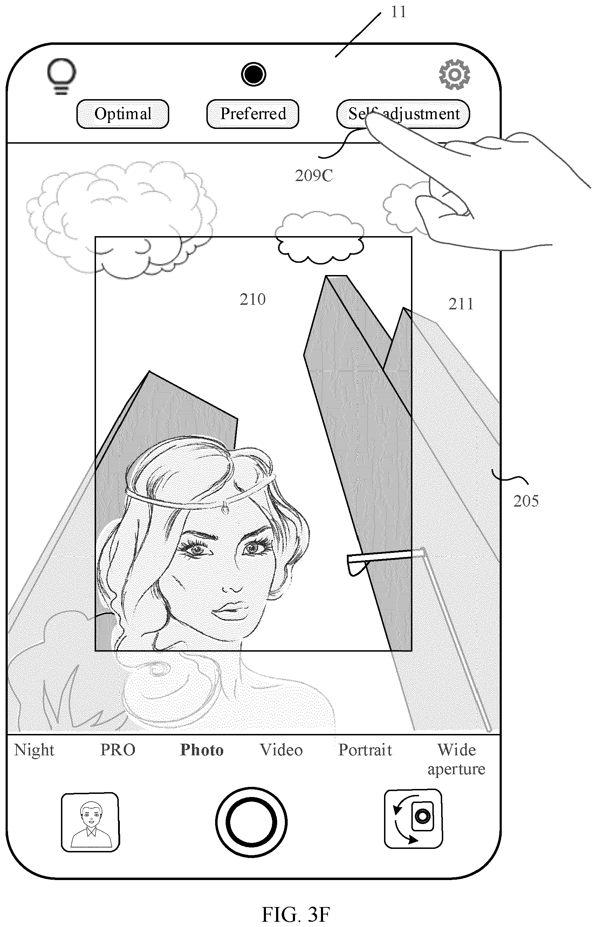

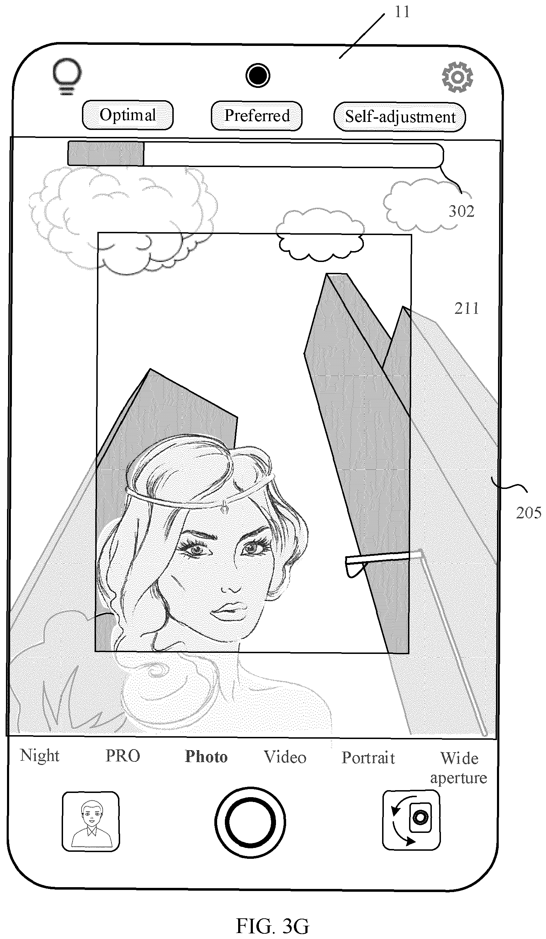

Refer to FIG. 3F and FIG. 3G. The self-adjustment control 209C may receive a user operation (for example, a touch operation). The electronic device 100 displays a luminance adjustment bar 302 in response to the detected user operation. A total length from the first end of the luminance adjustment bar 302 to a second end of the luminance adjustment bar 302 is for indicating a maximum light compensation intensity of the electronic device 100. A length from a first end of a shadow part of the luminance adjustment bar 302 to a second end of the shadow part is for indicating a light compensation intensity of a current light compensation region. The first end of the luminance adjustment bar 302 coincides with the first end of the shadow part. An initial length of the shadow part of the luminance adjustment bar 302 may be an optimal light compensation intensity, or may be another default initial value, which is not specifically limited herein.

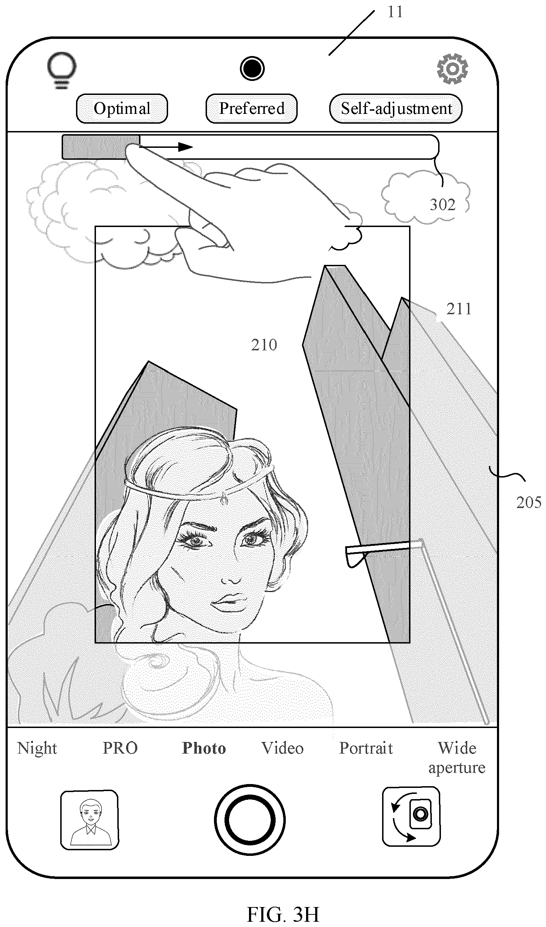

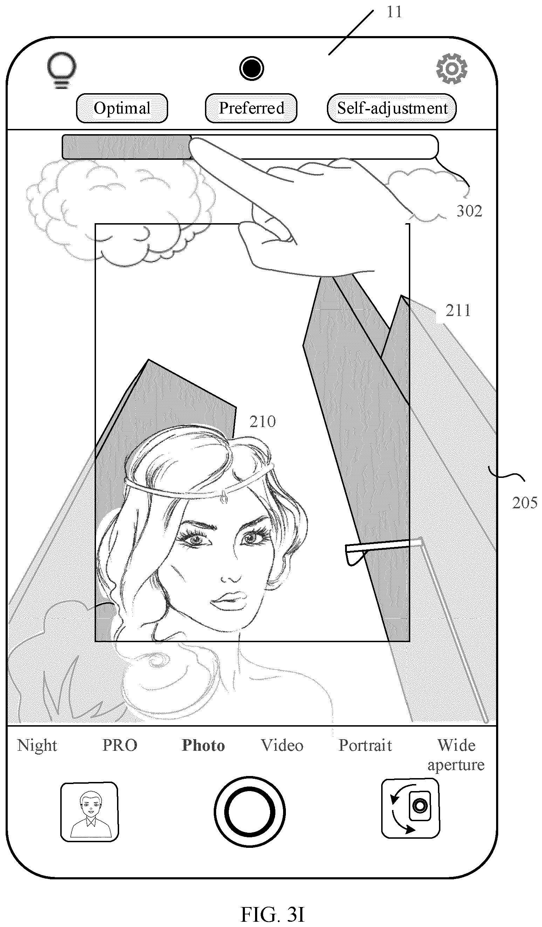

In some embodiments, the luminance adjustment bar 302 includes a first identifier. A length from the first end of the luminance adjustment bar 302 to the first identifier is for indicating a light compensation intensity of a light compensation region. The total length from the first end of the luminance adjustment bar 302 to the second end of the luminance adjustment bar is for indicating the maximum light compensation intensity. A fifth user operation may be that a finger of a user slides on the luminance adjustment bar by using the first identifier as a start point. The electronic device determines, based on the light compensation intensity indicated by the length from the first end to the first identifier, a light compensation parameter of the light compensation region in response to the fifth user operation. For example, as shown in FIG. 3H and FIG. 3I, the first identifier may be the second end of the shadow part. The luminance adjustment bar 302 may receive a user operation. The electronic device 100 may adjust a length of the shadow part of the luminance adjustment bar 302 in response to the detected user operation, and adjust display luminance of the light compensation region based on the light compensation intensity indicated by the shadow part. As shown in FIG. 3H, the user operation may be that the finger of the user slides on the luminance adjustment bar 302 by using the shadow part of the luminance adjustment bar 302 as a start point. In some embodiments, a minimum amplitude of a light compensation intensity that can be adjusted by the electronic device 100 by adjusting the luminance adjustment bar 302 in response to the user operation may be set by the electronic device 100 by default, or may be set by the user. For example, a light compensation intensity of the electronic device 100 ranges from 0 to 10, and the minimum amplitude is 1.

In some embodiments, a shape, a location, and/or a size of the light compensation region may be set by the electronic device 100 by default, or may be preset by the user. As shown in FIG. 3A, the electronic device 100 may receive a user operation (for example, a touch operation) performed on the light compensation icon 207. As shown in FIG. 3C, in response to the user operation, the electronic device 100 may directly display the light compensation effect bar 209 on the photographing interface, and determine the light compensation region 211 and the non-light compensation region 210 on the photographing interface. In some embodiments, the electronic device 100 further displays a light compensation layer in the light compensation region 211. Transparency of the light compensation layer is initial transparency, and the initial transparency may be set by the electronic device by default, or may be preset by the user.

In addition to a manual light compensation manner of the user shown in FIG. 3A and FIG. 3B, the electronic device 100 may further perform automatic light compensation for front-facing photographing. In some embodiments, when the electronic device 100 receives a user operation of enabling a camera by the user, the electronic device 100 performs light compensation by increasing the display luminance of the light compensation region on the display. In some embodiments, when the electronic device 100 uses a front-facing camera to perform photographing, the electronic device 100 performs light compensation by increasing the display luminance of the light compensation region on the display. In some embodiments, when the electronic device 100 uses the front-facing camera to perform photographing, and ambient light luminance is less than a preset value, the electronic device 100 performs light compensation by increasing the display luminance of the light compensation region on the display.

An automatic light compensation manner may be set by the electronic device 100 by default, or may be preset by the user. The following describes, by way of an example, an implementation in which the user sets automatic light compensation.

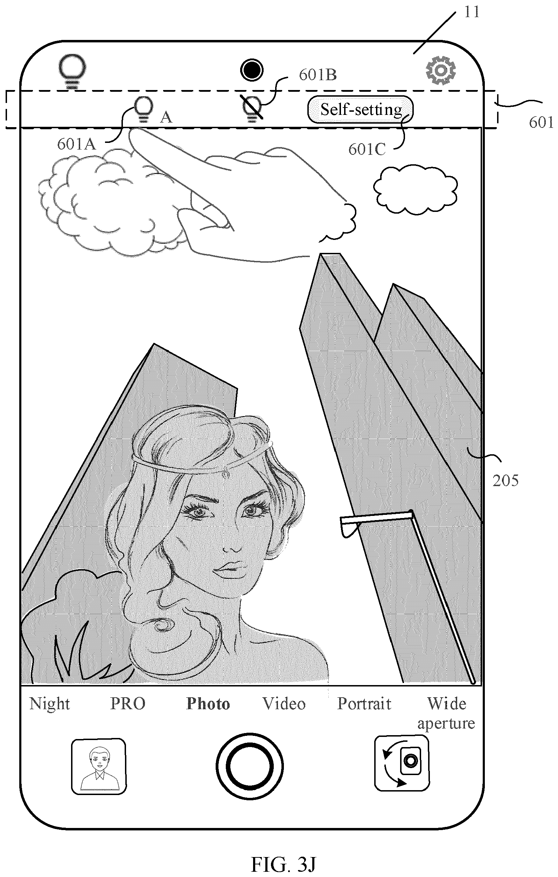

For example, as shown in FIG. 3A, the electronic device 100 detects a user operation performed on the light compensation icon 207 on the photographing interface 11. As shown in FIG. 3J, after the electronic device responds to the user operation, the electronic device 100 may display a selection bar 601 on the photographing interface. The displayed selection bar 601 may include an automatic control 601A, a close control 601B, and a self-setting control 601C.

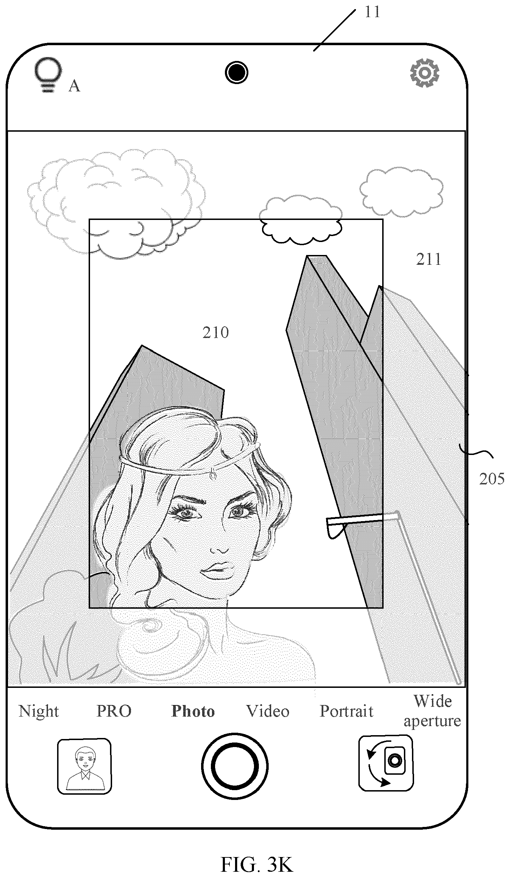

For example, as shown in FIG. 3J and FIG. 3K, in response to a user operation on the automatic control 601A, the electronic device 100 changes an icon of the light compensation icon 207 into an icon of the automatic control 601A, and may display the light compensation region 211 and the non-light compensation region 210 on the photographing interface 11, or may display the light compensation layer in the light compensation region 211. During automatic light compensation, a light compensation intensity of the light compensation region 211 may be an optimal light compensation intensity determined based on current ambient light luminance, or may be set by the electronic device by default, or may be preset by the user. In some embodiments, as shown in FIG. 3K, a light compensation layer is displayed on the light compensation region. Transparency of the light compensation layer may be set by the electronic device 100 by default, may be preset by the user, or may be determined based on the light compensation intensity of the light compensation region 211. A shape, a location, and/or a size of the light compensation region may be set by the electronic device 100 by default, or may be preset by the user. This is not specifically limited in this embodiment of this application.

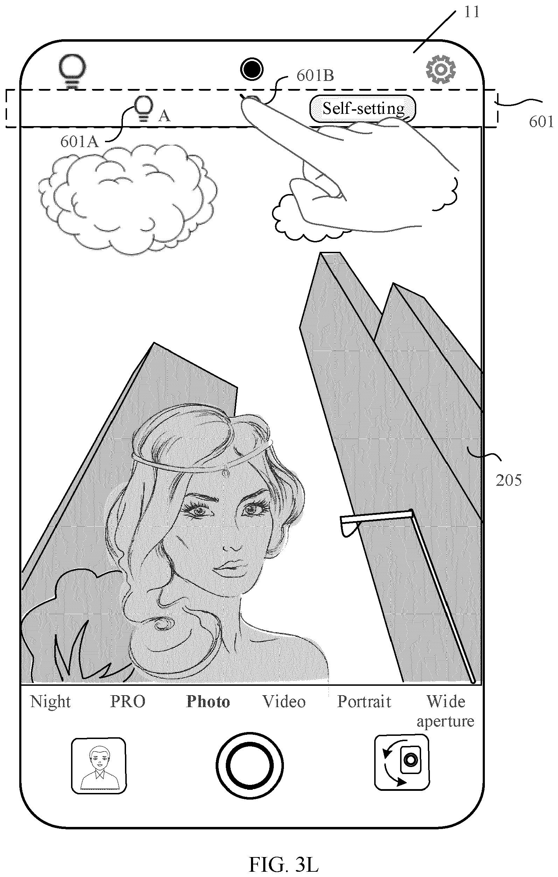

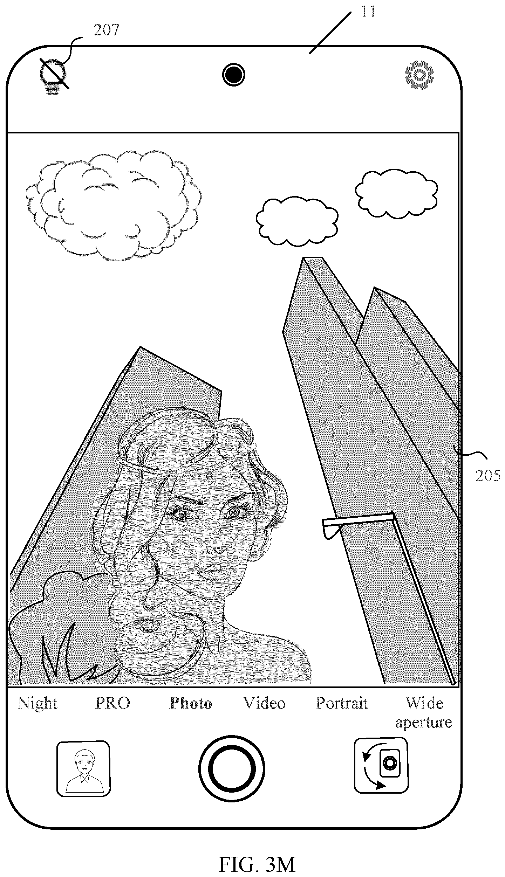

For example, as shown in FIG. 3L and FIG. 3M, in response to a user operation for the close control 601B, the electronic device 100 changes the icon of the light compensation icon 207 into an icon of the close control 601B. The electronic device 100 does not use the display to supplement light for front-facing photographing.

In addition, after automatic light compensation is enabled, the electronic device 100 may further perform automatic light compensation when the user enables the camera next time.

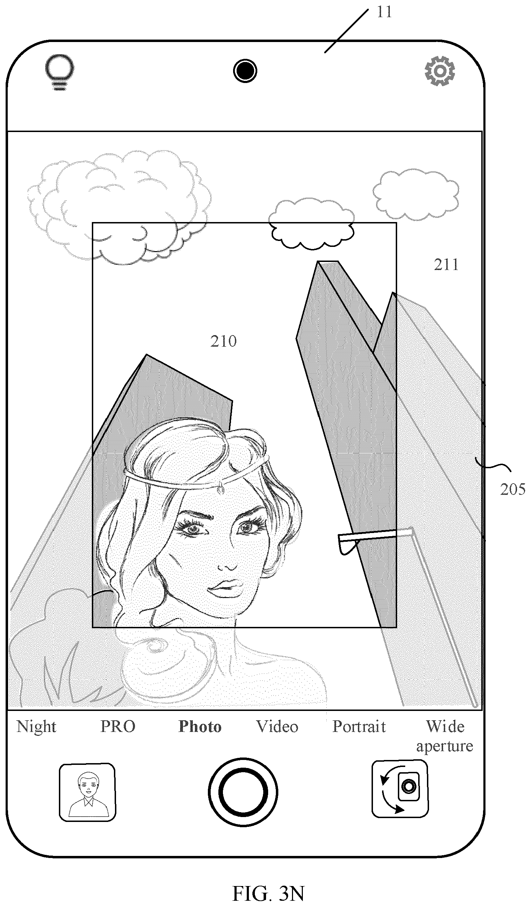

For example, as shown in FIG. 2A, the electronic device 100 detects a user operation performed on the camera icon 105D on the user interface 10. As shown in FIG. 3N, after the electronic device responding to the user operation, the electronic device 100 displays the photographing interface 11. A display region of the photographing interface 11 is for displaying image data captured by the front-facing camera. The photographing interface 11 includes the light compensation region 211 and the non-light compensation region 210. The light compensation region 211 may display a light compensation layer. The electronic device 100 supplements light in a photographing environment in which front-facing photographing is performed by using the light compensation region 211.

The user may perform manual light compensation by using the self-setting control 601C. The self-setting control 601C may receive a user operation, and in response to the detected user operation, as shown in FIG. 3B, the electronic device 100 may display the shape bar 208.

In some embodiments, in both the manual light compensation manner and the automatic light compensation manner, the electronic device 100 may perform full-screen light compensation, that is, the light compensation region 211 may include all regions of the display of the electronic device 100.

In addition to a manner of determining the light compensation region on the display in related embodiments in FIG. 3B and FIG. 3C, in this application, the light compensation region on the photographing interface 11 may be determined in another manner.

(1) In some embodiments of this application, when performing front-facing photographing through the photographing interface 11, the user may determine the light compensation region on the display by adjusting a shape, a location, and a size of the non-light compensation region on the display, to adjust a light compensation effect of the preview image.

In some embodiments, the non-light compensation region 210 is located in the display region 205 of the photographing interface 11. The electronic device 100 determines a region that is in the display region 205 and that is outside the non-light compensation region 210 as the light compensation region 211. Alternatively, the electronic device 100 determines a region that is on the photographing interface 11 and that is outside the non-light compensation region 210 as the light compensation region 211. In other words, the light compensation region includes function regions that are on the photographing interface 11 and that are outside the display region 205.

In some embodiments, the non-light compensation region may include some or all of the function regions outside the display region 205. The electronic device 100 determines the region that is on the photographing interface 11 and that is outside the non-light compensation region 210 as the light compensation region 211.

The following describes several manners of determining the shape of the non-light compensation region provided in embodiments of this application.

FIG. 3B and FIG. 3C show an example of an operation of determining the shape of the non-light compensation region.

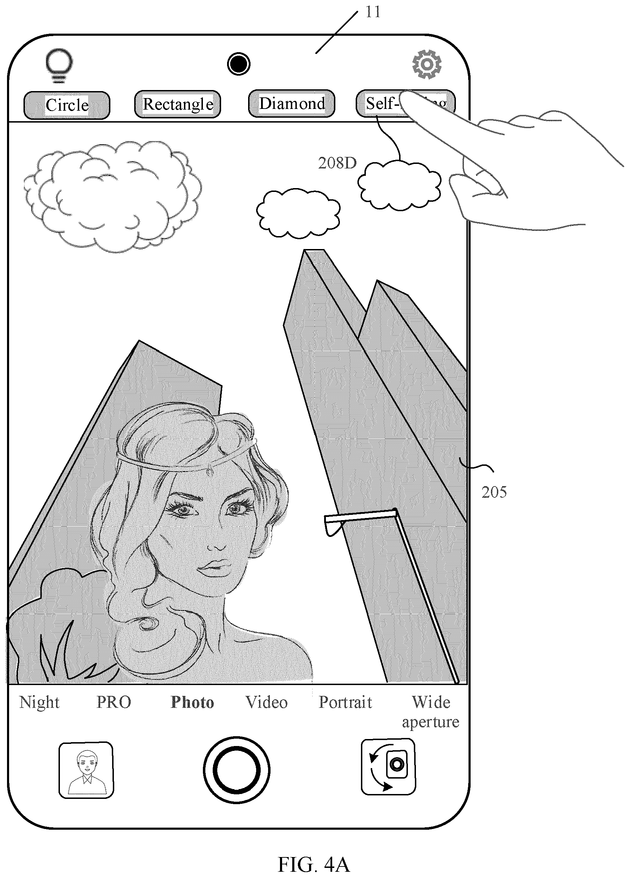

FIG. 4A to FIG. 4G show an example of another operation of determining the shape of the non-light compensation region.

The self-setting control 208D may be used for determining a user-defined shape of the non-light compensation region.

For example, as shown in FIG. 4A to FIG. 4C, the electronic device 100 may receive a user operation (for example, a touch operation) performed on the self-setting control 208D. The electronic device 100 may receive the user operation by using the display in response to the detected user operation, to draw the non-light compensation region 210.

In some embodiments, a second user operation includes a gesture of sliding the finger of the user on the display. The electronic device 100 determines the shape of the non-light compensation region or the light compensation region in the photographing interface 11 based on a sliding track of the gesture in the second user operation in response to the second user operation.

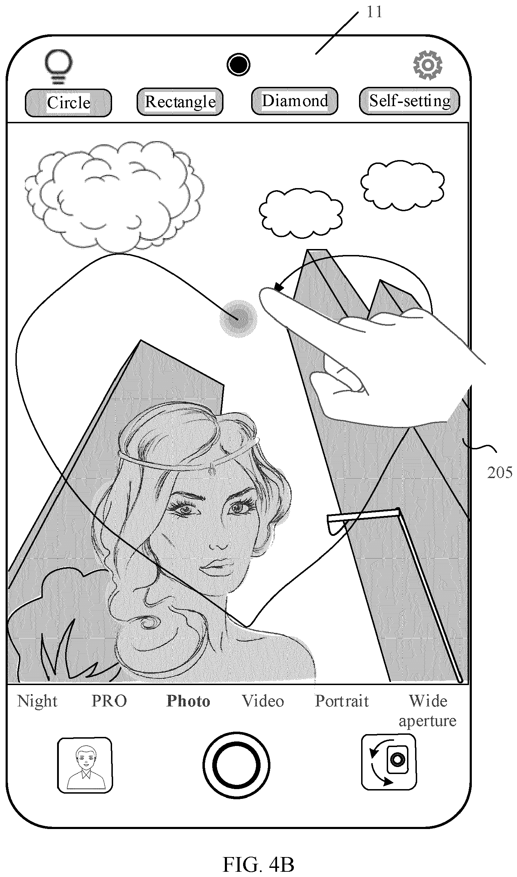

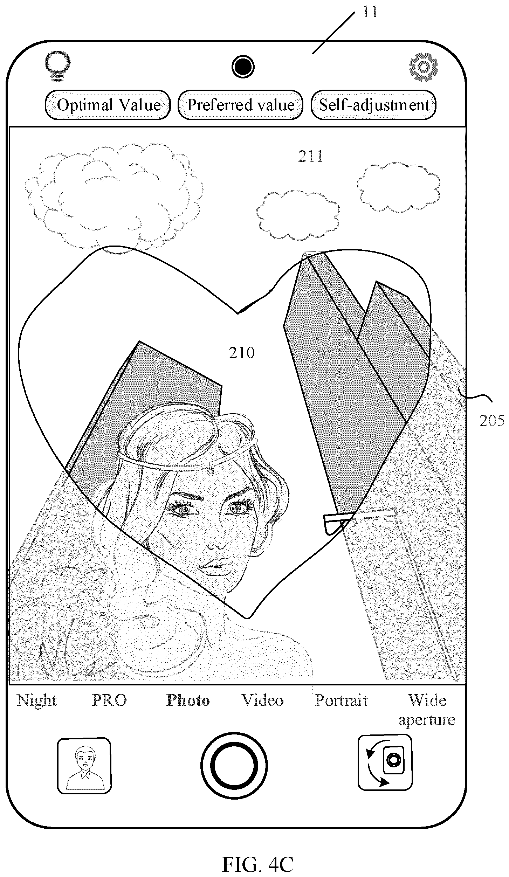

As shown in FIG. 4B, the electronic device 100 receives a contact (or non-contact) sliding operation performed by the finger of the user on the display. In response to the sliding operation, the electronic device 100 displays, on the display, a sliding track corresponding to the sliding operation. The sliding track is for forming a frame of the non-light compensation region 210. As shown in FIG. 4C, after the electronic device 100 detects that the user stops the sliding operation, the electronic device 100 determines the non-light compensation region 210 based on the sliding track, and displays the light compensation effect bar 209.

In some embodiments, the non-light compensation region 210 is in the display region 205, and the electronic device 100 can receive the sliding operation only by using the display region 205 of the display. In some other embodiments, the non-light compensation region 210 may include some or all of the function regions outside the display region 205. The electronic device 100 may receive the sliding operation by using the display (including the display region 205 and the function regions outside the display region 205).

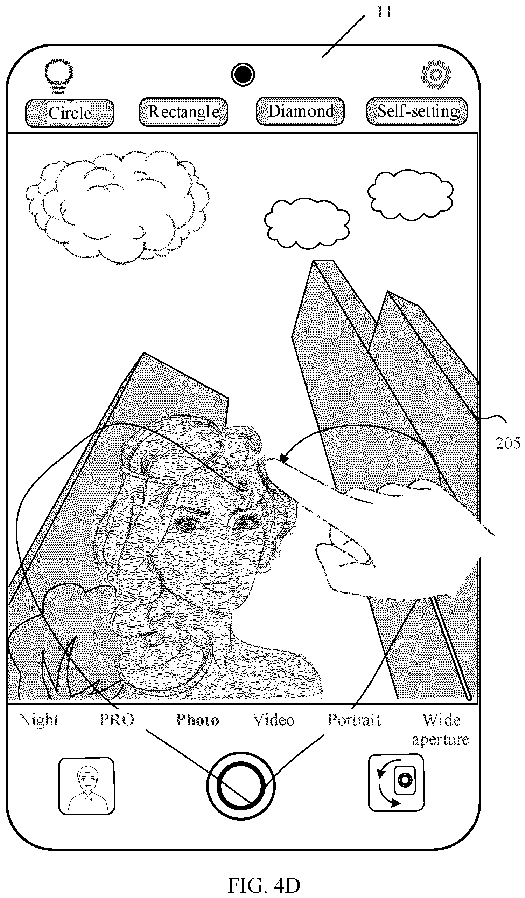

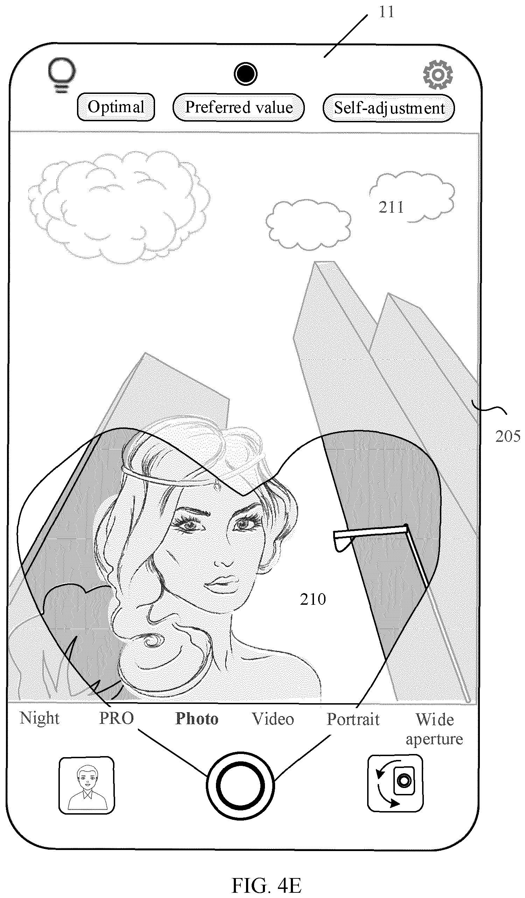

For example, as shown in FIG. 4D, the electronic device 100 may receive a sliding operation of the user by using the display, and display a corresponding sliding track in response to the sliding operation. As shown in FIG. 4E, after detecting that the user stops the sliding operation, the electronic device 100 determines the shape of the non-light compensation region 210 based on the sliding track, and determines a region that is on the photographing interface 11 and that is outside the non-light compensation region 210 as a light compensation region.

In some embodiments, when the electronic device 100 detects that the user stops the sliding operation and the sliding track forms a closed region, the electronic device 100 determines that the closed region is the non-light compensation region 210. In some embodiments, when the electronic device 100 detects that the user stops the sliding operation and the sliding track does not form a closed region, the electronic device 100 constructs the non-light compensation region 210 based on the existing sliding track. For example, a start point and an end point of the existing sliding track are connected, and a formed closed region is determined as the non-light compensation region 210.

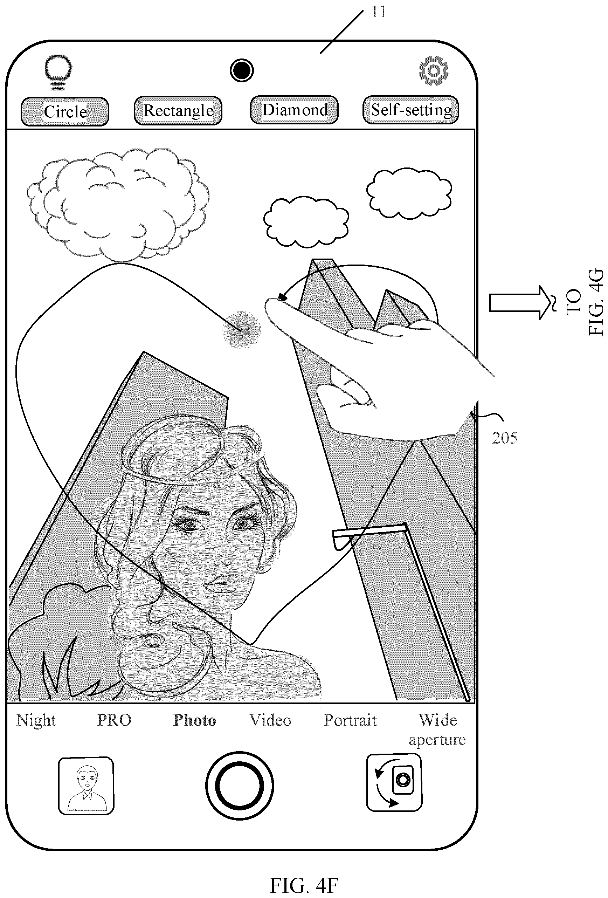

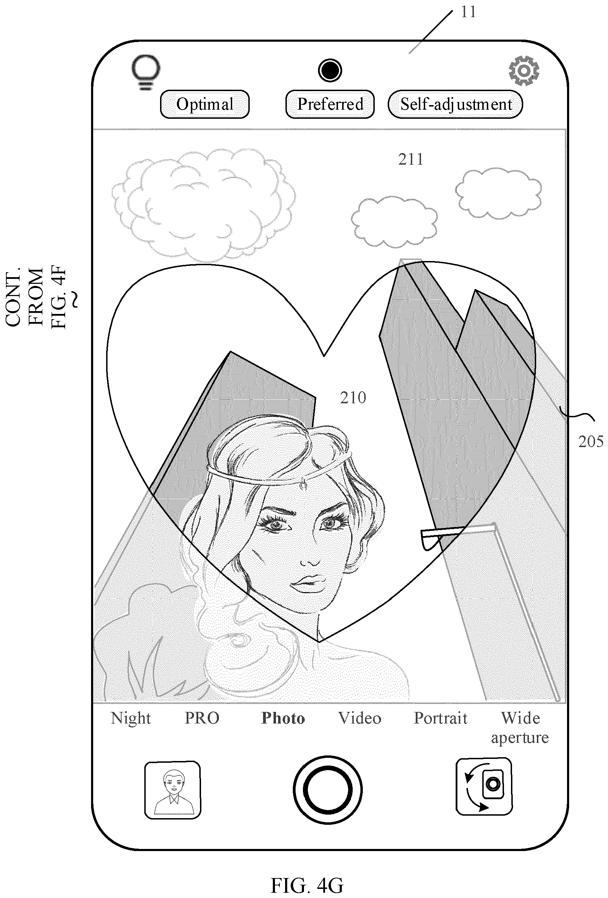

In some embodiments, after generating the closed region of a user-defined shape based on the received sliding track of the sliding operation, the electronic device 100 preprocesses a frame of the closed region. The electronic device 100 determines the processed closed region as the non-light compensation region 210. In a possible implementation, preprocessing value is to perform smoothing processing on the frame of the closed region, so that the frame of the closed region is smoother. In another possible implementation, preprocessing is to perform, after a shape of the closed region is identified as a particular shape (for example, a circle, a heart shape, or a rectangle), smoothing processing on the frame of the closed region based on the particular shape, so that the frame of the closed region is smoother and nearer the particular shape. For example, refer to FIG. 4F. The electronic device 100 receives a sliding operation of the user, and displays a corresponding sliding track. As shown in FIG. 4G, after detecting that the user stops the sliding operation, the electronic device 100 identifies that a sliding track corresponding to the sliding operation is a heart-shaped region, and the electronic device 100 performs smoothing processing on the heart-shaped region drawn by the user in a user-defined manner, to determine the processed heart-shaped region as the non-light compensation region 210.

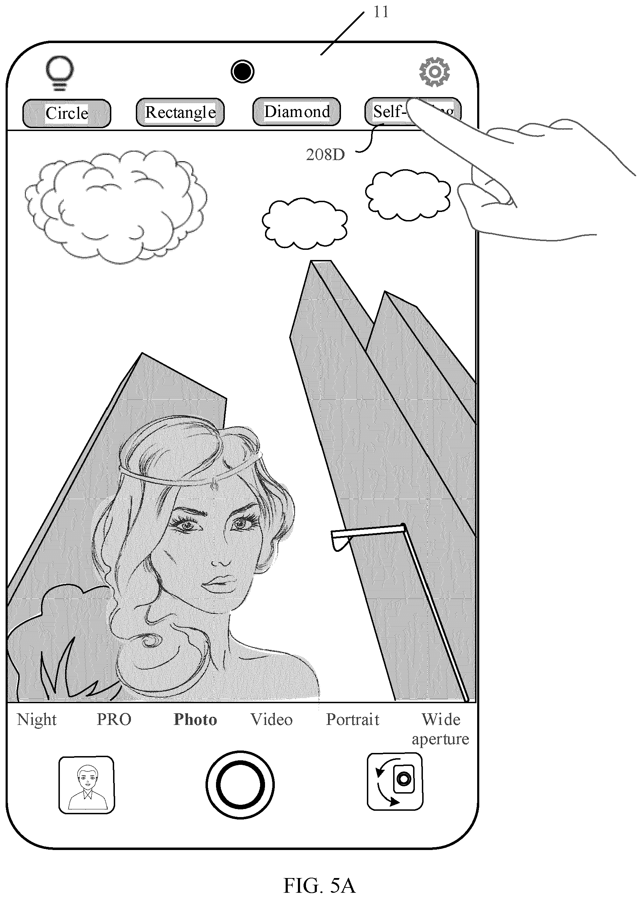

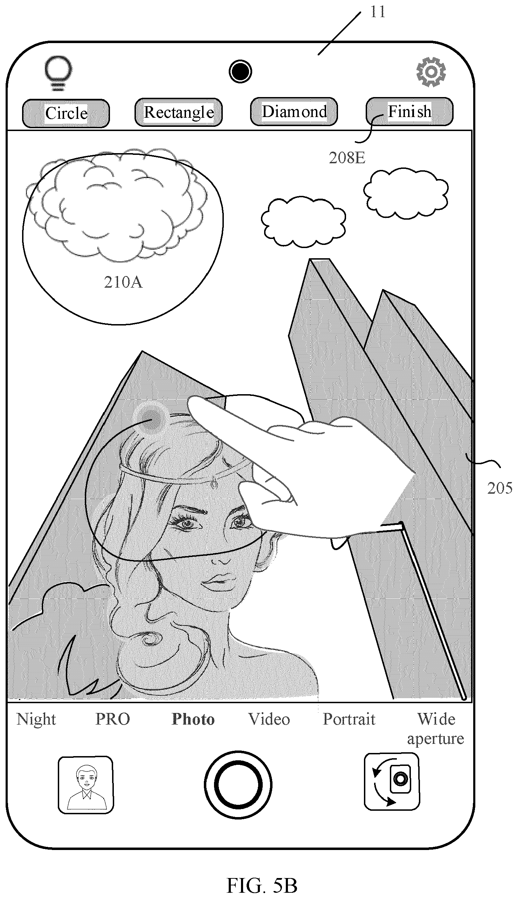

For example, refer to FIG. 5A. The electronic device 100 may receive a user operation (for example, a touch operation) performed on the self-setting control 208D. The electronic device 100 may display a completion control 208E on the photographing interface 11 in response to the detected user operation. After displaying the completion control 208E, the electronic device 100 may receive a sliding operation of the user by using the display. The sliding operation is for determining one or more non-light compensation regions on the display. As shown in FIG. 5B, after receiving the sliding operation of the user and displaying a corresponding non-light compensation region 210A on the display, the electronic device 100 may further continue to receive a sliding operation of the user to draw another non-light compensation region. It can be learned from FIG. 5B that, the electronic device 100 displays, on the display in response to the sliding operation of the user, a frame of a non-light compensation region 211B corresponding to a sliding track of the sliding operation.

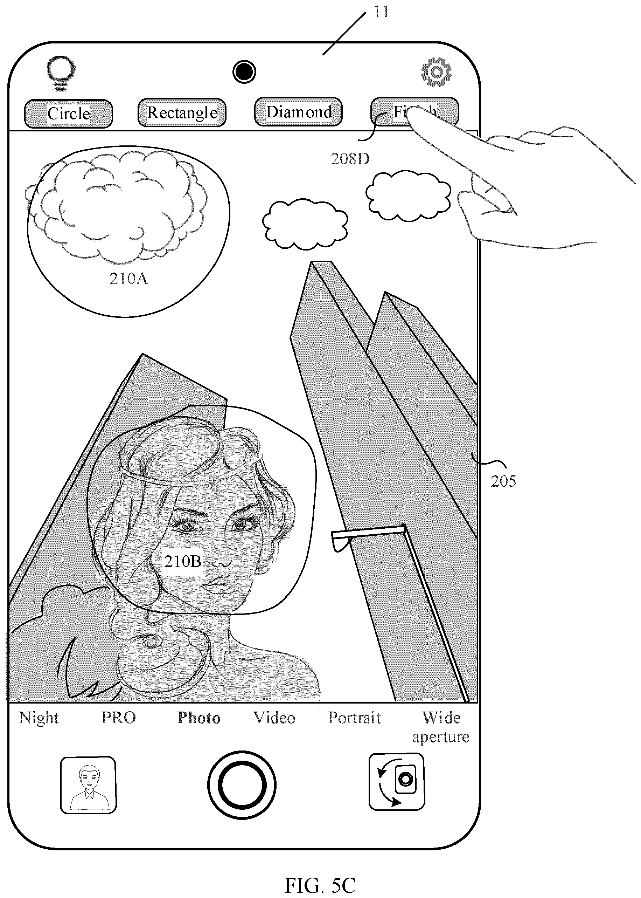

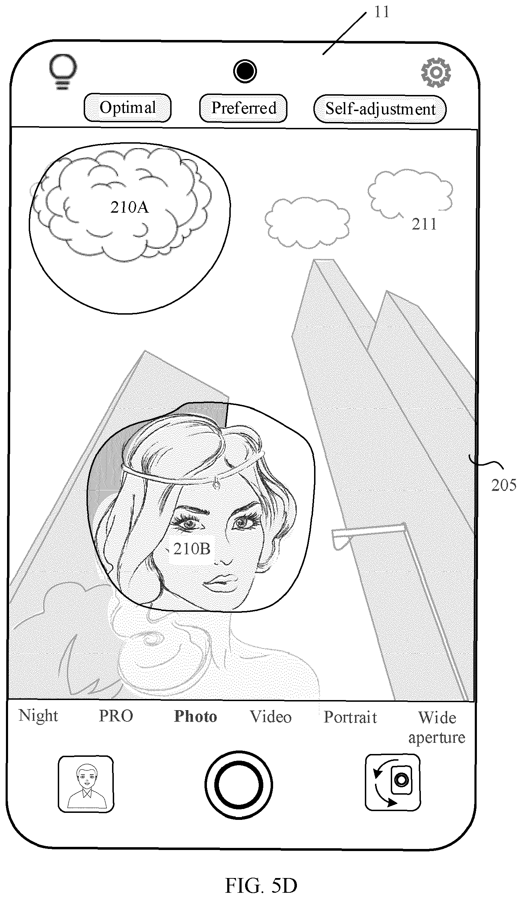

For example, as shown in FIG. 5C and FIG. 5D, the completion control 208E may receive a user operation (for example, a touch operation) performed on the completion control 208E. The electronic device 100 displays the light compensation effect bar 209 on the photographing interface 11 in response to the detected user operation, and stops drawing a non-light compensation region by receiving a sliding operation of the user.

In one case, the non-light compensation region 210 is in the display region 205. When determining the non-light compensation region 210, the electronic device 100 determines a region that is in the display region 205 and that is outside the non-light compensation region as the light compensation region 211, and divides the light compensation region into a plurality of light compensation subregions.

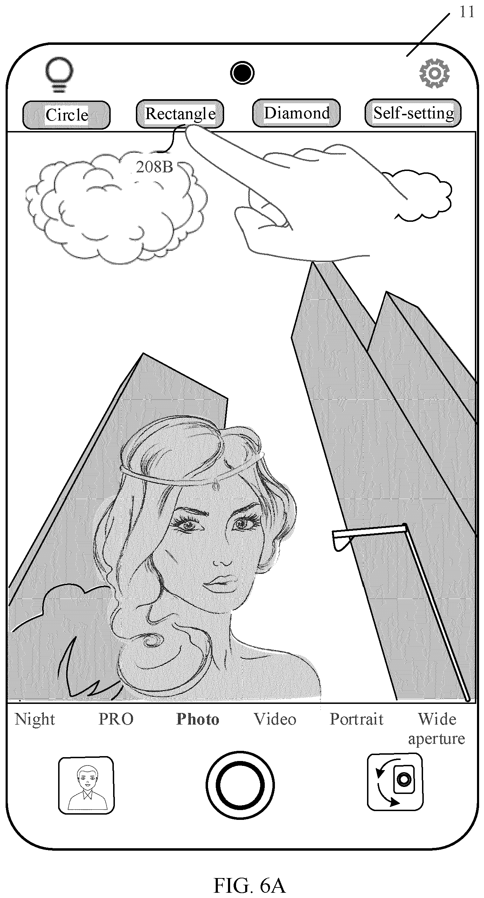

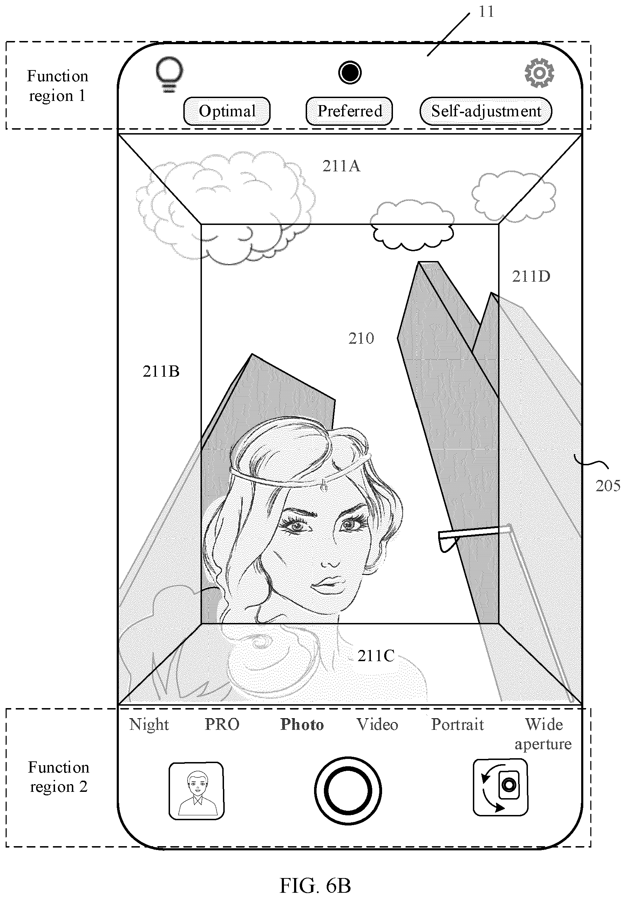

In some embodiments, the light compensation region includes a first light compensation subregion and a second light compensation subregion, and a light compensation intensity of the light compensation region is controlled by the electronic device by adjusting a light compensation parameter of at least one of the first light compensation subregion and the second light compensation subregion. For example, as shown in FIG. 6A, the electronic device 100 receives a user operation (for example, a touch operation) performed on the rectangular control 208B. As shown in FIG. 6B, in response to the detected user operation, the electronic device 100 may display the light compensation effect bar 209 on the photographing interface 11, determine the rectangular non-light compensation region 210, and may further determine a light compensation subregion 211A, a light compensation subregion 211B, a light compensation subregion 211C, and a light compensation subregion 211D that are in the display region 205 and that are outside the non-light compensation region.

In another case, the non-light compensation region 210 is in the display region 205. When determining the non-light compensation region 210, the electronic device 100 determines a region that is on the photographing interface 11 and that is outside the non-light compensation region as the light compensation region 211, and divides the light compensation region 211 into a plurality of light compensation subregions.

For example, as shown in FIG. 6A, the electronic device 100 determines the rectangular non-light compensation region 210, and determines the light compensation subregion 211A, the light compensation subregion 211B, the light compensation subregion 211C, and the light compensation subregion 211D that are on the photographing interface 11 and that are outside the non-light compensation region. The light compensation subregion 211A may include the function region 1 shown in FIG. 6A, and the light compensation subregion 211C may include the function region 2 shown in FIG. 6A.

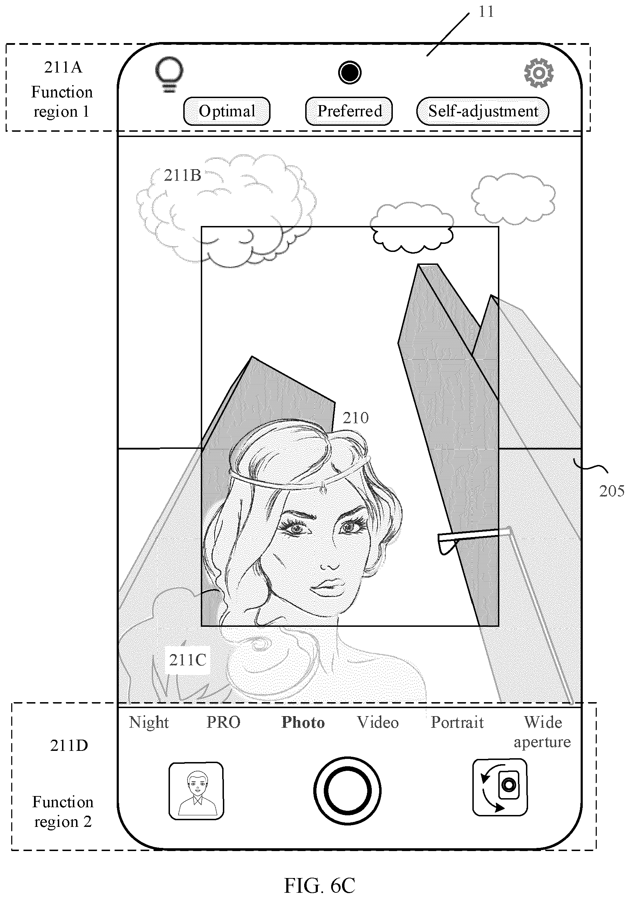

For example, as shown in FIG. 6C, the electronic device 100 receives a user operation (for example, a touch operation) performed on the rectangular control 208B. In response to the detected user operation, the electronic device 100 determines the rectangular non-light compensation region 210, and determines the light compensation subregion 211A, the light compensation subregion 211B, the light compensation subregion 211C, and the light compensation subregion 211D that are in the display region 205 and that are outside the non-light compensation region. The light compensation subregion 211A is the function region 1 shown in FIG. 6C, and the light compensation subregion 211D is the function region 2 shown in FIG. 6C.

In another case, the non-light compensation region 210 may include some or all of the display region 205 and a function region of the photographing interface 11. After determining the non-light compensation region 210, the electronic device 100 determines a region that is on the photographing interface 11 and that is outside the non-light compensation region 210 as the light compensation region 211, and divides the light compensation region 211 into a plurality of light compensation regions.

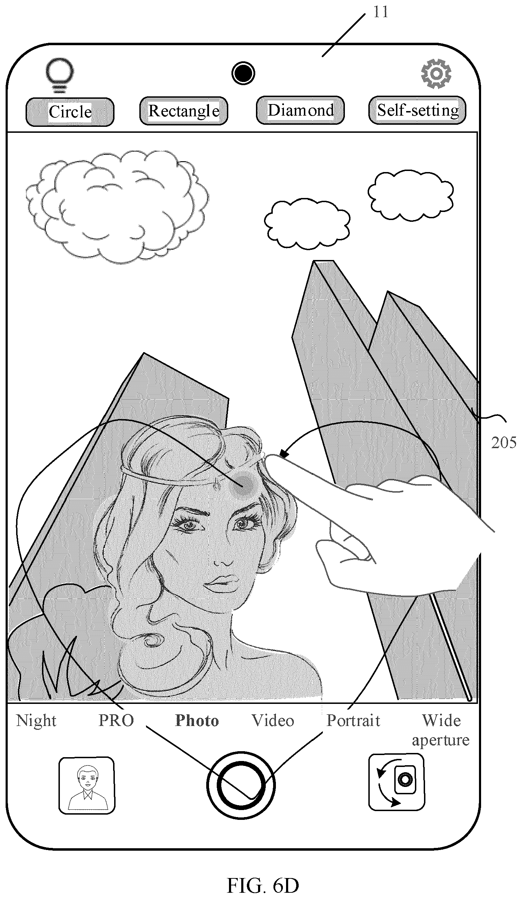

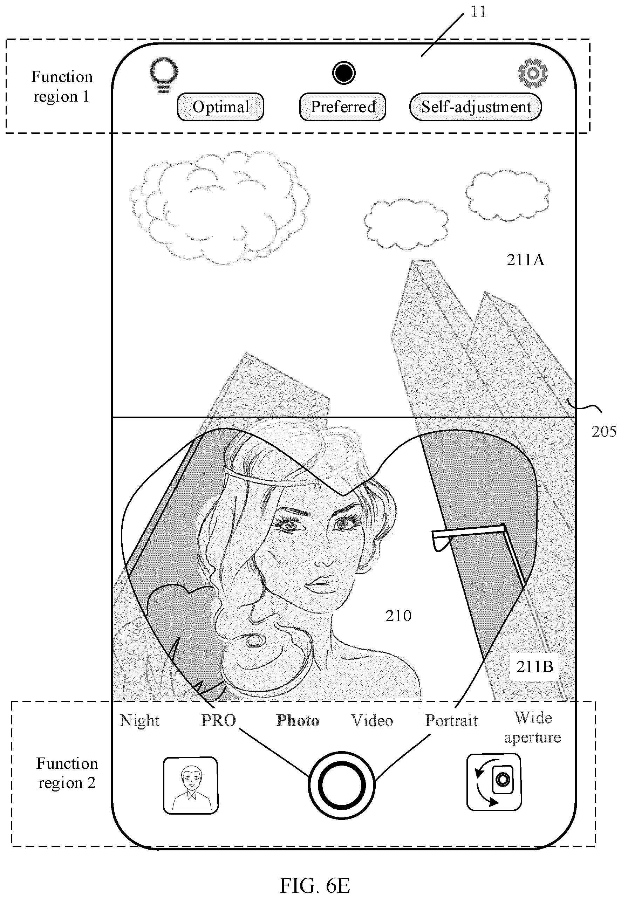

For example, as shown in FIG. 6D, the electronic device 100 may receive a sliding operation of the user by using the display region 205 and a function region outside the display region 205. As shown in FIG. 6E, in response to the sliding operation, the electronic device 100 determines the non-light compensation region 210, the light compensation subregion 211A, and the light compensation subregion 211B. The light compensation subregion 211A includes the function region 1, and the light compensation subregion 211B includes the function region 2.

In embodiments of this application, a quantity of the light compensation subregions and how to divide the light compensation region based on the quantity of the light compensation subregions may be set by default before delivery of the electronic device 100, or may be set by the user. These are not specifically limited herein.

It should be noted that the three cases are all applicable to determining the non-light compensation region 210 by using a shape control (for example, 208A), and are also applicable to determining the non-light compensation region 210 by using the self-setting control 208D.

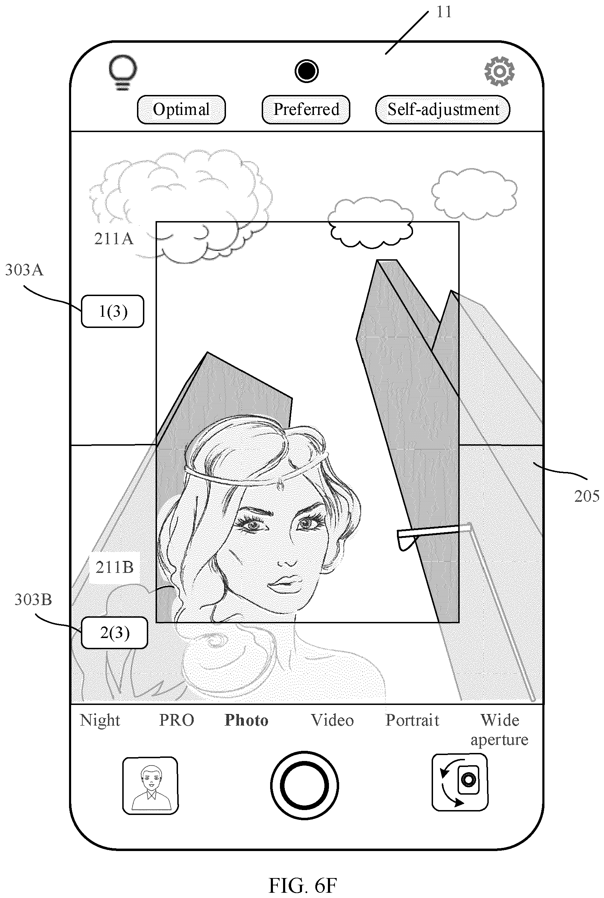

In some embodiments, the electronic device 100 displays an identifier and a light compensation intensity of each of a plurality of light compensation subregions when displaying the plurality of light compensation subregions. For example, as shown in FIG. 6F, the electronic device 100 displays the light compensation subregion 211A and the light compensation subregion 211B. The electronic device 100 also displays a symbol 303A and a symbol 303B that respectively correspond to the light compensation subregion 211A and the light compensation subregion 211B. Specific content of the symbol 303A may be "1 (3)", where "1" indicates an identifier of the light compensation subregion 211A, and "(3)" indicates a light compensation intensity of the light compensation subregion 211A. Specific content of the symbol 303B may be "2 (3)", where "2" indicates an identifier of the light compensation subregion 211B, and "(3)" indicates a light compensation intensity of the light compensation subregion 211B. When the electronic device 100 displays a plurality of light compensation regions, each light compensation intensity displayed on each light compensation subregion may be an initial light compensation intensity. The initial light compensation intensity may be an optimal light compensation intensity determined by the electronic device 100, may be 0 (that is, there is no light compensation), or may be another default value preset by the electronic device 100 or a user.

In some embodiments of this application, when the electronic device 100 determines, in response to a received user operation, a plurality of light compensation subregions, the electronic device 100 displays, in each light compensation subregion, a light compensation layer corresponding to the light compensation subregion. In some embodiments, each light compensation subregion is inside the display region 205. In a process of disposing, drawing, and rendering the photographing interface 11, the electronic device superimposes the light compensation layer corresponding to the light compensation subregion on a layer at which a preview image is located. In some embodiments, the light compensation subregion may include some or all of the function regions of the photographing interface 11. In a process of disposing, drawing, and rendering the photographing interface 11, the electronic device superimposes the light compensation layer corresponding to the light compensation subregion on the layer at which the preview image is located and a layer at which a background of the function regions is located, and superimpose a layer at which controls in the function regions are located on the light compensation layer to avoid affecting use of the controls in the function regions.

The following describes how a user adjusts a light compensation effect of a light compensation region when the photographing interface 11 includes a plurality of light compensation subregions.

In some embodiments of this application, the photographing interface 11 includes the plurality of light compensation subregions. The maximum control 209A may receive a user operation (for example, a touch operation). The electronic device 100 adjusts a light compensation effect of the preview image in the display region 205 to a maximum light compensation effect in response to the detected user operation. The adjusting a light compensation effect of the preview image in the display region 205 to a maximum light compensation effect may include: adjusting a light compensation intensity of each light compensation subregion to a maximum light compensation intensity of the light compensation subregion. The maximum light compensation intensity of each light compensation subregion may be equal or not equal. The adjusting a light compensation effect of the preview image in the display region 205 to a maximum light compensation effect may further include: performing, from a plurality of aspects by using the image processing algorithm 1, image processing on the preview image displayed on the display region 205.

In some embodiments of this application, the photographing interface 11 includes the plurality of light compensation subregions. The beautification control 209B may receive a user operation (for example, a touch operation). The electronic device 100 displays the beautification control bar 301 in response to the detected user operation. The beautification control bar 301 may include the beautification control 301A, the beautification control 301B, and the beautification control 301C. The beautification control 301A is used as an example. The beautification control 301A may receive a user operation (for example, a touch operation). The electronic device 100 adjusts the light compensation effect of the preview image to the light compensation effect 1 in response to the detected user operation. The adjusting the light compensation effect of the preview image to the light compensation effect 1 may include: adjusting the light compensation intensity of each light compensation subregion to the light compensation intensity 1 of the light compensation subregion. The light compensation intensity 1 of each light compensation subregion may be equal or not equal. The adjusting the light compensation effect of the preview image to the light compensation effect 1 may further include: performing, by using the image processing algorithm 2, image processing on the preview image displayed on the display region 205.

In some embodiments of this application, the photographing interface 11 includes the plurality of light compensation subregions. The self-adjustment control 209C may receive a user operation (for example, a touch operation). The electronic device 100 displays, in response to the user operation, a luminance adjustment bar corresponding to each light compensation subregion.

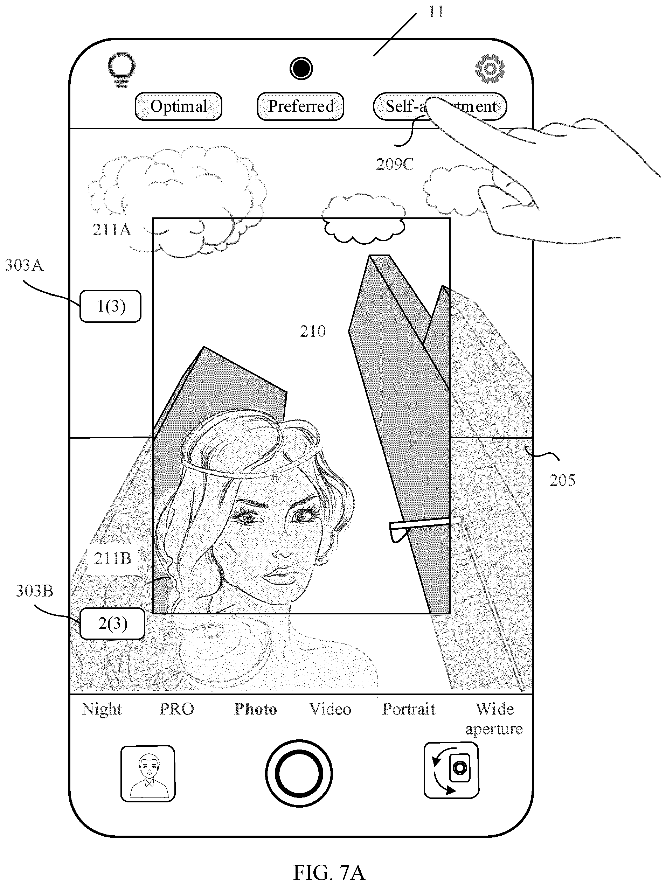

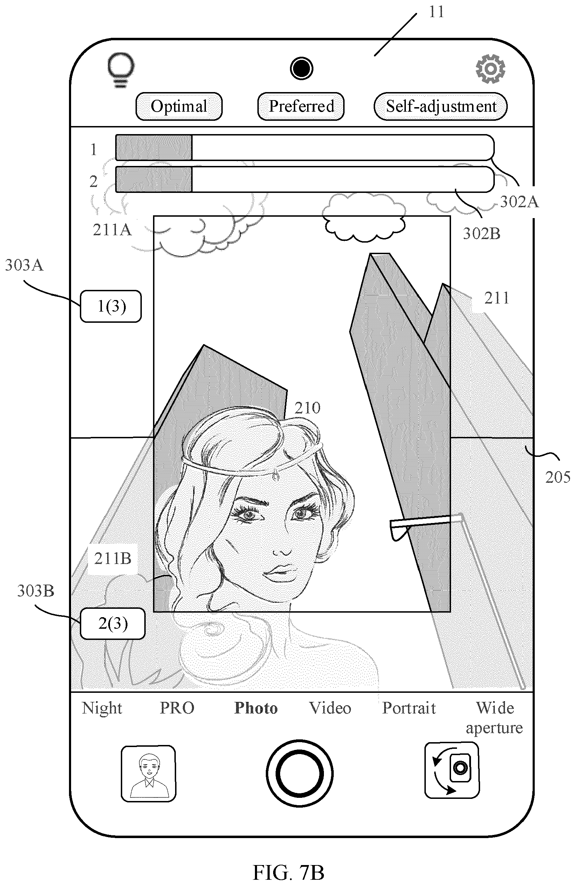

For example, as shown in FIG. 7A, the photographing interface 11 includes the light compensation subregion 211A and the light compensation subregion 211B. The electronic device 100 may receive a user operation (for example, a touch operation) performed on the self-adjustment control 209C. As shown in FIG. 7B, the electronic device 100 displays, in response to the user operation, a luminance adjustment bar 302A corresponding to the light compensation subregion 211A and a luminance adjustment bar 302B corresponding to the light compensation subregion 211B. The luminance adjustment bar 302A may receive a user operation (for example, a sliding operation). The electronic device 100 adjusts a length of a shadow part in the luminance adjustment bar 302A in response to the detected user operation, and adjusts display luminance of the light compensation subregion 211A based on a light compensation intensity indicated by the shadow part in the luminance adjustment bar 302A. Similarly, the luminance adjustment bar 302B may be used to adjust the light compensation intensity of the light compensation subregion 211B.

In some embodiments of this application, the photographing interface 11 includes the non-light compensation region 210 and the light compensation region 211. The light compensation region 211 may include a plurality of light compensation subregions. The electronic device 100 may receive a user operation performed on the non-light compensation region 210, to adjust a location of the non-light compensation region 210 on the photographing interface 11, and also adjust a location of the light compensation region 211.

In some embodiments, the electronic device receives a fourth user operation. The electronic device determines a location of a non-light compensation region or a light compensation region on a first interface in response to the fourth user operation.

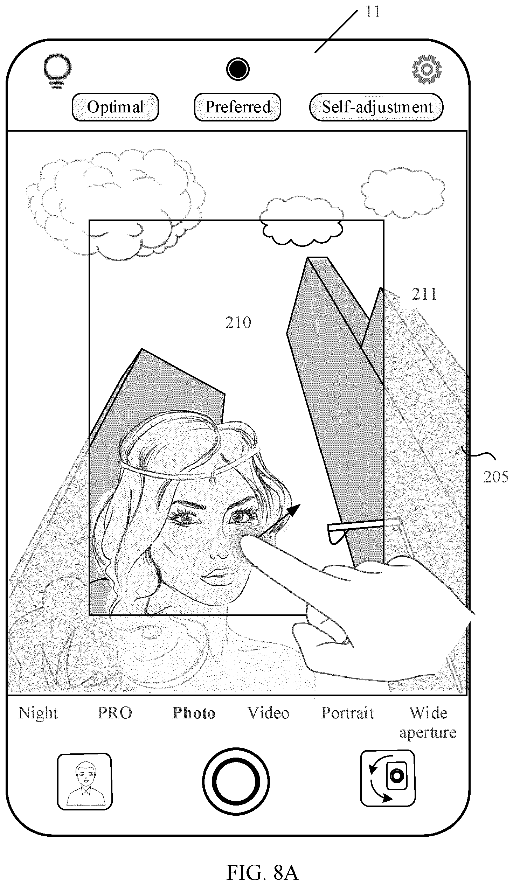

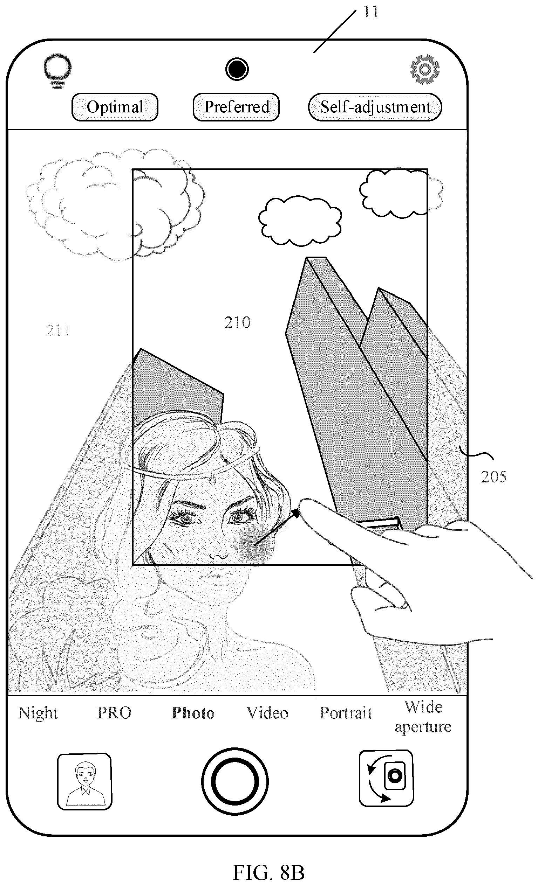

For example, as shown in FIG. 8A and FIG. 8B, the non-light compensation region 210 may receive a user operation. The electronic device 100 may adjust a location of the non-light compensation region 210 on the display in response to the detected user operation. The fourth user operation may be that the finger of the user slides on the display by using a region within a frame of the non-light-compensation region 210 as a start point.

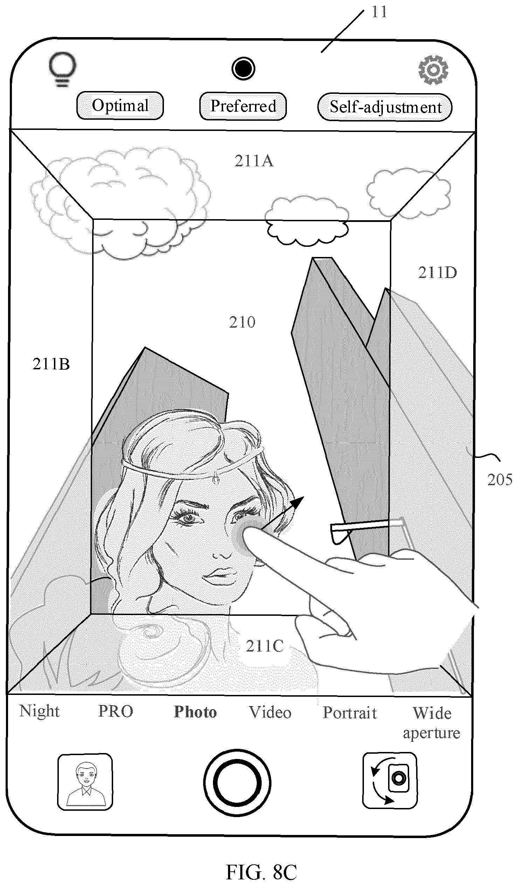

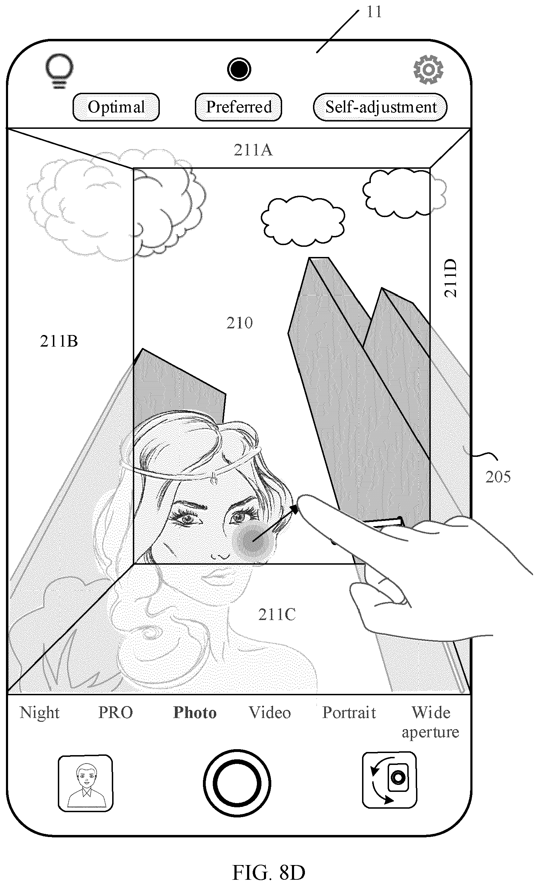

For example, as shown in FIG. 8C and FIG. 8D, the user interface includes the light compensation subregion 211A, the light compensation subregion 211B, the light compensation subregion 211C, and the light compensation subregion 211D. The non-light compensation region 210 may receive a user operation (for example, a sliding operation). In response to the detected user operation, the electronic device 100 may adjust the location of the non-light compensation region 210 on the display, and correspondingly adjust a region that is on the display and that is included in each light compensation subregion.

In embodiments of this application, the location of the non-light compensation region 210 may alternatively be adjusted by using another user operation, for example, a voice instruction or a specific gesture. This is not specifically limited herein.

In embodiments of this application, in a process of adjusting the location of the non-light compensation region 210, the electronic device 100 may change a division quantity and/or a division manner of the light compensation subregions of the light compensation region 211 based on the location of the non-light compensation region 210, or may not change the division quantity and/or the division manner. This is not specifically limited herein.

It should be noted that, in some embodiments, the electronic device 100 may adjust only a location of the non-light compensation region 210 in the display region 205. In some other embodiments, the electronic device 100 may adjust a location of the non-light compensation region 210 on the photographing interface 11.

In some embodiments of this application, the photographing interface 11 includes the non-light compensation region 210 and the light compensation region 211. The light compensation region 211 may include a plurality of light compensation subregions. The electronic device 100 may receive a user operation performed on the non-light compensation region 210, to adjust a size of the non-light compensation region on the photographing interface 11, and also adjust a size of the light compensation region 211.

In some embodiments, the electronic device receives a third user operation. The electronic device determines a size of a non-light compensation region or a light compensation region on a first interface in response to the third user operation.

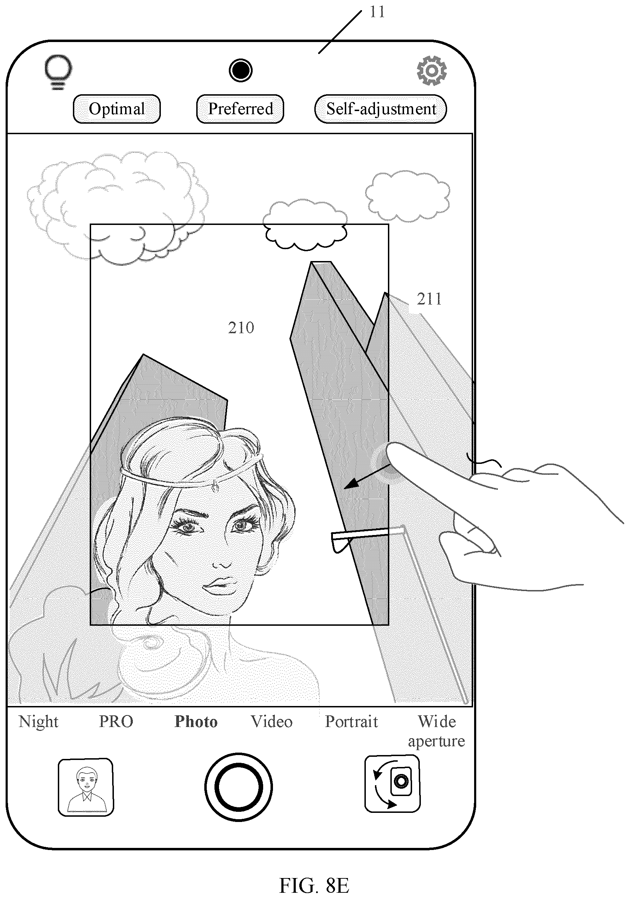

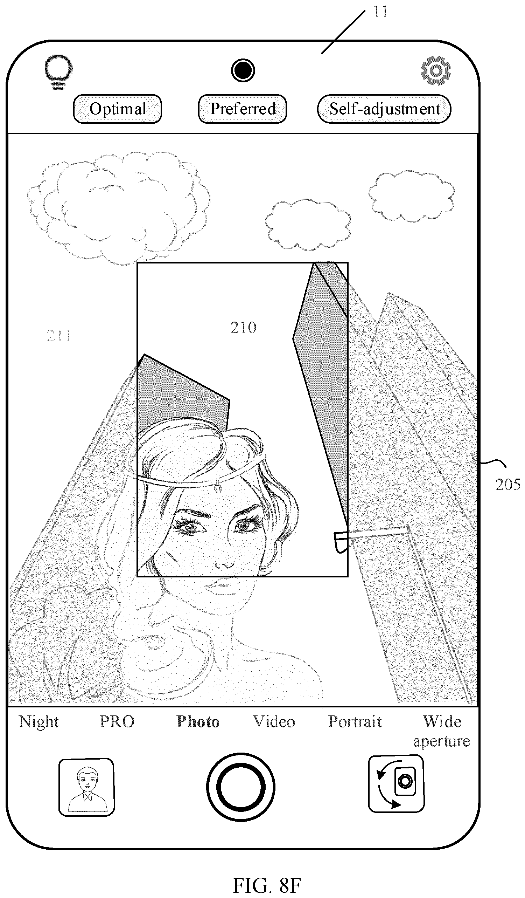

For example, as shown in FIG. 8E and FIG. 8F, the non-light compensation region 210 may receive a user operation. The electronic device 100 may reduce an area of the non-light compensation region 210 in response to the detected user operation. As shown in FIG. 8A, the third user operation may be that the finger of the user slides to the outside of the non-light-compensation region 210 by using the frame of the non-light-compensation region 210 as a start point.

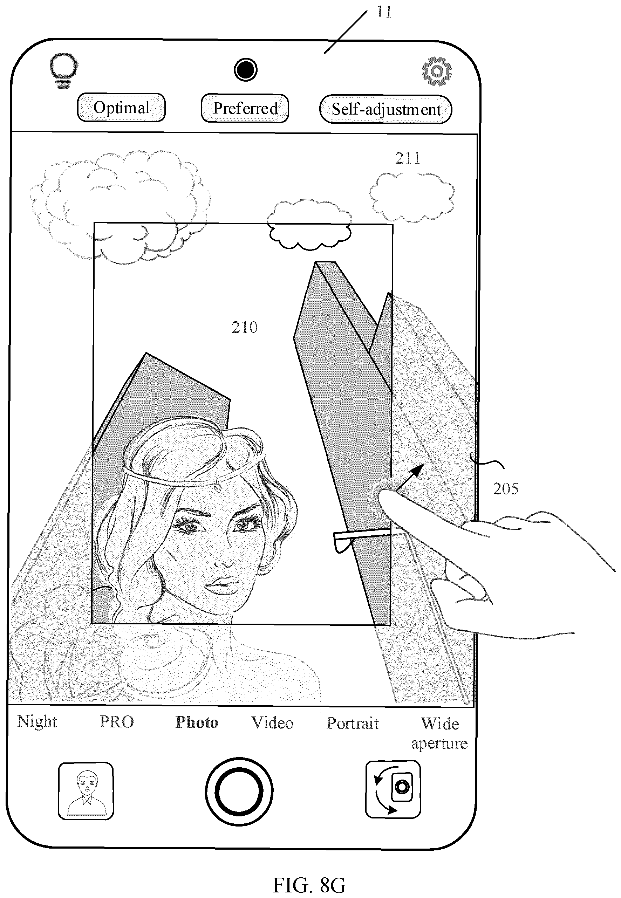

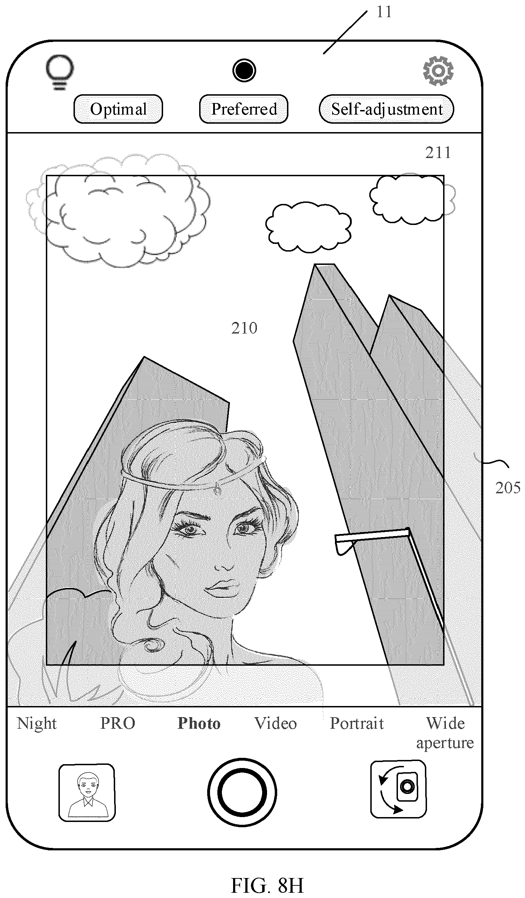

For example, as shown in FIG. 8G and FIG. 8H, the non-light compensation region 210 may receive a user operation. The electronic device 100 may enlarge the area of the non-light compensation region 210 in response to the detected user operation. As shown in FIG. 8G, the third user operation may further be that the finger of the user slides to the inside of the non-light-compensation region 210 by using the frame of the non-light-compensation region 210 as the start point.

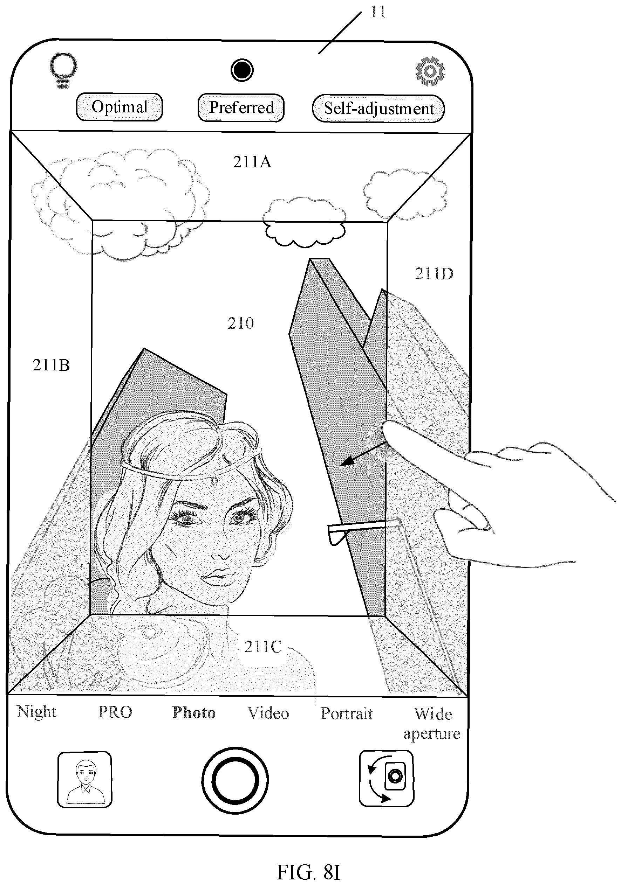

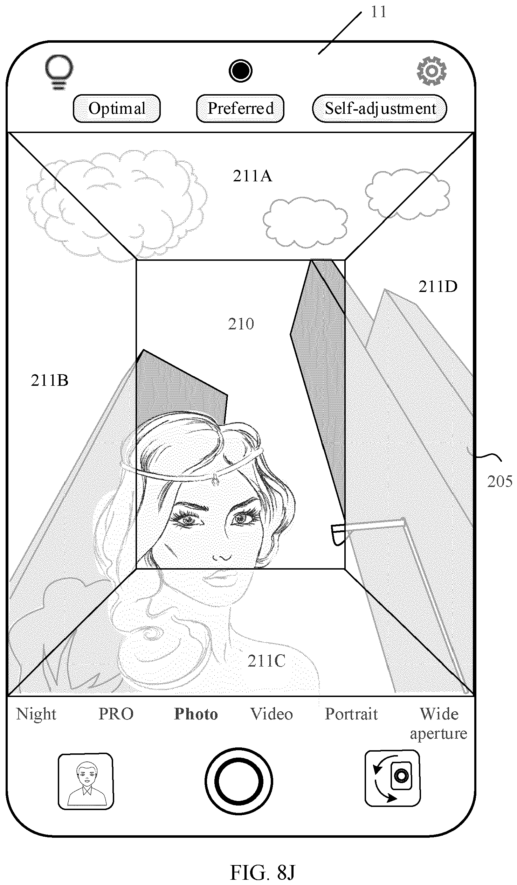

For example, as shown in FIG. 8I and FIG. 8J, the user interface includes the light compensation subregion 211A and the light compensation subregion 211B. The non-light compensation region 210 may receive a user operation (for example, a sliding operation). In response to the detected user operation, the electronic device 100 may adjust and reduce the area of the non-light compensation region 210, and correspondingly adjust a region that is on the display and that is included in each light compensation subregion.

In embodiments of this application, the size of the non-light compensation region 210 may alternatively be adjusted by using another user operation, for example, a voice instruction or a specific gesture. This is not specifically limited herein.

In embodiments of this application, in a process of adjusting the size of the non-light compensation region 210, the electronic device 100 may change a division quantity and/or a division manner of a plurality of light compensation subregions of the light compensation region 211 based on the size of the non-light compensation region 210, or may not change the division quantity and/or the division manner. This is not specifically limited herein.

It should be noted that, in some embodiments, the electronic device 100 may adjust only a size of the non-light compensation region 210 in the display region 205. In some other embodiments, the electronic device 100 may adjust a size of the non-light compensation region 210 on the photographing interface 11.

(2) In some embodiments of this application, when performing front-facing photographing through the photographing interface 11, the user may determine the light compensation region 211 on the display by adjusting a shape, a location, and a size of the light compensation region 211 on the display, to adjust a light compensation intensity of the light compensation region 211.

In some embodiments, the light compensation region 211 can be located only in the display region 205 of the photographing interface 11. In some embodiments, the light compensation region 211 may include some or all of the function regions outside the display region 205.

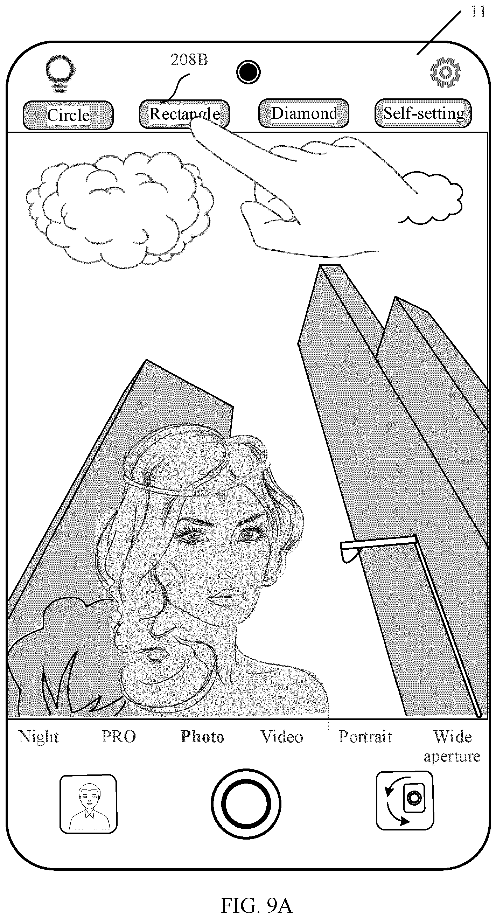

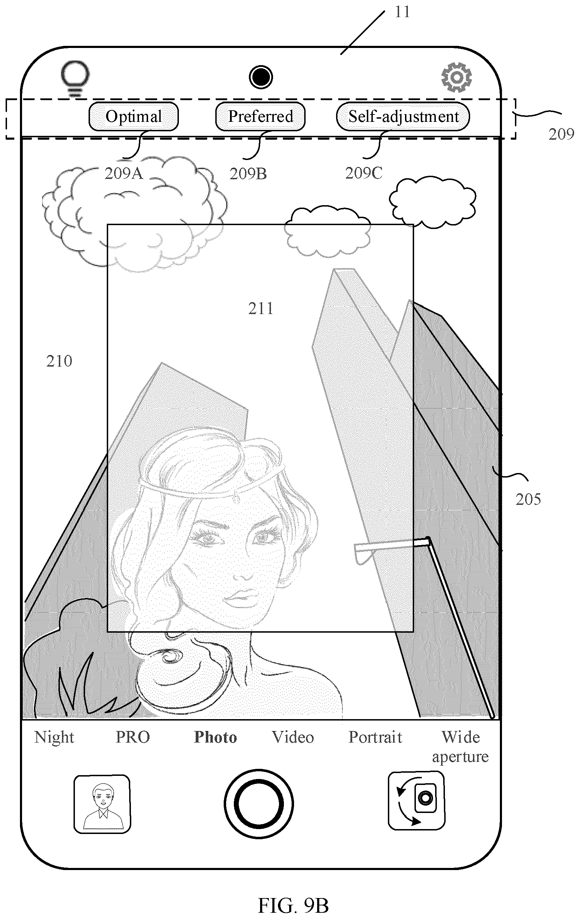

FIG. 9A and FIG. 9B show an example of an operation of determining the shape of the light compensation region.

For example, as shown in FIG. 9A and FIG. 9B, the electronic device 100 may receive a user operation (for example, a touch operation) performed on the rectangular control 208B. In response to the detected user operation, the electronic device 100 may display the light compensation effect bar 209 and the rectangular light compensation region 211 on the photographing interface 11, and determine a region that is on the photographing interface 11 and that is outside the light compensation region 211 as the non-light compensation region 210.

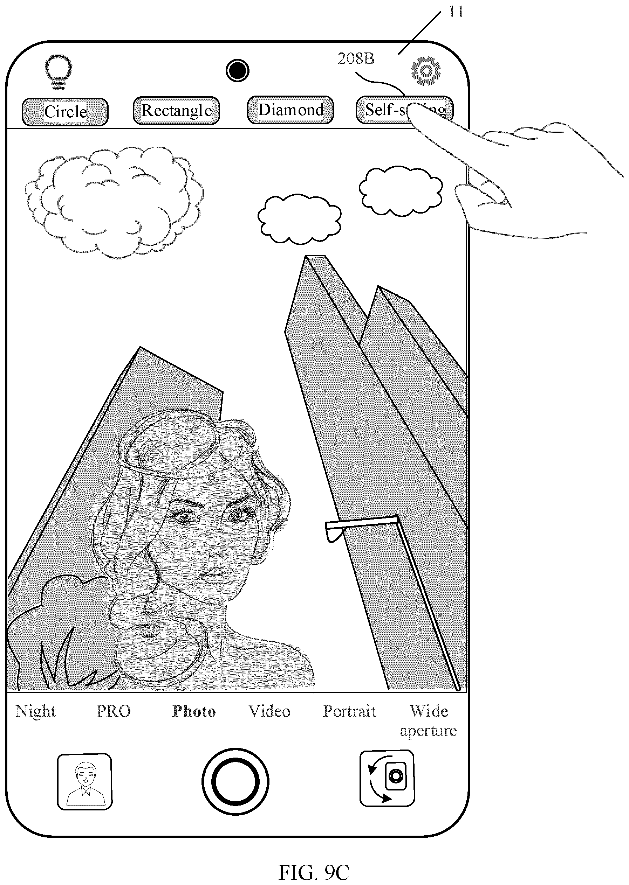

FIG. 9C to FIG. 9I show an example of another operation of determining the shape of the light compensation region.

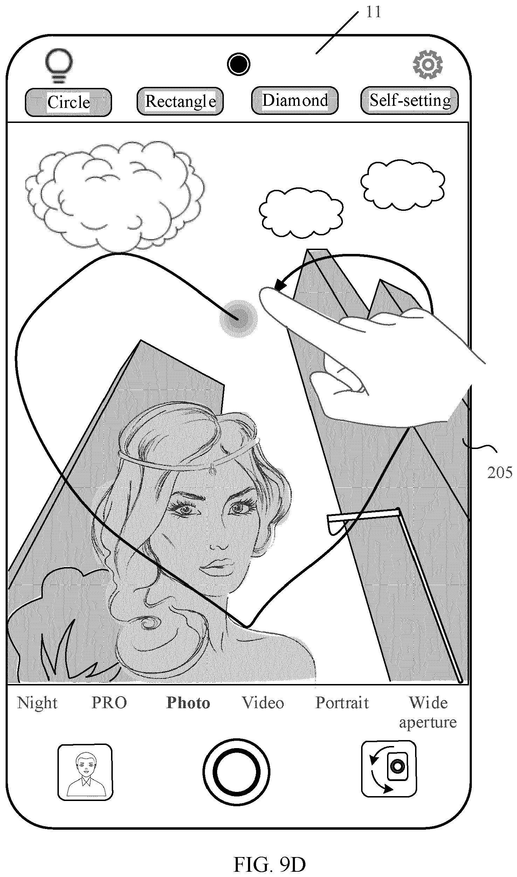

For example, as shown in FIG 9C and FIG. 9D, the electronic device 100 may receive a user operation (for example, a touch operation) performed on the self-setting control 208D. The electronic device 100 may receive the user operation by using the display in response to the detected user operation, to determine the non-light compensation region 211.

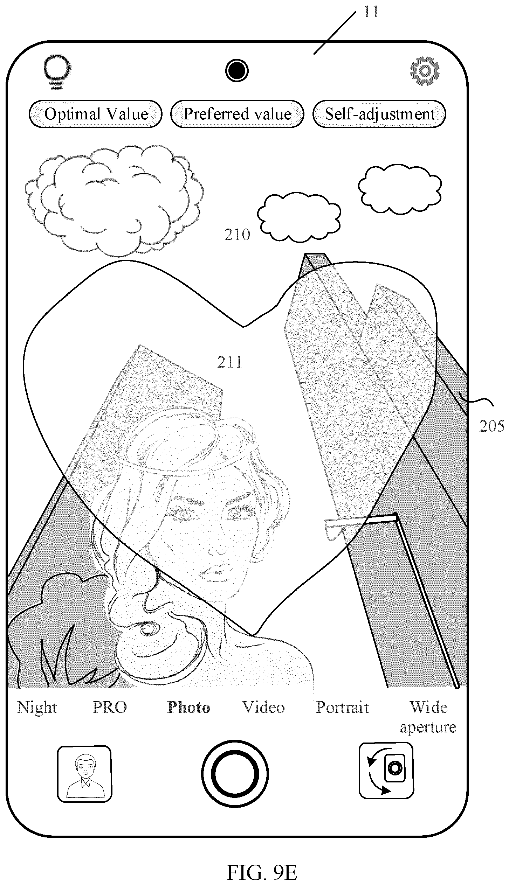

As shown in FIG. 9C and FIG. 9D, after receiving the user operation performed on the self-setting control 208D, the electronic device 100 may receive a contact (or non-contact) sliding operation implemented by the finger of the user on the display. The electronic device 100 displays a corresponding sliding track on the display in response to the sliding operation. The sliding track is for forming a frame of the light compensation region 211. As shown in FIG. 9E, after the electronic device 100 detects that the user stops the sliding operation, the electronic device 100 determines the light compensation region 211 based on the sliding track corresponding to the sliding operation, and displays the light compensation effect bar 209.

Specifically, for how to determine the light compensation region 211 based on the sliding track, refer to related embodiments of determining the non-light compensation region 210 based on the sliding track. Details are not described herein again.

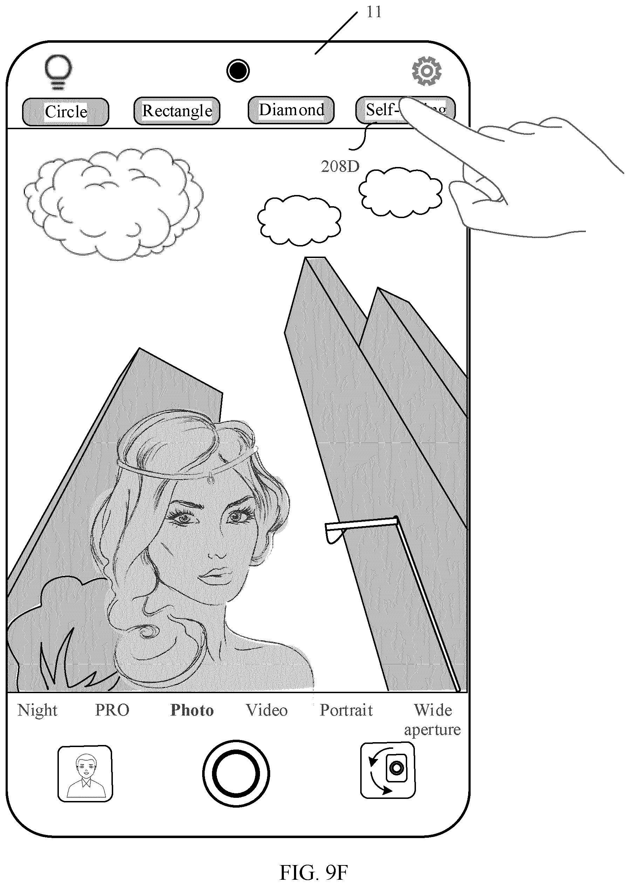

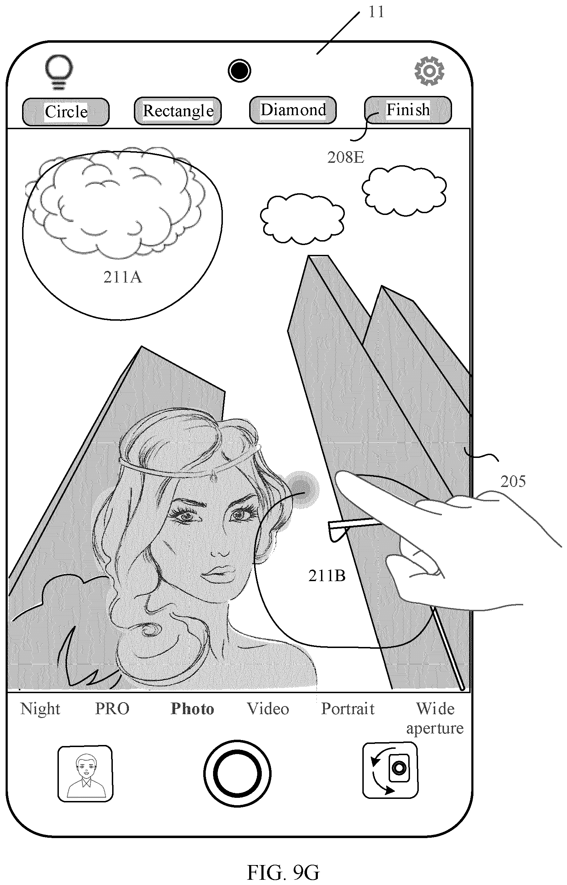

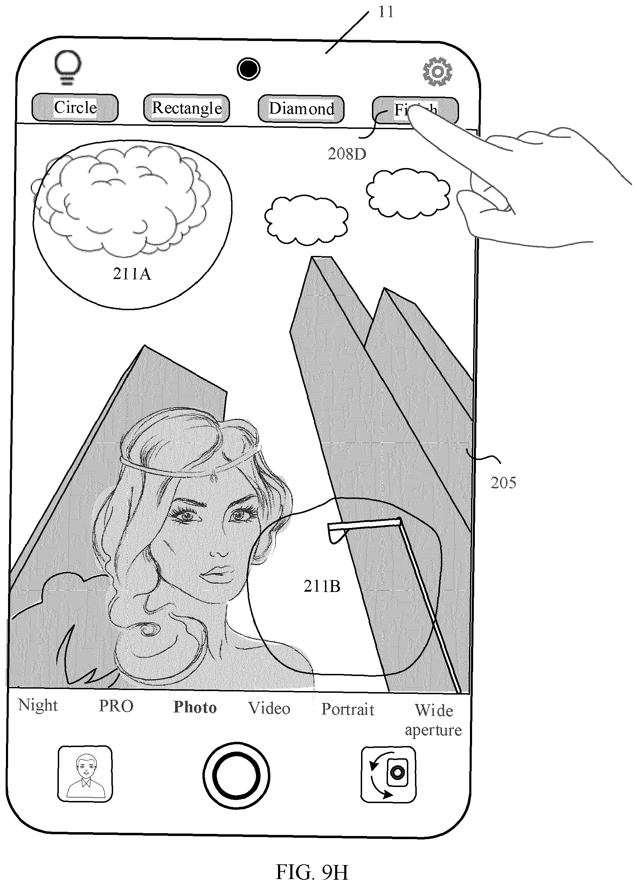

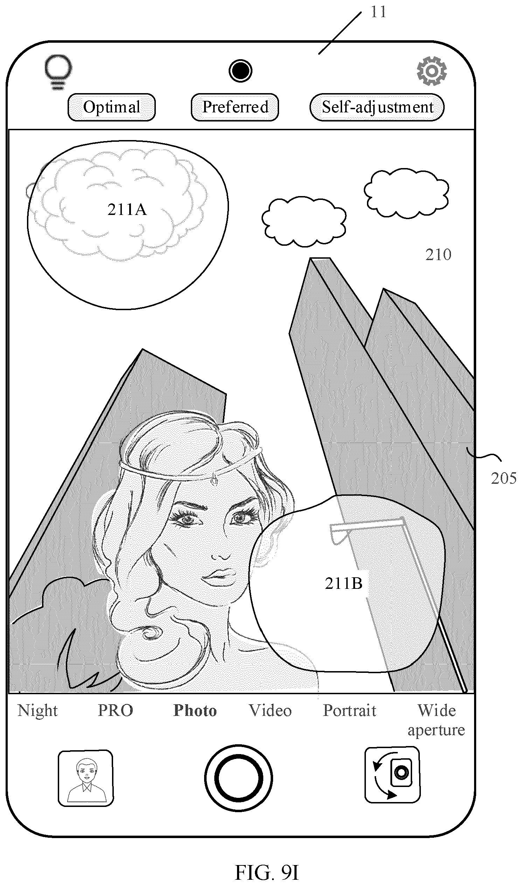

For example, refer to FIG. 9F to FIG. 9I. The electronic device 100 may receive a user operation (for example, a touch operation) performed on the self-setting control 208D. The electronic device 100 may display the completion control 208E on the photographing interface 11 in response to the detected user operation. The electronic device 100 may further receive a sliding operation of the user by using the display. The sliding operation is for determining one or more frames of one or more light compensation subregions. As shown in FIG. 9G, after receiving the sliding operation of the user and displaying the corresponding light compensation subregion 211A on the display, the electronic device 100 may further continue to receive a sliding operation of the user to draw another light compensation region. It can be learned from FIG. 9H and FIG. 9I, the electronic device 100 displays, on the display, a frame of the light compensation subregion 211B based on the sliding track of the sliding operation in response to the sliding operation of the user.

The completion control 208E may receive a user operation (for example, a touch operation) performed on the completion control 208E. The electronic device 100 displays the light compensation effect bar 209 on the photographing interface 11 in response to the detected user operation, and stops drawing the light compensation region 211 by receiving a sliding operation of the user.

Refer to FIG. 7A and FIG. 7B, the photographing interface 11 includes a plurality of light compensation subregions. The self-adjustment control 209C may receive a user operation (for example, a touch operation). The electronic device 100 displays, in response to the user operation, a luminance adjustment bar corresponding to each light compensation subregion. The electronic device 100 may adjust the light compensation intensity of the light compensation region 211 based on a user operation performed on the luminance adjustment bar.

Refer to FIG. 9A to FIG. 9I. In some embodiments of this application, the photographing interface 11 includes the non-light compensation region 210 and the light compensation region 211. The light compensation region 211 may include a plurality of light compensation subregions. The electronic device 100 may receive a user operation performed on a light compensation subregion, to adjust a location of the light compensation subregion on the photographing interface 11. For a user operation of adjusting the location of the light compensation subregion, refer to the user operation of adjusting the location of the non-light compensation region in related embodiments in FIG. 8C and FIG. 8D. Details are not described herein again. In some embodiments, the electronic device 100 may receive a user operation performed on a light compensation subregion, to adjust a size of the light compensation subregion on the photographing interface 11. For a user operation of adjusting the size of the light compensation subregion, refer to the user operation of adjusting the size of the non-light compensation region in related embodiments in FIG. 8I and FIG. 8J. Details are not described herein again.

The following describes how to adjust the light compensation effect of the light compensation region to an optimal light compensation effect.

In some embodiments, the electronic device 100 adjusts a light compensation effect of the preview image in the preview region 205 to the optimal light compensation effect, that is, adjusts a light compensation intensity of the light compensation region to an optimal light compensation intensity. In some other embodiments, the electronic device 100 adjusts the light compensation effect of the preview image in the preview region 205 to the optimal light compensation effect, that is, adjusts the light compensation intensity of the light compensation region to the optimal light compensation intensity, and optimizes the preview image displayed on the preview region 205 by using the image processing algorithm 1. The image processing algorithm 1 may include processing such as enhancement, filtering, and color optimization of an image. The image processing algorithm 1 is not limited to an image processing algorithm such as enhancement, filtering, color optimization, and sharpening. The image processing algorithm 1 may further include another image processing algorithm. This is not specifically limited herein.

The following describes how to determine the optimal light compensation intensity.

In some embodiments, the electronic device 100 obtains ambient light luminance by using the ambient light sensor 180L, and determines the optimal light compensation intensity of the light compensation region based on the ambient light luminance, a light sensing range of the ambient light sensor 180L, and a light compensation range of the electronic device 100. For example, if the light sensing range of the ambient light sensor 180L ranges from 0 to maximum luminance G1 (for example, 1000), the light compensation range of the electronic device 100 ranges from 0 to a maximum light compensation intensity B1 (for example, 10), and the current ambient light luminance G2 obtained by the ambient light sensor 180L of the electronic device 100 is 50, then the electronic device 100 determines that the optimal light compensation intensity B2 is (1 - G1/G2)^{∗}B1, namely, 9.5.

In some embodiments, the electronic device 100 obtains the ambient light luminance by using the ambient light sensor 180L, and determines the optimal light compensation intensity of the light compensation region based on the ambient light luminance, the light sensing range of the ambient light sensor 180L, the light compensation range of the electronic device 100, and an exposure value of the camera 193 during photographing.

In embodiments of this application, the manner of determining the optimal light compensation intensity is not limited, and there may be another manner. This is not specifically limited herein.

The following describes how to determine a light compensation effect corresponding to a beautification control. The light compensation effect corresponding to the beautification control includes the light compensation intensity of the light compensation region 211 and the image processing algorithm of the preview image.

Refer to related embodiments in FIG. 3D and FIG. 3E, a light compensation effect 1 corresponding to the beautification control 301A includes the light compensation intensity 1 of the light compensation region 211 and the image processing algorithm 2 of the preview image. A light compensation effect 2 corresponding to the beautification control 301B includes the light compensation intensity 2 of the light compensation region 211 and the image processing algorithm 3 of the preview image. A light compensation effect 3 corresponding to the beautification control 301C includes the light compensation intensity 3 of the light compensation region 211 and the image processing algorithm 4 of the preview image.

In some embodiments, the electronic device 100 determines, based on the optimal light compensation intensity, a light compensation intensity corresponding to the beautification control. The light compensation intensity 1, the light compensation intensity 2, and the light compensation intensity 3 are all equal to the optimal light compensation intensity. The image processing algorithm 2, the image processing algorithm 3, and the image processing algorithm 4 are different. The three image processing algorithms may include one of image processing algorithms such as an enhancement algorithm, a filtering algorithm, a color optimization algorithm, or a sharpening algorithm.

In some embodiments, after determining the image processing algorithm 2, the image processing algorithm 3, and the image processing algorithm 4, the electronic device 100 determines, based on an image processing algorithm corresponding to a light compensation effect, a light compensation intensity corresponding to the light compensation effect. For example, the image processing algorithm 2 corresponding to the beautification control 301A is color optimization. Excessively strong ambient light affects color optimization. If the optimal light compensation intensity is greater than a first preset value, the light compensation intensity 1 of the light compensation effect 1 corresponding to the beautification control 301A is equal to the optimal light compensation intensity minus a preset difference. Alternatively, if the optimal light compensation intensity is not greater than the first preset value, the light compensation intensity 1 is equal to the optimal light compensation intensity. In some embodiments, the electronic device 100 determines the light compensation intensity 1, the light compensation intensity 2, and the light compensation intensity 3 of the light compensation region based on the optimal light compensation intensity of the light compensation region. When the optimal light compensation intensity B2 is greater than B 1-x, it is determined that the light compensation intensity 1 is equal to B2-x, the light compensation intensity 2 is equal to B2-2*x, and the light compensation intensity 3 is equal to B2-3*x, where x is the preset difference. If the optimal light compensation intensity B2 is less than B 1-x and is greater than or equal to B1-2^{∗}x, it is determined that the light compensation intensity 1 is equal to B2+x, the light compensation intensity 2 is equal to B2-x, and the light compensation intensity 3 is equal to B2-2*x. If the optimal light compensation intensity B2 is less than B 1-2*x and is greater than or equal to B1-3^{∗}x, it is determined that the light compensation intensity 1 is equal to B2+2*x, the light compensation intensity 2 is equal to B2+x, and the light compensation intensity 3 is equal to B2-x. Then, the electronic device 100 determines, based on the light compensation intensity 1, the light compensation intensity 2, and the light compensation intensity 3, image processing algorithms corresponding to light compensation intensities of different light compensation effects. For example, the electronic device 100 determines that the light compensation intensity 1 is equal to B2+2*x, the light compensation intensity 2 is equal to B2+x, and the light compensation intensity 3 is equal to B2-x. Then, the electronic device 100 determines that an image processing algorithm corresponding to the strong light compensation intensity 1 is a sharpening algorithm, because sufficient light helps improve a sharpening processing effect of the preview image; an image processing algorithm corresponding to the moderate light compensation intensity 2 is a color optimization algorithm, because exposure caused by over-bright images and color dimness caused by over-dark images are unfavorable to the color optimization algorithm; and an image processing algorithm corresponding to the low light compensation intensity 13 is an enhancement algorithm, because an image enhancement algorithm can effectively optimize a quality of the preview image when the light is insufficient, making the dark preview image clearer.

In embodiments of this application, the manner of determining a preferred light compensation effect is not limited, and there may be another manner. This is not specifically limited herein.

The following describes how the electronic device 100 adjusts display luminance of a light compensation region based on a light compensation intensity.

First, in this embodiment of this application, a display panel included in the display 194 may be an LCD display panel and an OLED display panel. This is not specifically limited herein. When the display panel is an OLED display panel, the electronic device 100 may separately control pixel luminance of each pixel.

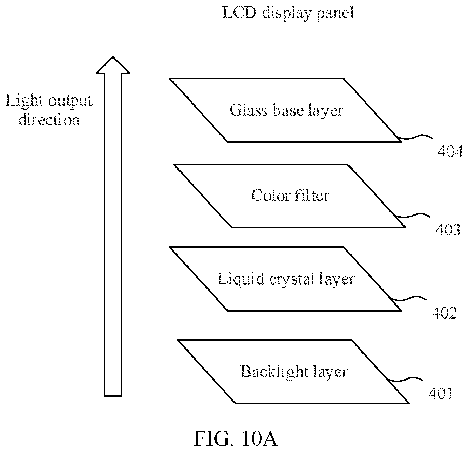

For example, as shown in FIG. 10A, the LCD display panel includes a backlight layer 401, a liquid crystal layer 402, a color filter 403, and a glass substrate 404. The backlight source 401 may be configured to display white light under the driving of a current. In this embodiment of this application, luminance of the white light displayed by the backlight layer 401 may be changed by changing a magnitude of a drive current and a pulse width modulation (PWM) duty cycle of the drive current, to change overall luminance of an image. For example, at a same PWM duty cycle, a larger drive current indicates higher luminance of the white light displayed by the backlight layer 401. For another example, under drive currents of a same magnitude, a larger PWM duty cycle indicates higher luminance of the white light displayed by the backlight layer 401.

The color filter 403 may include three types of filters: red, green, and blue. Each pixel may include three types of color display units: red, green, and blue. In some embodiments, the color filter 403 may include four types of filters: red, green, blue, and white. Each pixel may include four types of color display units: red, green, blue, and white. The liquid crystal layer 402 may be configured to receive a voltage control signal to control how much white light displayed by the backlight layer 401 is emitted into the color filter 403. The liquid crystal layer 402 may separately control an amount of the white light which is displayed by the backlight layer 211 and which is emitted into each color display unit. The pixel may be adjusted to display different colors by adjusting proportions of the white light entering various color filters in the pixel. The glass substrate 401 is transparent, and may be configured to support the entire LCD panel.

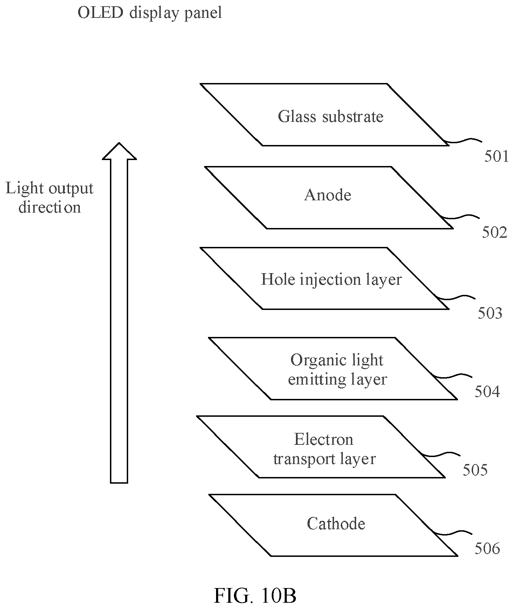

For example, as shown in FIG. 10B, the OLED panel includes a glass substrate 501, an anode 502, a hole injection layer 503, an organic light emitting layer 504, an electron transport layer 505, and a cathode 506.

The glass substrate 501 is transparent, and may be configured to support the entire OLED panel. The anode 502 is transparent. When a current flows through the anode 502, the anode 502 can eliminate electrons and increase electron holes. The hole injection layer 503 is made of organic material molecules, and is configured to transport an electron hole from the anode 506. The organic light emitting layer 504 is made of an organic material and is configured to emit light. The electron transport layer 505 is made of organic material molecules, and is configured to transport electrons from the cathode 506. When a current passes through the cathode 506, the cathode 506 injects electrons into the electron transport layer 505. When current driving enables both ends of the anode 502 and the cathode 506 to reach a specific voltage, an electron hole generated by the anode 502 and an electron generated by the cathode 506 are combined in the organic light emitting layer, to generate light. Three primary colors, red, green, and blue (RGB), may be generated in the organic light emitting layer 504 due to different types of organic material molecules, to constitute basic colors.

Each light emitting unit in the OLED panel can be separately lighted. Because organic material molecules of organic light emitting layers in light emitting units are different, light of different colors is generated. Luminance of light emitted by the organic light emitting layer 503 depends on performance of a light emitting material and a magnitude of a current applied to the anode 502 and the cathode 506. A larger current applied to the anode 502 and the cathode 506 indicates higher luminance of light emitted by the organic light emitting layer 503. Therefore, each display pixel on the OLED panel may include red, green, and blue organic light emitting units. A display color of the display pixel may be adjusted by adjusting a ratio of injection current values of the red, green, and blue light emitting units in the display pixel. Alternatively, each display pixel on the OLED panel may include red, green, blue, and white light emitting units. The display color of the display pixel may be adjusted by adjusting a ratio of injection current values of the red, green, blue, and white light emitting units in the display pixel. The image display luminance of the OLED panel may be adjusted by adjusting a drive current of each pixel of the OLED panel.

The following specifically describes how the electronic device 100 adjusts display luminance of a light compensation region based on a light compensation intensity.

The following separately describes two cases in which a light compensation layer is displayed on the light compensation region and no light compensation layer is displayed on the light compensation region.

(1). No light compensation layer is displayed on the light compensation region. In some embodiments, the electronic device 100 may store a correspondence between a light compensation intensity of the light compensation region (or a light compensation subregion) and a drive current (or a drive voltage) of a pixel. The drive current (or the drive voltage) of the pixel is for controlling pixel luminance of the pixel.

In some embodiments of this application, the display 194 is an OLED display panel. That the electronic device 100 adjusts display luminance of a light compensation region based on a light compensation intensity specifically includes: The electronic device 100 determines, based on a light compensation intensity of a light compensation region (or a light compensation subregion), a drive current of an organic light emitting unit corresponding to each pixel in the light compensation region (or the light compensation subregion), and adjusts the display luminance of the light compensation region by adjusting the drive current of the organic light emitting unit corresponding to each pixel in the light compensation region (or the light compensation subregion).

In some embodiments of this application, the display 194 is an LCD display panel. That the electronic device 100 adjusts display luminance of a light compensation region based on a light compensation intensity specifically includes: The electronic device 100 determines and adjusts, based on a light compensation intensity of a light compensation region (or a light compensation subregion), a drive voltage of a liquid crystal layer corresponding to each pixel in the light compensation region (or the light compensation subregion), and adjusts the display luminance of the light compensation region by adjusting a drive voltage of a liquid crystal molecule corresponding to each pixel in the light compensation region (or the light compensation subregion).

(2). A light compensation layer is displayed on the light compensation region. In some embodiments, the electronic device 100 may store a correspondence among a light compensation intensity of a light compensation region (or a light compensation subregion), a drive current (or a drive voltage) of a pixel, and transparency of a light compensation layer. In some embodiments, the electronic device 100 stores a correspondence among the light compensation intensity of the light compensation region (or the light compensation subregion), a drive current of a backlight source, and the transparency of the light compensation layer. The drive current of the backlight source is for controlling luminance of the backlight source.

In some embodiments of this application, that the electronic device 100 adjusts display luminance of a light compensation region (or a light compensation subregion) based on a light compensation intensity specifically includes: The electronic device 100 determines and adjusts, based on a light compensation intensity of the light compensation region (or the light compensation subregion), transparency of a light compensation layer corresponding to the light compensation region (or the light compensation subregion). For example, the light compensation layer is white. When the light compensation intensity is 0, the light compensation layer is transparent. When the light compensation intensity is greater, the transparency of the light compensation layer is lower and the light compensation layer is brighter. When the light compensation intensity is a maximum light compensation intensity, the light compensation layer is opaque and the brightest. It may be understood that a lower transparency of the white light compensation layer indicates a brighter light compensation layer.

In some embodiments, the light compensation layer may alternatively be in another color. This is not specifically limited herein. Different colors of light compensation layers can bring different colors of ambient light, to display different light compensation effects.

In some embodiments of this application, the display 194 is an OLED display panel. That the electronic device 100 adjusts display luminance of a light compensation region (or a light compensation subregion) based on a light compensation intensity specifically includes:

The electronic device 100 determines and adjusts, based on a light compensation intensity of the light compensation region (or the light compensation subregion), a drive current corresponding to each pixel in the light compensation region (or the light compensation subregion) and transparency of a light compensation layer corresponding to the light compensation region (or the light compensation subregion).

Alternatively, the electronic device 100 adjusts a drive current corresponding to each pixel in the light compensation region (or the light compensation subregion) to a preset current value, and determines and adjusts, based on a light compensation intensity of the light compensation region (or the light compensation subregion), transparency of a light compensation layer corresponding to the light compensation region (or the light compensation subregion).

Alternatively, the electronic device 100 adjusts transparency of a light compensation layer corresponding to the light compensation region (or the light compensation subregion) to a preset transparency value, and determines and adjusts, based on a light compensation intensity of the light compensation region (or the light compensation subregion), a drive current corresponding to each pixel in the light compensation region (or the light compensation subregion).

Alternatively, the electronic device 100 determines and adjusts, based on a light compensation intensity of the light compensation region (or the light compensation subregion), a drive current corresponding to each pixel in the display panel and transparency of a light compensation layer corresponding to the light compensation region (or the light compensation subregion).

Alternatively, the electronic device 100 adjusts a drive current corresponding to each pixel in the display panel to a preset current value, and determines and adjusts, based on a light compensation intensity of the light compensation region (or the light compensation subregion), transparency of a light compensation layer corresponding to the light compensation region (or the light compensation subregion).

Alternatively, the electronic device 100 adjusts transparency of a light compensation layer corresponding to the light compensation region (or the light compensation subregion) to a preset transparency value, and determines and adjusts, based on a light compensation intensity of the light compensation region (or the light compensation subregion), a drive current corresponding to each pixel in the display panel.

It should be noted that, when the display panel is overall brightened, a light compensation region that is superimposed on a light compensation layer may be brighter than a non-light compensation region that is not superimposed on the light compensation layer.

In some embodiments of this application, the display 194 is an LCD display panel. That the electronic device 100 adjusts display luminance of a light compensation region (or a light compensation subregion) based on a light compensation intensity specifically includes:

The electronic device 100 determines and adjusts, based on a light compensation intensity of the light compensation region (or the light compensation subregion), a drive voltage of a liquid crystal molecule corresponding to each pixel in the light compensation region (or the light compensation subregion) and transparency of a light compensation layer corresponding to the light compensation region (or the light compensation subregion).

Alternatively, the electronic device 100 adjusts a drive voltage of a liquid crystal molecule corresponding to each pixel in the light compensation region (or the light compensation subregion) to a preset voltage value, and determines and adjusts, based on a light compensation intensity of the light compensation region (or the light compensation subregion), transparency of a light compensation layer corresponding to the light compensation region (or the light compensation subregion).

Alternatively, the electronic device 100 adjusts transparency of a light compensation layer corresponding to the light compensation region (or the light compensation subregion) to a preset transparency value, and determines and adjusts, based on a light compensation intensity of the light compensation region (or the light compensation subregion), a drive voltage of a liquid crystal molecule corresponding to each pixel in the light compensation region (or the light compensation subregion).

Alternatively, the electronic device 100 determines and adjusts, based on a light compensation intensity of the light compensation region (or the light compensation subregion), a drive current of a backlight source in the display panel and transparency of a light compensation layer corresponding to the light compensation region (or the light compensation subregion).

Alternatively, the electronic device 100 adjusts a drive current of a backlight source in the display panel to a preset current value, and determines and adjusts, based on a light compensation intensity of the light compensation region (or the light compensation subregion), transparency of a light compensation layer corresponding to the light compensation region (or the light compensation subregion).

Alternatively, the electronic device 100 adjusts transparency of a light compensation layer corresponding to the light compensation region (or the light compensation subregion) to a preset transparency value, and determines and adjusts, based on a light compensation intensity of the light compensation region (or the light compensation subregion), a drive current of a backlight source in the display panel.

In some embodiments of this application, the light compensation region includes a function region whose background color is black on the photographing interface 11. If the light compensation region includes some or all of function regions on the photographing interface 11, the electronic device 100 displays a light compensation layer in a light compensation region in the display region 205. When adjusting display luminance of a light compensation region (or a light compensation subregion) based on a light compensation intensity, the electronic device 100 adjusts a background color of a light compensation region (or a light compensation subregion) in the function region to white, and adjusts pixel luminance of the light compensation region (or the light compensation subregion) in the function region based on a light compensation intensity of the light compensation region (or the light compensation subregion).

The following describes a display principle of the light compensation layer.

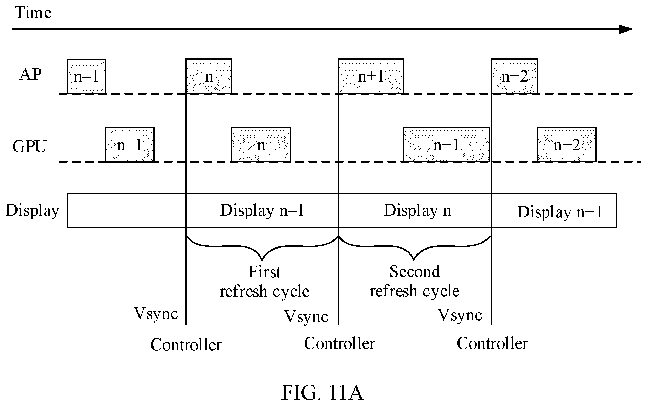

First, a display principle of a user interface on the electronic device 100 is described. Generally, before the user interface is displayed, a process of generating the user interface may be mainly divided into: measurement layout, drawing, rendering synthesis, and caching. FIG. 11A is a sequence diagram of displaying a user interface of the electronic device 100 according to an embodiment of this application. As shown in FIG. 11A, the electronic device 100 refreshes the displayed user interface based on a refresh frequency. For example, the refresh frequency is 60 Hz, and a refresh cycle is 16.67 ms. The (n-1)^{th} frame of image is displayed at a first refresh cycle. After the first refresh cycle ends, a controller of the electronic device 100 sends a Vsync signal. The Vsync signal may be used to trigger a display to refresh a display interface. When receiving the Vsync signal, an AP performs measurement layout and drawing on the (n+1)^{th} frame of image. After drawing the (n+1)^{th} frame of image, the AP sends drawing data of the (n+1)^{th} frame of image to a GPU. The GPU renders and synthesizes the (n+1)^{th} frame of image based on the drawing data, and writes, into an image buffer, data of the (n+1)^{th} frame of image obtained by using the rendering and synthesis. In addition, when receiving the Vsync signal, the display displays the nth frame of image based on data of the nth frame of image in the image buffer, and when receiving the next Vsync signal (that is, when a second refresh cycle ends), displays the (n+1)^{th} frame of image based on the data of the (n+1)^{th} frame of image in the image buffer.

It should be noted that the AP does not redraw an image after each Vsync signal is generated. The AP requests to receive a Vsync signal only when the AP needs to update the display interface, and starts to draw the next frame of image only after receiving the Vsync signal.

In some embodiments, the electronic device 100 receives a light compensation operation for front-facing photographing of a user, and the electronic device 100 refreshes the display interface to a photographing interface 11. The photographing interface 11 includes a light compensation region and a non-light compensation region. A light compensation layer is displayed on the light compensation region. Transparency of the light compensation layer is first transparency. Refer to FIG. 3A and FIG. 3B. The light compensation operation may alternatively be that the user taps the rectangular control 208B on the photographing interface 11. The first transparency is initial transparency of the light compensation layer. The first transparency may be preset by the user, or may be set by the electronic device 100 by default. Refer to FIG. 2A and FIG. 3N. The light compensation operation may alternatively be that the user taps the Camera icon 105F on the user interface 10.

A display principle of the photographing interface 11 is described by using the light compensation operation shown in FIG. 2A and FIG. 3N as an example.

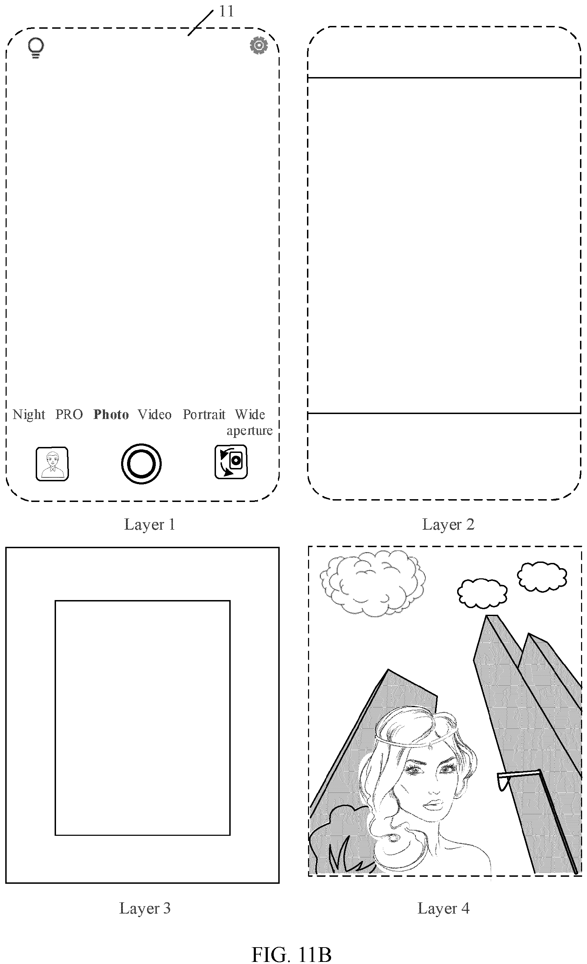

In some embodiments, after the electronic device 100 receives the light compensation operation shown in FIG. 2A, when the AP receives a Vsync, the AP performs traversal measurement on a length and a width of an object on the photographing interface 11. The AP performs traversal layout on a location, on the photographing interface 11, of the object on the photographing interface 11 based on a measurement result. The AP draws the object on the photographing interface 11 based on a layout result. The AP sends drawing data of the photographing interface 11 to the GPU. The GPU renders the object on the photographing interface 11 based on the drawing data sent by the AP, to generate four rendering layers shown in FIG. 11B. The four rendering layers include a layer 1 at which controls in the function region 1 and the function region 2 on the photographing interface 11 are located, a layer 2 at which backgrounds of the function region 1 and the function region 2 on the photographing interface 11 are located, a light compensation layer 3, and a layer 4 at which image data collected by the camera is located. The GPU synthesizes the four rendering layers. The GPU sends the synthesized image data to a buffer. When the display receives the next Vsync, the display displays the photographing interface 11 based on the synthesized data in the buffer. When the GPU synthesizes the four rendering layers, the light compensation layer 3 is superimposed on the layer 4 at which the image data collected by the camera is located and the layer 2 at which the backgrounds of the function region 1 and the function region 2 are located. The layer 1 at which the controls in the function region 1 and the function region 2 are located is superimposed on the light compensation layer 3.

In embodiments of this application, a software system of the electronic device 100 may use a layered architecture, an event-driven architecture, a micro kernel architecture, a micro service architecture, or a cloud architecture. In this embodiment of this application, an Android system of a layered architecture is used as an example to describe a software structure of the electronic device 100.

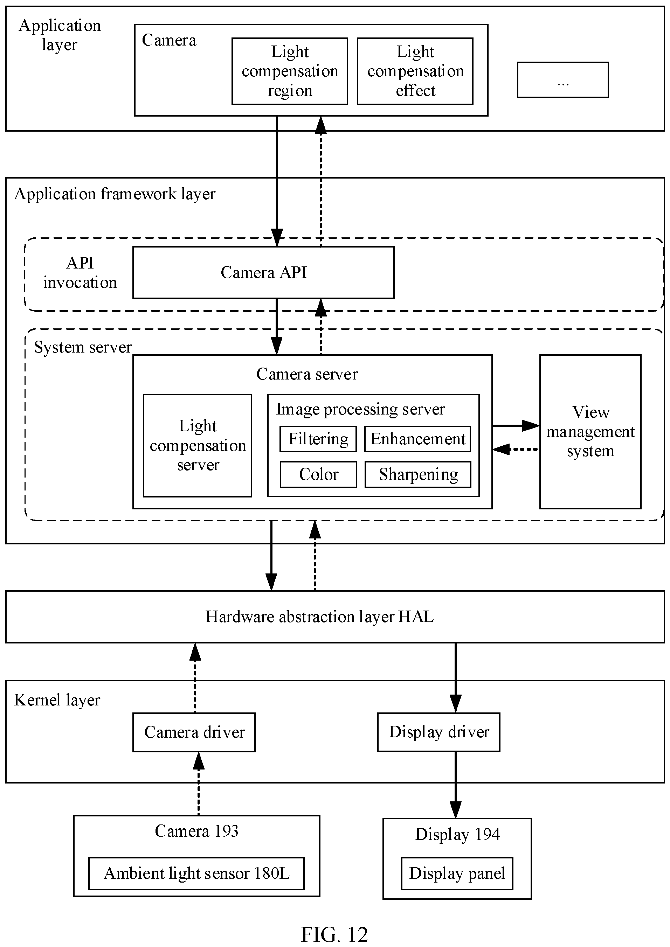

FIG. 12 shows a block diagram of an example of a software structure of the electronic device according to this embodiment of this application. The electronic device 100 may display a light compensation control on a front-facing photographing interface, determine one or more light compensation regions on the front-facing photographing interface by receiving a user operation performed on the light compensation control, and adjust a light compensation effect of a preview image based on a requirement of a user, to improve a light condition of a front-facing photographing environment, effectively improve image quality of front-facing photographing, and improve front-facing photographing experience of the user.

As shown in FIG. 12, a layered architecture divides software into several layers, each with a clear role and division of labor. The layers communicate with each other through a software interface. In some embodiments, an Android system may be divided into an application layer, an application framework layer, a hardware abstraction layer (hardware abstraction layer, HAL), and a kernel (kernel) layer from top to bottom.

The application layer includes a series of application packages, for example, Camera and Gallery. The application layer may further include another application that can enable the front-facing camera of the electronic device 100, for example, WeChat or TikTok.

The application framework layer provides an application programming interface (application programming interface, API) and a programming framework for an application at the application layer. The application framework layer includes some predefined functions.

As shown in FIG. 12, the application framework layer may mainly include the API and a system server (System Server). The API is for implementing communication between the application layer and the HAL layer and between the application layer and the kernel layer. For example, a camera API may provide communication between a camera application and the HAL layer and between the camera application and the kernel layer. The system server may include a camera server and a view management system. For example, the camera server may include a light compensation server, and an image processing server. The electronic device 100 may invoke a corresponding camera server by invoking the camera API. The camera server may send a related parameter of the camera server to the HAL layer by invoking an HAL interface of the camera. For example, the light compensation server and the image processing server are invoked through the camera API, and a related parameter (for example, ambient light luminance) of the light compensation server and a related parameter (for example, an identifier of an image processing algorithm) of the image processing server are sent to the HAL layer and the kernel layer, so that the HAL layer and the kernel layer perform a corresponding operation based on the foregoing related parameters. The view management system includes a visual control, such as a control for displaying a text or a control for displaying a picture. The view system may be configured to construct an application. A display interface may include one or more views. For example, the photographing interface 11 including a light compensation layer may include a view for displaying a picture (for example, the photographing control 201, a preview image, or the light compensation icon 207) and a view for displaying a text control (for example, the circular control 208A or the self-setting control 208D). For example, the camera server sends frame coordinates of the light compensation region and the transparency of the light compensation layer to the view management system. The view management system draws, based on the frame coordinates of the light compensation region or the non-light compensation region, the photographing interface 11 including the light compensation layer.

In this embodiment of this application, a motion detector (motion detector) may be further added to the application framework layer, to perform logical determining on an obtained input event and identify a type of the input event. For example, the motion detector determines, based on information such as touch coordinates and a timestamp of a touch operation included in the input event, that the input event is a knuckle touch event, a finger pad touch event, or the like. In addition, the motion detector may further record a track of the input event, determine a gesture rule of the input event, and respond to different operations based on different gestures.

The HAL layer and the kernel layer are configured to perform a corresponding operation in response to a function invoked by the system server at the application framework layer. The kernel layer is a layer between hardware and software. The kernel layer may include a camera driver and a display driver, and may further include an audio driver, a sensor driver, and the like. The display driver of the kernel layer displays the photographing interface 11 by using a hardware device (for example, the display 194), and a light compensation effect may be presented through the photographing interface 11. In some embodiments, the camera server periodically invokes the HAL layer by using a camera HAL interface. The HAL layer may determine, based on a light compensation algorithm, a real-time optimal light compensation intensity, the light compensation intensity 1, the light compensation intensity 2, the light compensation intensity 3, and the like of the electronic device 100. In some embodiments, only when the electronic device 100 receives the user operation of determining the light compensation effect, the camera server invokes the HAL layer to calculate the light compensation intensity corresponding to the light compensation effect determined by the user. The HAL layer may further send a related parameter of the image processing server based on the camera server, to process an image captured by the front-facing camera 193.

Based on the block diagram of the software structure shown in FIG. 12, the following describes in detail, by using an example, a light compensation method for photographing provided in an embodiment of this application.

First, the electronic device enables a camera application (or another application that can provide front-facing photographing). When the touch sensor 180K receives a touch operation, a corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and the event manager determines whether the touch coordinates are in the first region. If the touch coordinates are in the first region, a control corresponding to the original input event is identified. In an example in which the touch operation is a touch tap operation, and a control corresponding to the tap operation is a control of a camera application icon, the camera application invokes an interface of the application framework layer to enable the camera application, then enables the camera driver by invoking the kernel layer, and captures a static image or a video through the camera 193. Herein, for a manner of enabling the camera application, refer to related descriptions in the embodiment in FIG. 2A. As shown in FIG. 2A, the electronic device may display the control 105D shown in FIG. 2A on a screen, so that the user enables the camera application.

When capturing a static image or a video by using the front-facing camera 193, the electronic device 100 periodically obtains ambient light luminance by using the ambient light sensor 180L. The application framework layer obtains the ambient light luminance from the kernel layer, and sends the ambient light luminance to the camera application. The camera application invokes the light compensation server of the camera server through the camera API. The camera server sends a related parameter (including the ambient light luminance) of the light compensation server to the HAL layer. The HAL layer may invoke a light compensation algorithm to determine an optimal light compensation intensity, the light compensation intensity 1, the light compensation intensity 2, the light compensation intensity 3, and the like of front-facing photographing of the electronic device 100. The camera application obtains the optimal light compensation intensity, the light compensation intensity 1, the light compensation intensity 2, the light compensation intensity 3, and the like through the application framework layer.

Then, the electronic device 100 receives a user operation. The user operation is for determining a location of the light compensation region on the display 194. Refer to FIG. 4A to FIG. 4C. The user operation may alternatively be that after tapping the self-setting control 208D, the user slides on the display to draw a frame of the light compensation region. The kernel layer processes the user operation received by the touch sensor 180K into an original input event. The application framework layer obtains the original input event from the kernel layer, and determines the location of the light compensation region on the display 194. In some embodiments, the camera application invokes an interface of the application framework layer to enable a camera server, and sends frame coordinates of the light compensation region and transparency of the light compensation layer to the view management system by using the camera server, to invoke the view management system to draw the photographing interface 11 including the light compensation layer, and further invokes the kernel layer to enable the display driver, to drive the display to display, based on a drive current of each pixel in the light compensation region, the photographing interface 11 including the light compensation layer. The transparency of the light compensation layer and the drive current (or drive voltage) of each pixel in the light compensation region may be determined by the camera server based on the initial light compensation intensity of the light compensation region. This is not limited to determining the location of the light compensation region on the display 194 by using user operations shown in FIG. 4A to FIG. 4C. In embodiments of this application, the location of the light compensation region on the display 194 may be further determined by using another user operation. This is not specifically limited herein.

Then, the electronic device 100 receives a user operation. The user operation is for determining a light compensation effect of the light compensation region. For example, refer to FIG. 3D and FIG. 3E. The user operation may alternatively be that the user taps the beautification control 209B on the photographing interface 11 and then taps the control 301A. The kernel layer processes the user operation received by the touch sensor 180K into an original input event. The application framework layer obtains the original input event from the kernel layer, and determines that the light compensation effect of the light compensation region is the light compensation effect 1 (the light compensation effect 1 of the light compensation region includes the light compensation intensity 1 of the light compensation region, and may further include the image processing algorithm 2 of the preview image). The camera server determines the transparency of the light compensation layer and the drive current of each pixel in the light compensation region based on the light compensation intensity 1. The camera server invokes an HAL interface of the camera application. The HAL layer invokes, based on a related parameter (including an identifier of the image processing algorithm 2 corresponding to the preview image) sent by the camera server, the image processing algorithm 2 to process an image captured by the front-facing camera 193, and sends the processed preview image to the view management system. The view management system draws, based on transparency corresponding to the light compensation intensity 1 sent by the camera server and the preview image obtained by image processing, the photographing interface 11 including the light compensation layer. The view management system sends image data of the photographing interface 11 to the kernel layer. A display driver of the kernel layer displays the photographing interface by using a hardware device (for example, the display 194). The photographing interface may include the preview image obtained by image processing and the light compensation layer.

An embodiment of this application further provides a light compensation method for photographing. In the provided method, the electronic device 100 may intelligently adjust a light compensation effect of a flash, to improve a light condition of a photographing environment, meet users' diversified photographing requirements, and effectively improve users' photographing experience. The following describes the light compensation method in detail with reference to the accompanying drawings.

In some embodiments, an electronic device receives a first user operation, enables a photographing function in response to the first user operation, and displays a first interface corresponding to the photographing function.

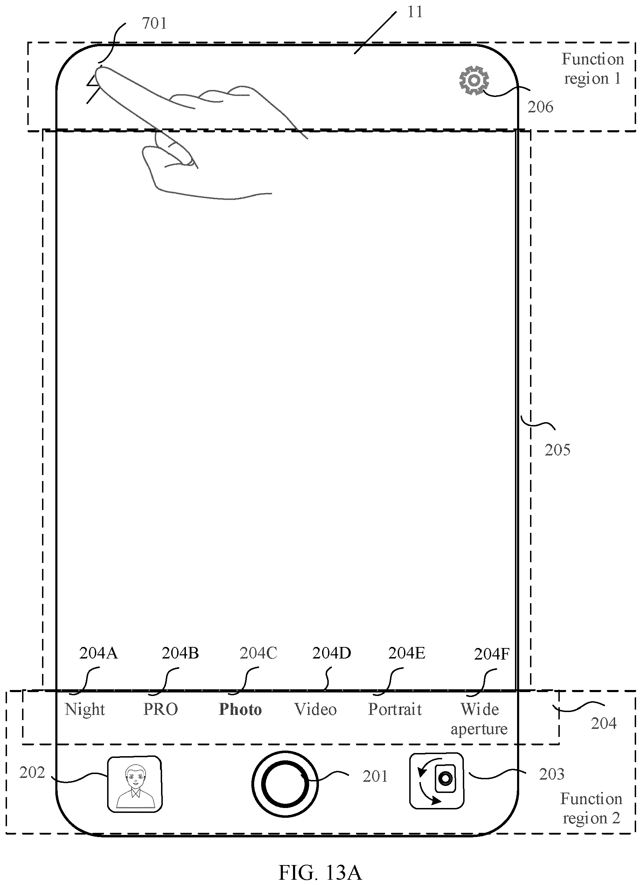

For example, as shown in FIG. 2A and FIG. 13A, the first user operation may be that the user may tap the Camera icon 105D on the user interface 10. The first interface may be the photographing interface 11. The electronic device 100 detects the first user operation. In response to the first user operation, the electronic device 100 enables a photographing function to display the photographing interface 11 of the camera.

The photographing interface 11 may include the photographing control 201, the album control 202, the camera switching control 203, the photographing mode 204, the display region 205, and the Settings icon 206.

The display region 205 may be used for displaying an image captured by a front-facing camera or a rear-facing camera (namely, a camera currently used for photographing) of the electronic device 100. The image may also be referred to as a preview image.

For example, as shown in FIG. 13A, the photographing interface 11 further includes a light compensation icon 701. The light compensation icon 701 may receive a user operation (for example, a touch operation). The electronic device 100 may display one or more light compensation controls in response to the detected user operation. The one or more light compensation controls are configured to adjust a light compensation mode of a flash. In some embodiments, the camera currently used by the electronic device 100 for photographing may be a rear-facing camera. The display region 205 is for displaying an image captured by the rear-facing camera of the electronic device 100. An illumination direction of the flash and a photographing direction of the rear-facing camera are on a same side of the electronic device 100. In some embodiments, the camera currently used by the electronic device 100 for photographing may be a front-facing camera. The display region 205 is for displaying an image captured by the front-facing camera of the electronic device 100. The illumination direction of the flash and a photographing direction of the front-facing camera are on a same side of the electronic device 100.

In some embodiments, after the electronic device 100 enables a photographing function, the electronic device 100 determines a light compensation intensity of the flash based on image luminance of the preview image, and adjusts luminance of the flash based on the light compensation intensity of the flash.

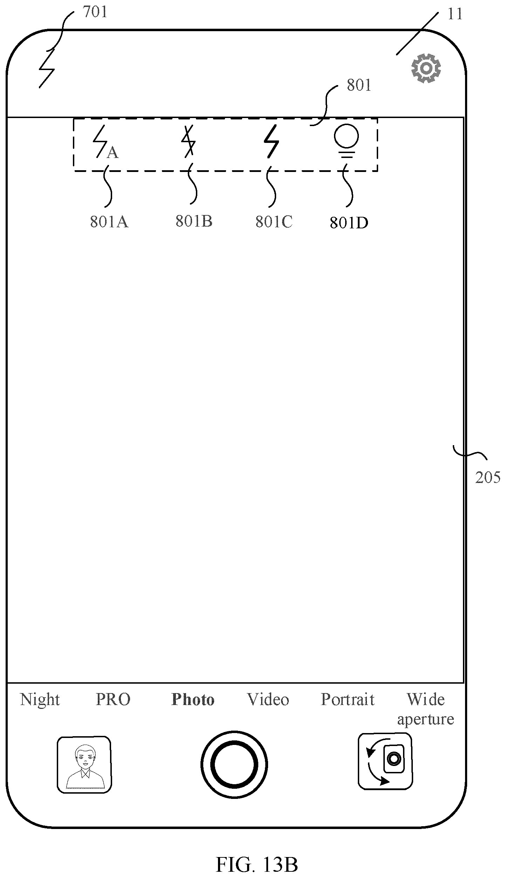

For example, as shown in FIG. 13A and FIG. 13B, the electronic device 100 may receive an input operation (for example, a touch operation) performed on the light compensation icon 701. The electronic device 100 may display a light compensation mode bar 801 in response to the input operation. The option bar 801 may include an automatic mode control 801A, an off mode control 801B, an on mode control 801C, and a steady-on mode control 801D.

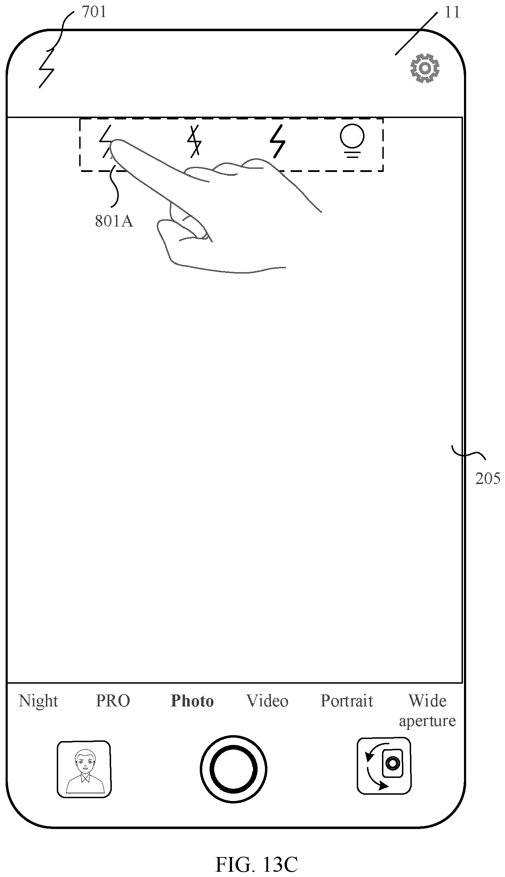

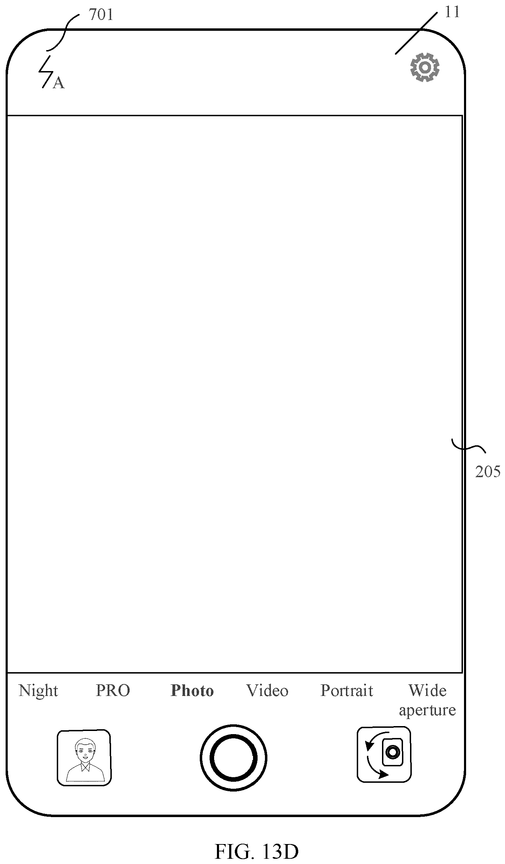

For example, as shown in FIG. 13C and FIG. 13D, in some embodiments, the automatic mode control 801A may receive a user operation (for example, a touch operation). The electronic device 100 determines, in response to the detected user operation, that the light compensation mode is an automatic mode. In response to the detected user operation, the electronic device 100 may stop displaying the light compensation mode bar 801, and change a display icon of the light compensation icon 701 to a display icon of the automatic mode control 801A.

It should be noted that, after the electronic device 100 determines that the light compensation mode is the automatic mode, when the electronic device 100 receives a photographing operation of a user (for example, the user taps the photographing control 201 on the photographing interface 11), in response to the detected user operation, the electronic device 100 collects a first image data by using the camera and saves the first image data as a photo. In addition, the electronic device 100 determines, based on ambient light luminance, whether to turn on the flash when the electronic device 100 collects the first image data by using the camera. In some embodiments, if the ambient light luminance is less than a second threshold, the electronic device 100 turns on the flash when the electronic device 100 collects the first image data by using the camera; or if the ambient light luminance is not less than the second threshold, the electronic device 100 does not turn on the flash. It may be understood that the electronic device 100 turns on the flash when the ambient light luminance is low, and does not turn on the flash when the ambient light luminance is high. In some embodiments, when the electronic device 100 determines that the flash needs to be turned on, the electronic device 100 determines that the light compensation intensity of the flash is a sixth light compensation intensity, and controls, based on the sixth light compensation intensity, display luminance after the flash is turned on. The sixth light compensation intensity may be set by the electronic device by default, or may be set by the user. The sixth light compensation intensity may be an optimal light compensation intensity of the flash. The optimal light compensation intensity may be determined based on the ambient light luminance. In some embodiments, the sixth light compensation intensity is determined based on the image luminance of the preview image. This is not specifically limited herein. For example, the second threshold is equal to 100.

In some embodiments, the electronic device 100 sets the light compensation mode to the automatic mode. Next time, after the electronic device 100 enables the photographing function, when the ambient light luminance is less than the second threshold, the electronic device 100 determines the light compensation intensity based on the image luminance of the preview image, and adjusts the luminance of the flash based on the light compensation intensity.

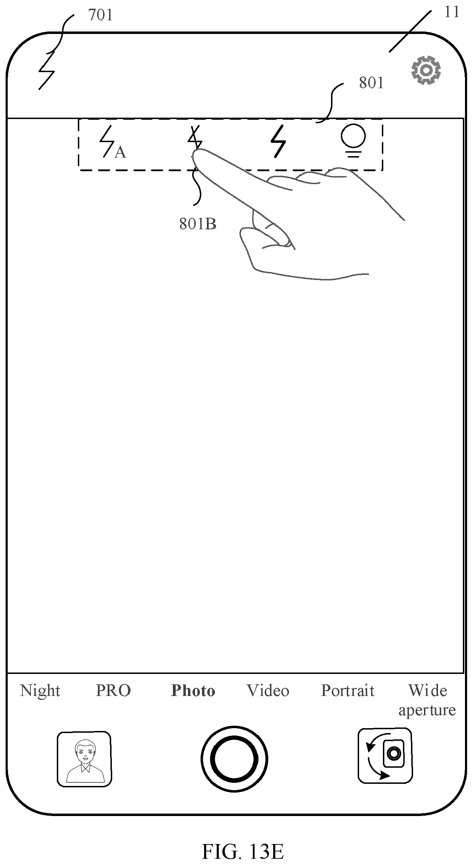

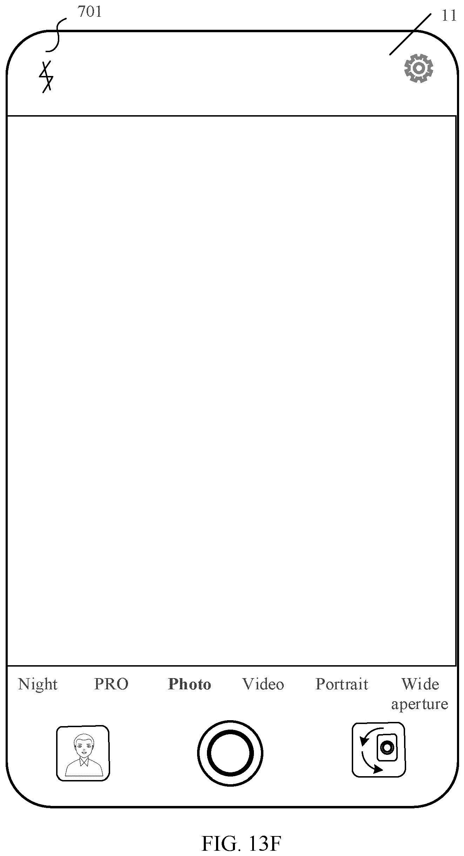

For example, as shown in FIG. 13E and FIG. 13F, the off mode control 801B may receive a user operation (for example, a touch operation). The electronic device 100 determines, in response to the detected user operation, that the light compensation mode is an off mode. In some embodiments, in response to the detected user operation, the electronic device 100 may stop displaying the light compensation mode bar 801, and change the display icon of the light compensation icon 701 to the display icon of the off mode control 801B. It should be noted that, after the electronic device 100 determines that the light compensation mode is the off mode, when the electronic device 100 receives a photographing operation of the user (for example, the user taps the photographing control 201 on the photographing interface 11), the electronic device 100 does not turn on the flash.

The on mode control 801C may receive a user operation (for example, a touch operation). The electronic device 100 determines, in response to the detected user operation, that the light compensation mode is an on mode. In some embodiments, in response to the detected user operation, the electronic device 100 may stop displaying the light compensation mode bar 801, and change the display icon of the light compensation icon 701 to a display icon of the on mode control 801C, for example, as shown in FIG. 13 A.

It should be noted that, after the electronic device 100 determines that the light compensation mode is the on mode, in response to the photographing operation received by the electronic device 100 (for example, the user taps the photographing control 201 on the photographing interface 11), when the electronic device 100 collects the first image data by using the camera, the electronic device 100 turns on the flash. In some embodiments, when turning on the flash, the electronic device 100 determines that the light compensation intensity of the flash is a sixth light compensation intensity, and controls, based on the sixth light compensation intensity, display luminance when the flash is turned on. The sixth light compensation intensity may be set by the electronic device by default, or may be set by the user. The sixth light compensation intensity may be an optimal light compensation intensity of the flash, or may be a maximum light compensation intensity of the flash. The optimal light compensation intensity may be determined based on the ambient light luminance. In some embodiments, the sixth light compensation intensity is determined based on the image luminance of the preview image. This is not specifically limited herein.

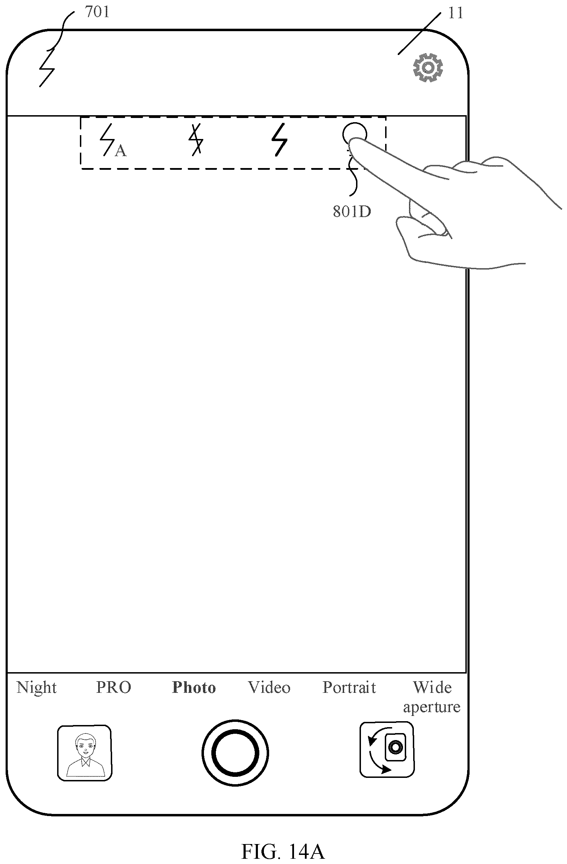

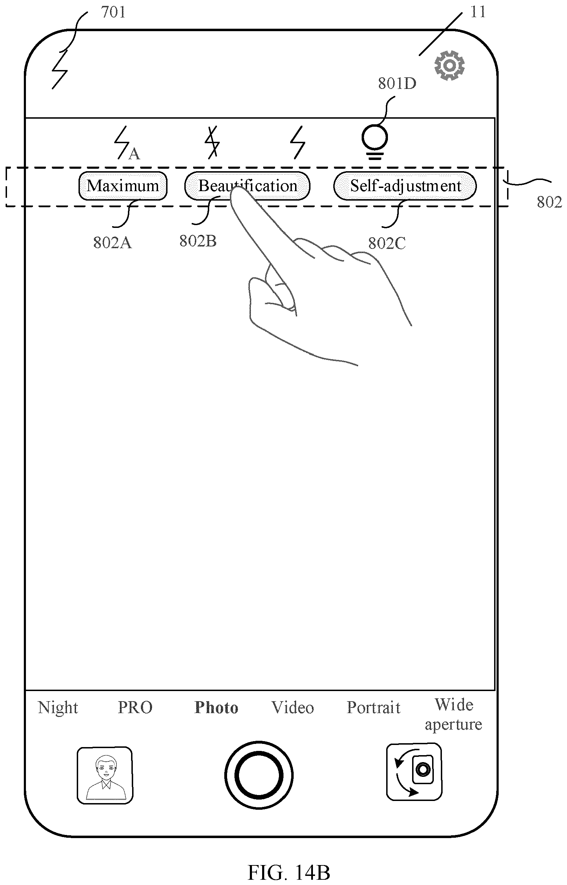

For example, as shown in FIG. 14A and FIG. 14B, the steady-on mode control 801D may receive a user operation (for example, a touch operation). The electronic device 100 displays a light compensation effect bar 802 in response to the detected user operation. The light compensation effect bar 802 may include a maximum control 802A, a main beautification control 802B, and a self-adjustment control 802C.

The maximum control 802A may receive a user operation (for example, a touch operation). The electronic device 100 adjusts a light compensation effect of a preview image in a display to a maximum light compensation effect in response to the detected user operation.

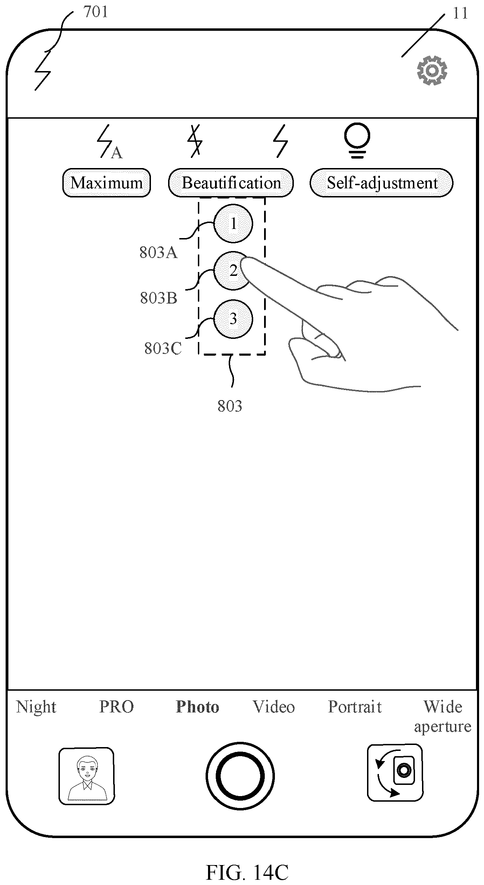

Refer to FIG. 14B and FIG. 14C. The main beautification control 802B may receive a user operation (for example, a touch operation). The electronic device 100 displays a beautification control bar 803 in response to the detected user operation. The beautification control bar 803 may include a beautification control 803A, a beautification control 803B, and a beautification control 803C.

The beautification control 803A may receive a user operation (for example, a touch operation). The electronic device 100 adjusts the light compensation effect of the preview image to a light compensation effect 1 in response to the detected user operation.

The beautification control 803B may receive a user operation (for example, a touch operation). The electronic device 100 adjusts the light compensation effect of the preview image to a light compensation effect 2 in response to the detected user operation.

The beautification control 803C may receive a user operation (for example, a touch operation). The electronic device 100 adjusts the light compensation effect of the preview image to a light compensation effect 3 in response to the detected user operation.

In this embodiment of this application, the main beautification control 802B may be referred to as a second control.

It should be noted that, light compensation intensities of the flash respectively corresponding to the light compensation effect 1, the light compensation effect 2, and the light compensation effect 3 may be the same or may be different. In some embodiments, light compensation effects corresponding to the beautification control 803A, the beautification control 803B, and the beautification control 803C may further separately include different image processing algorithms, that is, the light compensation effects corresponding to the beautification controls may cause image processing of different focuses on the preview image. The beautification controls are not limited to the beautification control 803A, the beautification control 803B, and the beautification control 803C. The beautification control bar 803 may further include another beautification control, which brings image processing of different focuses. The image processing algorithms may be an enhancement algorithm, a filtering algorithm, a color optimization algorithm, a sharpening algorithm, or the like of an image.

In some embodiments, the electronic device receives a seventh user operation. The electronic device determines the light compensation intensity based on the image luminance of the preview image in response to the received seventh user operation.

In some embodiments, the maximum control 802A, the beautification control 803A, the beautification control 803B, and the beautification control 803C include a third selection control and a fourth selection control. The third selection control corresponds to a first light compensation intensity, and the fourth selection control corresponds to a second light compensation intensity. The electronic device receives the seventh user operation performed on the third selection control. The electronic device determines, based on the image luminance of the preview image in response to the received seventh user operation, the first light compensation intensity corresponding to the third selection control.

In some embodiments, the maximum control 802A, the beautification control 803A, the beautification control 803B, and the beautification control 803C include the third selection control and the fourth selection control. The third selection control corresponds to the first light compensation intensity and a third image processing algorithm, and the fourth selection control corresponds to the second light compensation intensity and a fourth image processing algorithm. The electronic device receives the seventh user operation performed on the third selection control. The electronic device determines, based on the image luminance of the preview image in response to the received seventh user operation, the first light compensation intensity corresponding to the third selection control and performs, by using the third image processing algorithm, image processing on the preview image captured by the camera.

In some embodiments, before the third selection control is displayed on the photographing interface, the electronic device 100 further displays a second control on the photographing interface. The electronic device 100 receives an eighth user operation performed on the second control, and displays the third selection control on the first interface in response to the eighth user operation. The third selection control may be the maximum control 802A, the second control may be the steady-on mode control 801D shown in FIG. 14A, and the eighth operation may be the user operation performed on the steady-on mode control 801D shown in FIG. 14A. Alternatively, the third selection control may be the beautification control 803A, the second control may be the main beautification control 802B shown in FIG. 14B, and the eighth operation may be the user operation performed on the main beautification control 802B shown in FIG. 14B.

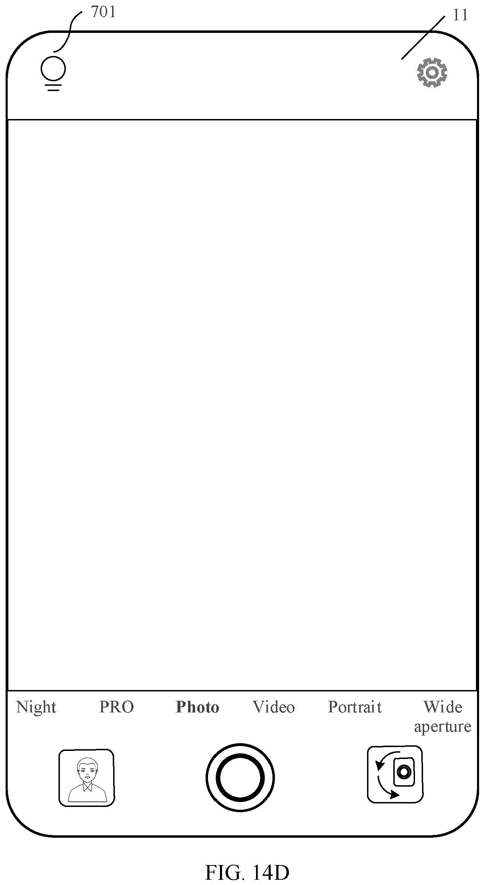

For example, as shown in FIG. 14C and FIG. 14D, in some embodiments, in response to a user operation performed on a beautification control (the beautification control 803A, the beautification control 803B, or the beautification control 803C), the electronic device 100 stops displaying the light compensation mode bar 801 and the light compensation effect bar 802, and changes the icon of the light compensation icon 701 to an icon of the steady-on mode control 801D.

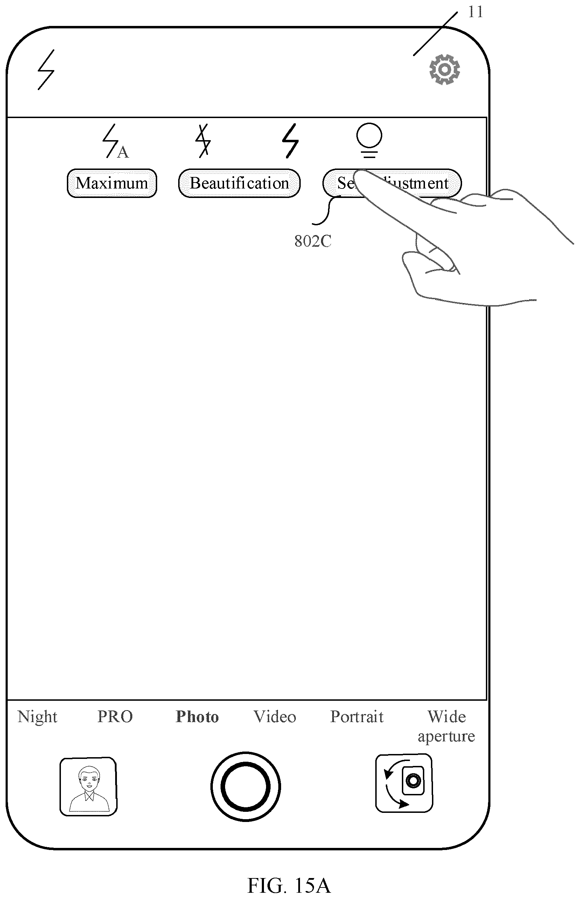

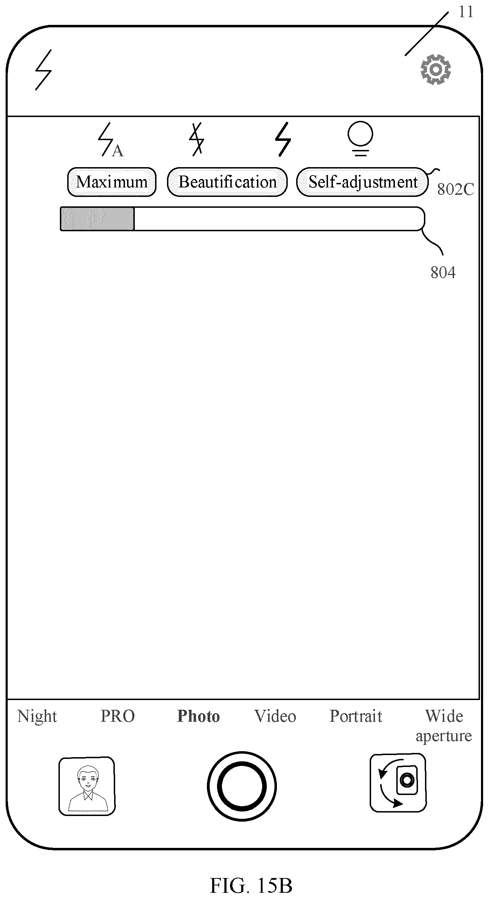

Refer to FIG. 15A and FIG. 15B. The self-adjustment control 802C may receive a user operation (for example, a touch operation). The electronic device 100 displays a luminance adjustment bar 804 in response to the detected user operation. A total length of the luminance adjustment bar 804 is for indicating a maximum light compensation intensity of the flash of the electronic device 100. A length of a shadow part of the luminance adjustment bar 804 is for indicating a current light compensation intensity of the flash. An initial length of the shadow part of the luminance adjustment bar 804 may be an optimal light compensation intensity, or may be another default initial value, which is not specifically limited herein. In some embodiments, in response to a user operation performed on the self-adjustment control 802C, the electronic device 100 may further perform image optimization on the preview image by using a specific image processing algorithm.

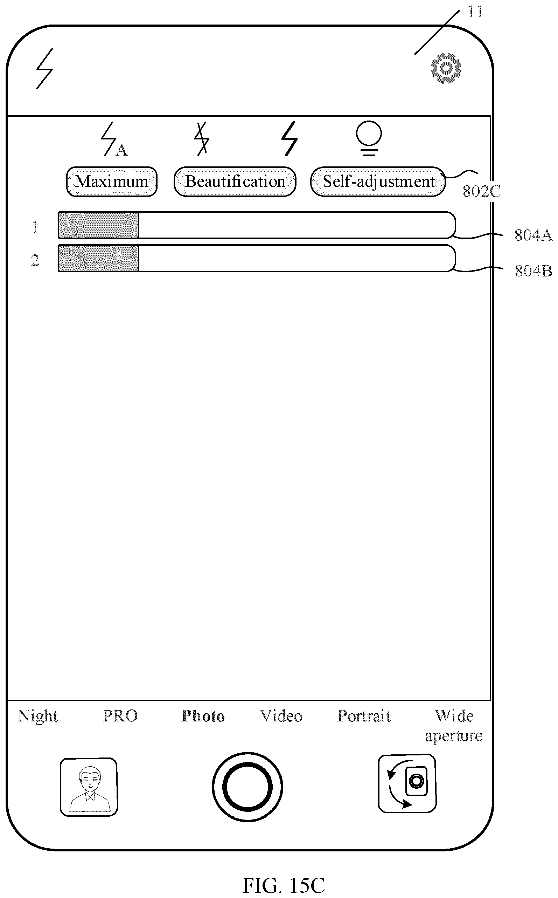

In some embodiments, the electronic device includes a plurality of flashes. The self-adjustment control 802C may receive a user operation (for example, a touch operation). The electronic device 100 displays, in response to the detected user operation, a luminance adjustment bar corresponding to each of the plurality of flashes. For example, the electronic device includes two flashes. As shown in FIG. 15C, the electronic device 100 displays, in response to the detected user operation, a luminance adjustment bar 804A corresponding to the flash 1 and a luminance adjustment bar 804B corresponding to the flash 2.

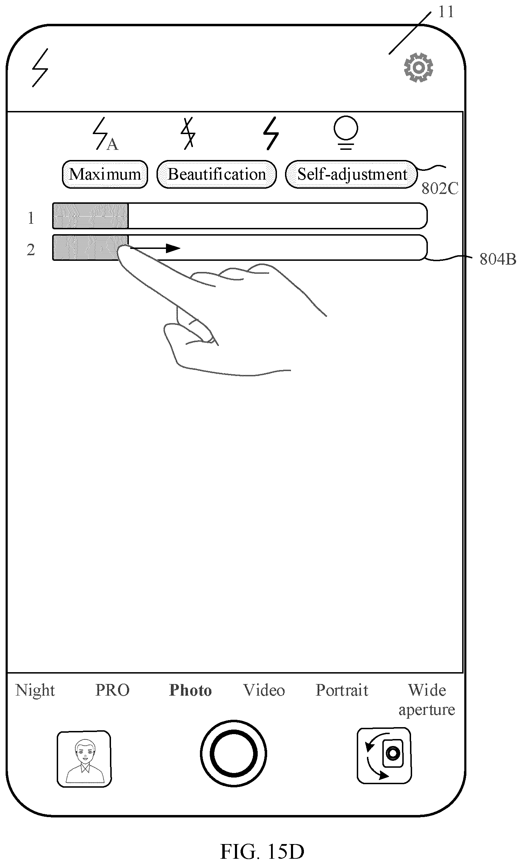

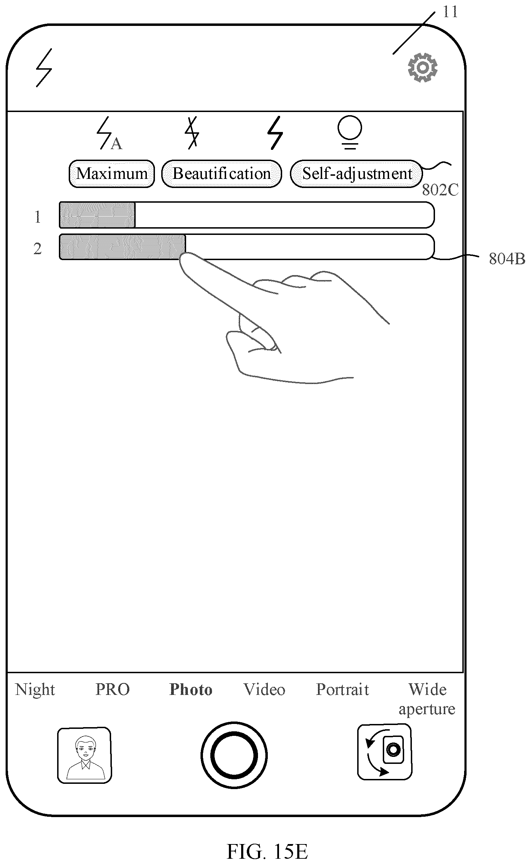

For example, as shown in FIG. 15D and FIG. 15E, the luminance adjustment bar 804B may receive a user operation. The electronic device 100 may adjust a length of a shadow part of the luminance adjustment bar 804B in response to the detected user operation, and adjust display luminance of the flash 2 based on a light compensation intensity indicated by the length of the shadow part. As shown in the figure, the user operation may be that a finger of a user slides on the luminance adjustment bar 804B by using the shadow part of the luminance adjustment bar 804B as a start point. In some embodiments, a minimum amplitude of a light compensation intensity that can be adjusted by the electronic device 100 by adjusting the luminance adjustment bar 804B in response to the user operation may be set by the electronic device 100 by default, or may be set by the user. For example, the light compensation intensity of the electronic device 100 ranges from 0 to 10, and the minimum amplitude is 1.

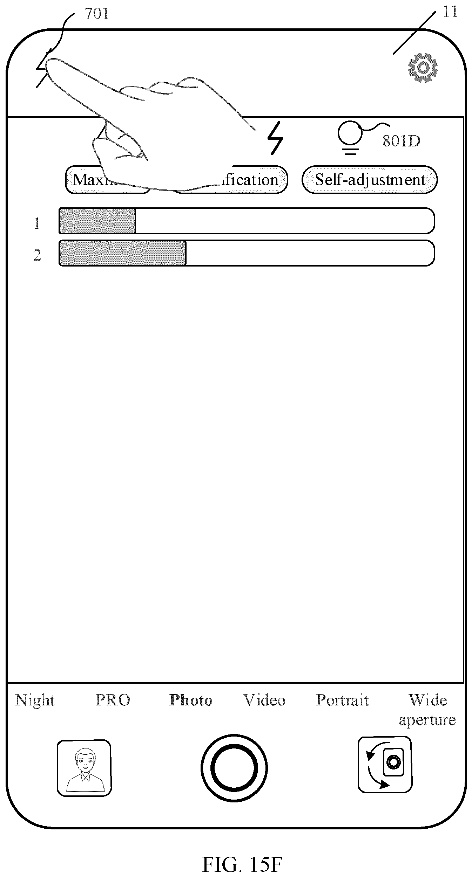

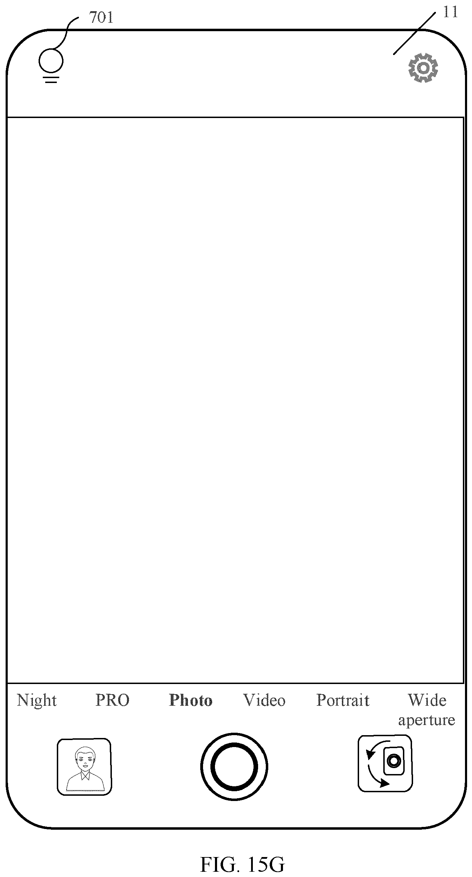

For example, as shown in FIG. 15F and FIG. 15G, after the user adjusts the luminance adjustment bar 804B, the light compensation icon 701 may receive a user operation. In response to the user operation, the electronic device 100 stops displaying the light compensation mode bar 801, the light compensation effect bar 802, and the luminance adjustment bar 804B, and changes the icon of the light compensation icon 701 to the icon of the steady-on mode control 801D.

It may be understood that, after it is determined, by using the maximum control 802A, the main beautification control 802B, or the self-adjustment control 802C, that the light compensation mode is a steady-on mode, the flash of the electronic device 100 may be kept on until a user operation for turning off the flash is received, or when a current camera application is exited, the electronic device 100 turns off the flash.

The following specifically describes how to adjust the light compensation effect of the preview image.

The electronic device 100 adjusts the light compensation effect of the preview image on the display to the maximum light compensation effect.

In some embodiments, the electronic device 100 includes M flashes. The light compensation effect of the preview image on the display is adjusted to the optimal light compensation effect, that is, a flash is turned on, and light compensation intensities of the M flashes of the electronic device 100 are adjusted to the maximum light compensation intensity based on the ambient light luminance. M is a positive integer greater than 0.

In some other embodiments, the light compensation effect of the preview image on the display is adjusted to the maximum light compensation effect, that is, the flash is turned on, the light compensation intensities of the M flashes of the electronic device 100 are adjusted to the maximum light compensation intensity based on the ambient light luminance, and the preview image displayed on the display region 205 is optimized by using the image processing algorithm 1. The image processing algorithm 1 may include processing such as enhancement, filtering, color optimization, and sharpening of an image. The image processing algorithm 1 is not limited to an image processing algorithm such as enhancement, filtering, color optimization, and sharpening. The image processing algorithm 1 may further combine another image processing algorithm. This is not specifically limited herein.

In some embodiments, the ambient light luminance is obtained based on the ambient light sensor 180L. When the ambient light luminance is less than the second threshold, the electronic device 100 adjusts the light compensation effect of the preview image on the display to the maximum light compensation effect. It may be understood that, only when the ambient light luminance reaches the second threshold, the electronic device 100 uses a flash to compensate light when the electronic device 100 displays the photographing interface 11.

The following specifically describes how to determine optimal light compensation intensities of the foregoing M flashes.

In some embodiments, the electronic device 100 determines a third light compensation intensity based on the ambient light luminance. Specifically, the electronic device 100 obtains the ambient light luminance G2 based on the ambient light sensor 180L, and determines the optimal light compensation intensities of the M flashes based on the ambient light luminance G2, the light sensing range (for example, 0 to a maximum light sensing value G1) of the ambient light sensor 180L, the light compensation range (for example, 0 to the maximum light compensation intensity B1) of the electronic device 100. For example, if the maximum light sensing value G1 of the electronic device 100 is 1000, the maximum light compensation intensity B 1 is 10, and the current ambient light luminance G2 obtained by the ambient light sensor 180L of the electronic device 100 is 50, the electronic device 100 determines that the third light compensation intensity B2 is (1-G1/G2)*B1, namely, 9.5. The electronic device 100 determines that an optimal light compensation intensity of each of the M flashes is the third light compensation intensity B2.

In some embodiments, the electronic device 100 divides the display region 205 into M regions based on distribution locations of the M flashes on the electronic device. The M flashes one-to-one correspond to the M regions. It may be understood that a first flash in the M flashes corresponds to a first region of the M regions. Because of location distribution of the first flash, the first flash focuses more on supplementing light for the first region. Any two of the M regions may overlap, or may not overlap. This is not specifically limited herein.

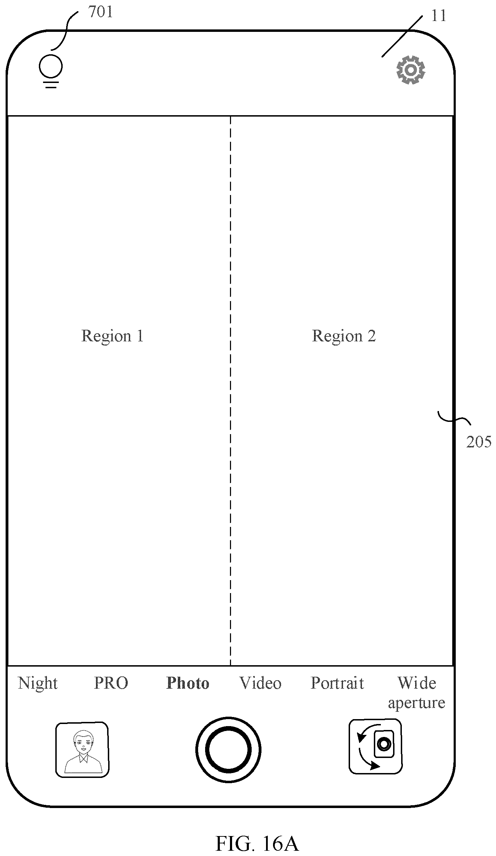

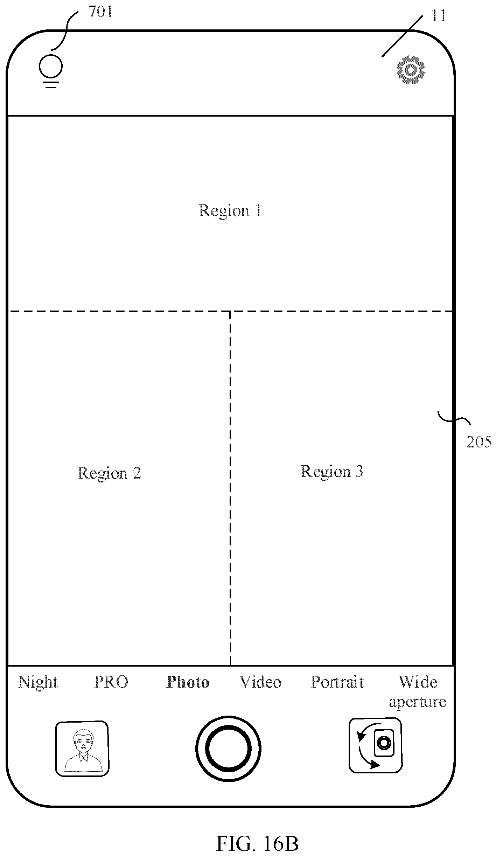

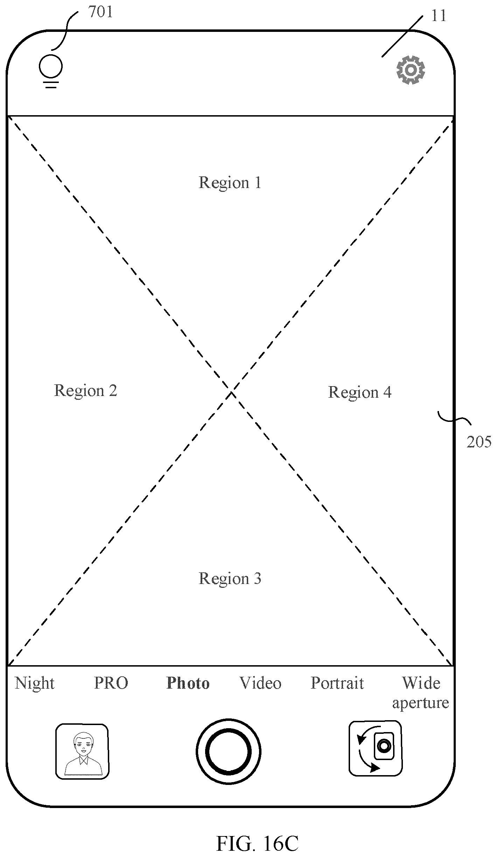

For example, M is equal to 2, and distribution locations of two flashes of the electronic device 100 are shown in FIG. 1C. As shown in FIG. 16A, the electronic device 100 divides the display region 205 into a region 1 and a region 2 based on the distribution locations of the two flashes. For example, M is equal to 3, and distribution locations of three flashes of the electronic device 100 are shown in FIG. 1D. As shown in FIG. 16B, the electronic device 100 divides the display region 205 into a region 1, a region 2, and a region 3 based on the distribution locations of the three flashes. For example, M is equal to 4, and distribution locations of four flashes of the electronic device 100 are shown in FIG. 1E. As shown in FIG. 16C, the electronic device 100 divides the display region 205 into a region 1, a region 2, a region 3, and a region 4 based on the distribution locations of the four flashes. It may be understood that FIG. 16A to FIG. 16C are merely examples of descriptions of the M regions corresponding to the M flashes. For a same quantity of flashes, the display region 205 may be divided into the M regions in another manner. This is not specifically limited herein.

It may be understood that, when the user performs photographing, a target object may be located in different orientations of the electronic device 100, and the target object in the preview image may be located in some of the M regions. Based on a location of the target object in the preview image, the electronic device 100 may mainly supplement light for the target object by using a flash that illuminates the target object.

In some embodiments, the electronic device 100 obtains the ambient light luminance by using the ambient light sensor 180L, and determines a fifth light compensation intensity based on the ambient light luminance, the light sensing range of the ambient light sensor 180L, and the light compensation range of the electronic device 100. In addition, the electronic device 100 determines, based on the image data collected by the camera, the target object and an area occupied by a target image in each of the M regions, and determines, based on the fifth light compensation intensity and the area occupied by the target image in each of the M regions, optimal light compensation intensities of the M flashes that respectively correspond to the M regions. In an embodiment, the electronic device 100 determines that an optimal light compensation intensity of a flash corresponding to a region with the largest area that is occupied by the target image is the fifth light compensation intensity plus the first value; determines that an optimal light compensation intensity of a flash corresponding to a region with an area that is occupied by the target image and that is not the largest and is not equal to zero is the fifth light compensation intensity; and determines that an optimal light compensation intensity of a flash corresponding to a region with an area that is occupied by the target image and that is equal to zero is the fifth light compensation intensity minus the first value. For example, the first value is equal to 1.

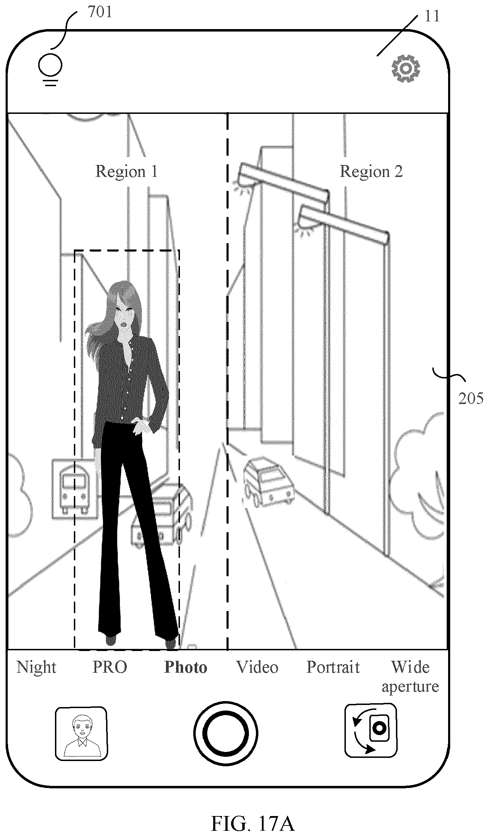

For example, as shown in FIG. 17A, M is equal to 2. The electronic device 100 identifies the target object as a person in a check box, and determines that the target object is entirely located in the region 1. In other words, an area of the target image located in the region 1 is greater than an area of the target image located in the region 2, and the area of the target image located in the region 2 is 0. The electronic device 100 determines that an optimal light compensation intensity of a flash 1 corresponding to the region 1 is the fifth light compensation intensity plus the first value, and an optimal light compensation intensity of a flash 2 corresponding to the region 2 is the fifth light compensation intensity minus the first value.

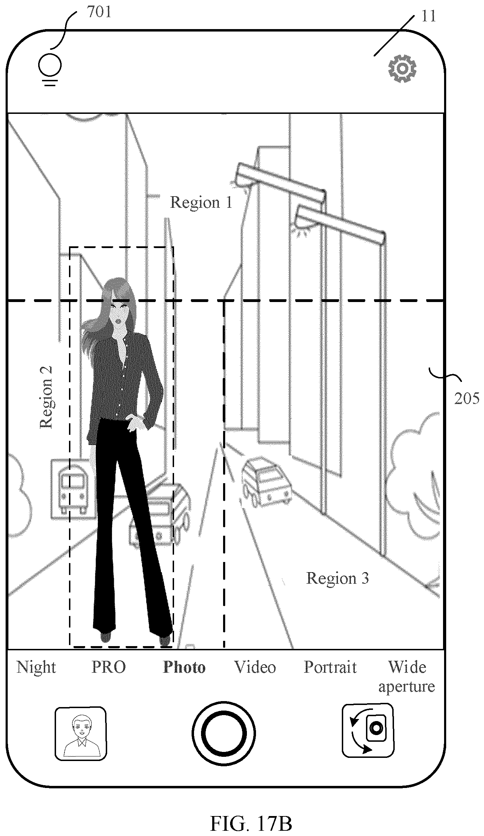

For example, as shown in FIG. 17B, M is equal to 3. The electronic device 100 identifies that the target object is the person in the check box, and determines that an area of the target image located in the region 2 is greater than an area of the target image located in the region 1, areas of the target image located in the region 1 and the region 2 are not equal to 0, and an area of the target image located in the region 3 is 0. The electronic device 100 determines that an optimal light compensation intensity of a flash 2 corresponding to the region 2 is the fifth light compensation intensity plus the first value, an optimal light compensation intensity of a flash 1 corresponding to the region 1 is the fifth light compensation intensity, and an optimal light compensation intensity of a flash 3 corresponding to the region 3 is the fifth light compensation intensity minus the first value.

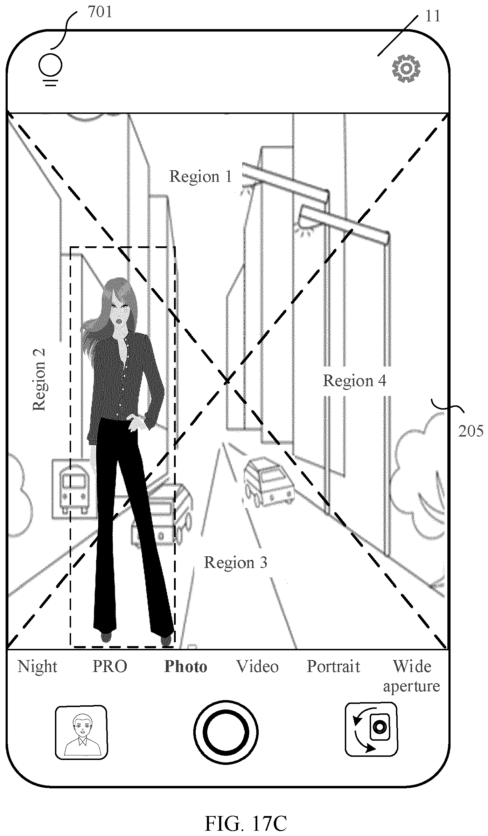

For example, as shown in FIG. 17C, M is equal to 4. The electronic device 100 identifies that the target object is the person in the check box, and determines that an area of the target image located in the region 2 is greater than an area of the target image located in the region 3, areas of the target image located in the region 2 and the region 3 are not equal to 0, and areas of the target image located in the region 1 and the region 4 are 0. The electronic device 100 determines that an optimal light compensation intensity of a flash 2 corresponding to the region 2 is the fifth light compensation intensity plus the first value, an optimal light compensation intensity of a flash 3 corresponding to the region 3 is the fifth light compensation intensity, and an optimal light compensation intensity of a flash 1 corresponding to the region 1 and an optimal light compensation intensity of a flash 4 corresponding to the region 4 are the fifth light compensation intensity minus the first value.

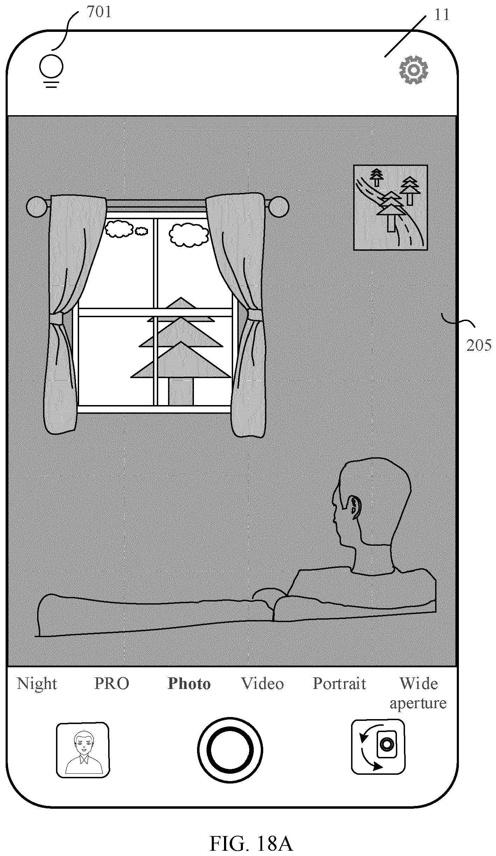

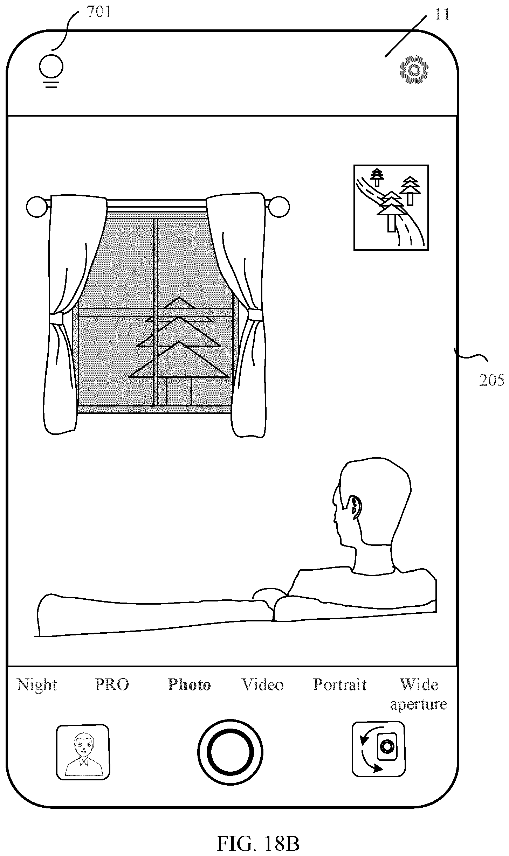

In a photographing scenario, for example, as shown in FIG. 18A, the user performs photographing indoors, there is a window on a wall of a room, indoor light is dark, and light outside the window is bright. The electronic device 100 determines, by using the ambient light sensor 180L, that the ambient light luminance is low. However, in a preview image of the electronic device 100, image luminance of a region in which the window is located is high, and image luminance of a region outside the window is low. Therefore, supplementing light for the preview image based on the fifth light compensation intensity that is determined by the ambient light luminance may cause overexposure to the region in which the window is located. In another photographing scenario, for example, as shown in FIG. 18B, the user performs photographing indoors, there is a window on the wall of the room, the indoor light is bright, and the light outside the window is dark. The electronic device 100 determines, by using the ambient light sensor 180L, that the ambient light luminance is high. However, in the preview image of the electronic device 100, the image luminance of the region in which the window is located is low, and the image luminance of the region outside the window is high. Therefore, when light is supplemented for the preview image based on the fifth light compensation intensity, the light compensation intensities of the foregoing M flashes are small, and even equal to 0, and consequently, light compensation cannot be properly performed for the region in which the window is located. It may be understood that, in some embodiments, the ambient light sensor 180L measures ambient light luminance near the electronic device 100, and cannot truly reflect ambient light luminance of a framing region (a region corresponding to the preview image) in a viewfinder frame.

In some embodiments, the electronic device 100 obtains the ambient light luminance based on the ambient light sensor 180L, and determines the third light compensation intensity based on the ambient light luminance. In addition, the electronic device 100 determines, through image analysis, image luminance of the preview image in each of the M regions based on the image data collected by the camera, and determines a fourth light compensation intensity of each region based on the image luminance of each region. Then, when a difference between the fourth light compensation intensity and the third light compensation intensity of the first region in the M regions is greater than the first threshold, the electronic device 100 determines that an optimal light compensation intensity of the first region is the fourth light compensation intensity corresponding to the region. Alternatively, when the difference between the fourth light compensation intensity and the third light compensation intensity of the first region in the M regions is not greater than the first threshold, the electronic device 100 determines that the optimal light compensation intensity of the first region is the third light compensation intensity. The electronic device 100 may store a correspondence between the image luminance and the fourth light compensation intensity.

In an implementation, the third light compensation intensity is equal to the fifth light compensation intensity. In another implementation, the third light compensation intensity is determined based on the fifth light compensation intensity and an area occupied by the target image in each of the M regions. For details, refer to related embodiments in FIG. 17A to FIG. 17C.

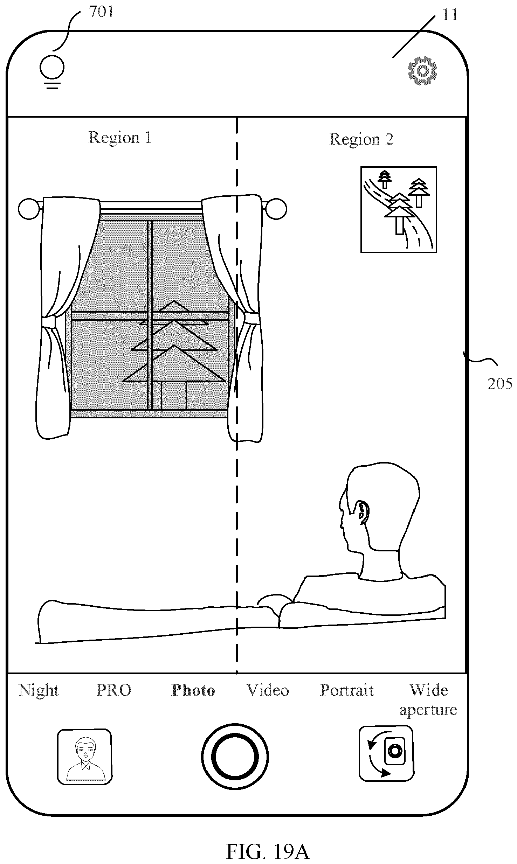

For example, as shown in FIG. 19A, M is equal to 2. After the electronic device 100 determines that a difference between the fourth light compensation intensity and the third light compensation intensity of the region 1 is greater than the first threshold, and a difference between the fourth light compensation intensity and the third light compensation intensity of the region 2 is less than or equal to the first threshold, the electronic device 100 determines that the optimal light compensation intensity of the flash 1 corresponding to the region 1 is the fourth light compensation intensity of the region 1, and the optimal light compensation intensity of the flash 2 corresponding to the region 2 is the third light compensation intensity.

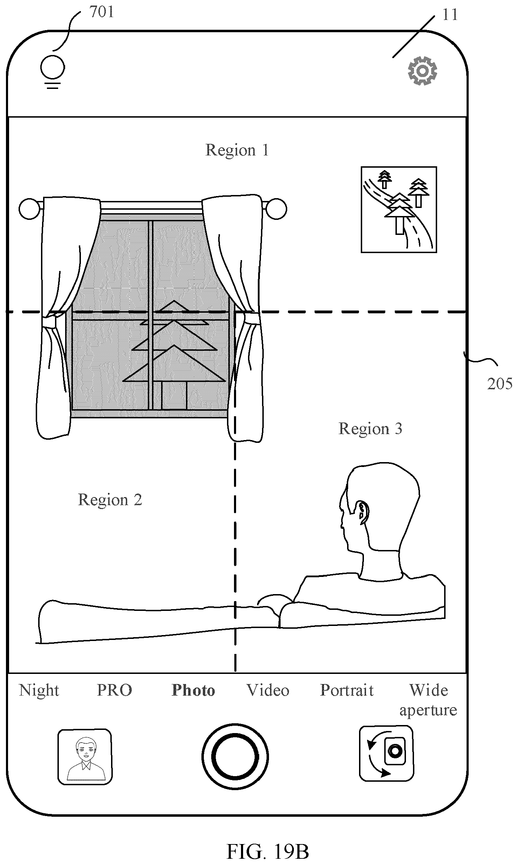

For example, as shown in FIG. 19B, M is equal to 3. After the electronic device 100 determines that a difference between the fourth light compensation intensity and the third light compensation intensity of the region 1 and a difference between the fourth light compensation intensity and the third light compensation intensity of the region 2 are greater than the first threshold, and a difference between the fourth light compensation intensity and the third light compensation intensity of the region 3 is less than or equal to the first threshold, the electronic device 100 determines that the optimal light compensation intensity of the flash 1 corresponding to the region 1 is the fourth light compensation intensity of the region 1, the optimal light compensation intensity of the flash 2 corresponding to the region 2 is the fourth light compensation intensity of the region 2, and the optimal light compensation intensity of the flash 3 corresponding to the region 3 is the third light compensation intensity.

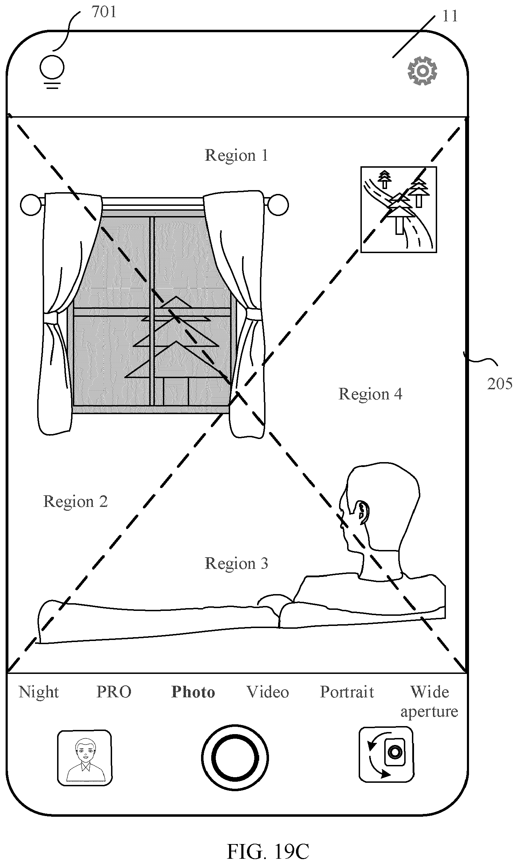

For example, as shown in FIG. 19C, M is equal to 4. After the electronic device 100 determines that a difference between the fourth light compensation intensity and the third light compensation intensity of the region 1 and a difference between the fourth light compensation intensity and the third light compensation intensity of the region 2 are greater than the first threshold, and a difference between the fourth light compensation intensity and the third light compensation intensity of the region 3 and a difference between the fourth light compensation intensity and the third light compensation intensity of the region 4 are less than or equal to the first threshold, the electronic device 100 determines that the optimal light compensation intensity of the flash 1 corresponding to the region 1 is the fourth light compensation intensity of the region 1, the optimal light compensation intensity of the flash 2 corresponding to the region 2 is the fourth light compensation intensity of the region 2, and both the optimal light compensation intensity of the flash corresponding to the region 3 and the optimal light compensation intensity of the flash corresponding to the region 4 are the third light compensation intensity.

It should be noted that a luminance attribute corresponding to each pixel in an image is unrelated to a color, and a value range of the luminance attribute may be 0 to 255. Luminance of a pixel close to 255 is high, and luminance of a pixel close to 0 is low. The luminance attribute of each pixel may be reflected in an HSV (Hue, Saturation, Value, hue, saturation, and luminance) color space of the image. The HSV color space uses an HSV model, and color parameters of each pixel in the image recorded in the model include hue, saturation, and luminance. In some embodiments, the electronic device 100 may convert the preview image from an RGB (Red, Green, Blue, red, green, blue) color space into the HSV color space, and may obtain luminance parameters of each pixel in the preview image in the HSV color space, to determine image luminance of each region of the M regions based on luminance parameters of each pixel in the region. In addition to the foregoing manner of determining the image luminance of each region, the image luminance of each region may be determined in another manner. This is not specifically limited herein.

In some embodiments, the electronic device 100 obtains the ambient light luminance by using the ambient light sensor 180L, and determines the optimal light compensation intensities of the M flashes based on the ambient light luminance, the light sensing range of the ambient light sensor 180L, the light compensation range of the electronic device 100, and the exposure value of the camera 193 during photographing.

In embodiments of this application, the manner of determining the optimal light compensation intensity is not limited, and there may be another manner. This is not specifically limited herein.

In some embodiments, the electronic device 100 obtains the ambient light luminance by using the ambient light sensor 180L, and determines the third light compensation intensity based on the ambient light luminance, the light sensing range of the ambient light sensor 180L, and the light compensation range of the electronic device 100. In addition, the electronic device 100 determines, based on the image data collected by the camera, the target object and the area occupied by the target image in each of the M regions, and determines, based on the third light compensation intensity, the area occupied by the target image in each of the M regions, and the image luminance of the preview image in each of the M regions, the optimal light compensation intensities of the M flashes that respectively correspond to the M regions. In an embodiment, the electronic device 100 determines that an eighth light compensation intensity of a flash corresponding to a region with the largest area that is occupied by the target image is the third light compensation intensity plus the first value; determines that an eighth light compensation intensity of a flash corresponding to a region with an area that is occupied by the target image and that is not the largest and is not equal to zero is the third light compensation intensity; and determines that an eighth light compensation intensity of a flash corresponding to a region with an area that is occupied by the target image and that is equal to zero is the third light compensation intensity minus the first value. Then, the electronic device determines the fourth light compensation intensity of each region based on the image luminance of each region. When a difference between the fourth light compensation intensity and an eighth light compensation intensity of the first region in the M regions is greater than the first threshold, the electronic device 100 determines that the optimal light compensation intensity of the first region is the fourth light compensation intensity corresponding to the region. Alternatively, when the difference between the fourth light compensation intensity and the eighth light compensation intensity of the first region in the M regions is not greater than the first threshold, the electronic device 100 determines that the optimal light compensation intensity of the first region is the eighth light compensation intensity. The electronic device 100 may store a correspondence between the image luminance and the fourth light compensation intensity.

The electronic device 100 adjusts the light compensation effect of the preview image on the display to the light compensation effect corresponding to the beautification control.

In some embodiments, the light compensation effect of the preview image is adjusted to the light compensation effect 1, that is, the flash is turned on, and a light compensation intensity of each of the M flashes is adjusted to the light compensation intensity 1 based on the ambient light luminance. In some other embodiments, the light compensation effect of the preview image is adjusted to the light compensation effect 1, that is, the flash is turned on, the light compensation intensity of each of the M flashes is adjusted to the light compensation intensity 1 based on the ambient light luminance, and image processing is performed on the preview image displayed on the display region 205 by using the image processing algorithm 2. The image processing algorithm 2 may include one of image processing algorithms such as an enhancement algorithm, a filtering algorithm, a color optimization algorithm, or a sharpening algorithm, for example, an enhancement algorithm of the image.

In some embodiments, the light compensation effect of the preview image is adjusted to the light compensation effect 2, that is, the flash is turned on, and the light compensation intensity of each of the M flashes is adjusted to the light compensation intensity 2 based on the ambient light luminance. In some other embodiments, the light compensation effect of the preview image is adjusted to the light compensation effect 2, that is, the flash is turned on, the light compensation intensity of each of the M flashes is adjusted to the light compensation intensity 2 based on the ambient light luminance, and image processing is performed on the preview image displayed on the display region 205 by using the image processing algorithm 3. The image processing algorithm 3 may include one of image processing algorithms such as an enhancement algorithm, a filtering algorithm, a color optimization algorithm, or a sharpening algorithm, for example, a filtering algorithm of the image.

In some embodiments, the light compensation effect of the preview image is adjusted to the light compensation effect 3, that is, the flash is turned on, and the light compensation intensity of each of the M flashes is adjusted to the light compensation intensity 3 based on the ambient light luminance. In some other embodiments, the light compensation effect of the preview image is adjusted to the light compensation effect 3, that is, the flash is turned on, the light compensation intensity of each of the M flashes is adjusted to the light compensation intensity 3 based on the ambient light luminance, and image processing is performed on the preview image displayed on the display region 205 by using the image processing algorithm 4. The image processing algorithm 4 may include one of image processing algorithms such as an enhancement algorithm, a filtering algorithm, a color optimization algorithm, or a sharpening algorithm, for example, a color optimization algorithm of the image.

It should be noted that different light compensation effects may correspond to a same light compensation intensity or different light compensation intensities of the flashes. Light compensation effects of different beautification controls correspond to image processing algorithms with different focuses. In some embodiments, the electronic device 100 stores a correspondence between a light compensation intensity of a flash and a drive current of the flash. The electronic device 100 may determine the drive current of the flash based on the light compensation intensity of the flash.

The following specifically describes how to determine a light compensation effect corresponding to a beautification control. The light compensation effect corresponding to the beautification control includes the light compensation intensity of the light compensation region 211 and the image processing algorithm of the preview image.

In some embodiments, the image processing algorithm 2, the image processing algorithm 3, and the image processing algorithm 4 are different. The three image processing algorithms may include one of image processing algorithms such as an enhancement algorithm, a filtering algorithm, a color optimization algorithm, or a sharpening algorithm. The electronic device 100 determines that the light compensation intensity 1, the light compensation intensity 2, and the light compensation intensity 3 of each flash are all equal to the optimal light compensation intensity of the flash. For how to determine the optimal light compensation intensity of each flash of the electronic device 100, refer to the foregoing embodiments. Details are not described herein again.

In some embodiments, after determining the image processing algorithm 2, the image processing algorithm 3, and the image processing algorithm 4, the electronic device 100 determines, based on an image processing algorithm corresponding to a light compensation effect, a light compensation intensity corresponding to the light compensation effect. For example, the image processing algorithm 2 corresponding to the beautification control 801A is color optimization. Excessively strong ambient light affects color optimization. If the optimal light compensation intensity of the flash 1 is greater than the first preset value, the light compensation intensity 1 corresponding to the light compensation effect 1 of the flash 1 is equal to the optimal light compensation intensity minus a preset difference. Alternatively, if the optimal light compensation intensity is not greater than the first preset value, the light compensation intensity 1 is equal to the optimal light compensation intensity.

In some embodiments, the electronic device 100 determines the light compensation intensity 1, the light compensation intensity 2, and the light compensation intensity 3 of the flash based on the optimal light compensation intensity of the flash. When the optimal light compensation intensity B2 is greater than B 1-x, it is determined that the light compensation intensity 1 of the flash is equal to B2-x, the light compensation intensity 2 of the flash is equal to B2-2*x, and the light compensation intensity 3 of the flash is equal to B2-3 *x, where x is the preset difference. If the optimal light compensation intensity B2 is less than B 1-x and is greater than or equal to B 1-2*x, it is determined that the light compensation intensity 1 of the flash is equal to B2+x, the light compensation intensity 2 of the flash is equal to B2-x, and the light compensation intensity 3 of the flash is equal to B2-2*x. If the optimal light compensation intensity B2 is less than B1-2^{∗}x and is greater than or equal to B1-3^{∗}x, it is determined that the light compensation intensity 1 of the flash is equal to B2+2*x, the light compensation intensity 2 of the flash is equal to B2+x, and the light compensation intensity 3 of the flash is equal to B2-x. Then, the electronic device 100 determines, based on an average value of light compensation intensities 1, an average value of light compensation intensities 2, and an average value of light compensation intensities 3 of the flashes, image processing algorithms corresponding to light compensation intensities of different light compensation effects. For example, the average value of the light compensation intensities 1 of the flashes is greater than the average value of the light compensation intensities 2, and the average value of the light compensation intensities 2 of the flashes is greater than the average value of the light compensation intensities 3. Then, the electronic device 100 determines that an image processing algorithm corresponding to the strong light compensation intensity 1 is a sharpening algorithm, because sufficient light helps improve a sharpening processing effect of the preview image; an image processing algorithm corresponding to the moderate light compensation intensity 2 is a color optimization algorithm, because exposure caused by over-bright images and color dimness caused by over-dark images are unfavorable to the color optimization algorithm; and an image processing algorithm corresponding to the low light compensation intensity 3 is an enhancement algorithm, because an image enhancement algorithm can effectively optimize a quality of the preview image when the light is insufficient, making the dark preview image clearer.

In some embodiments, as shown in FIG. 1E, the electronic device includes four flashes. The electronic device 100 may create different light compensation effects by adjusting light compensation intensities of the flashes. For example, a light compensation effect corresponding to a light compensation effect 1 is morning light, a light compensation effect corresponding to a light compensation effect 2 is sunset light, and a light compensation effect corresponding to a light compensation effect 3 is horizontal light. In an embodiment, when a light compensation intensity 1 of a flash 1 corresponding to the light compensation effect 1 (the morning light) is a maximum light compensation intensity, light compensation intensities 1 of a flash 2, a flash 3, and a flash 4 are equal to a second value. When a light compensation intensity 2 of the flash 3 corresponding to the light compensation effect 2 (the sunset light) is the maximum light compensation intensity, light compensation intensities 2 of the flash 1, the flash 2, and the flash 4 are equal to the second value. When light compensation intensities 3 of the flash 2 and the flash 4 corresponding to the light compensation effect 3 (the horizontal light) are the maximum light compensation intensity, light compensation intensities 3 of the flash 1, the flash 2, and the flash 4 are equal to the second value. The second value is equal to zero or a small light compensation intensity (for example, 1). In addition, in the foregoing embodiment, the light compensation effect 1, the light compensation effect 2, and the light compensation effect 3 may use the same image processing algorithm 1 to perform image processing on the preview image; or may use image processing algorithms with different focuses to perform image processing on the preview image.

In embodiments of this application, the manner of determining a light compensation effect corresponding to a beautification control is not limited, and there may be another manner. This is not specifically limited herein. For example, in some embodiments, a flash may emit light of different colors, and different light compensation effects may be created by adjusting a color and a light compensation intensity of the flash.

It should be noted that when the flash 196 is disposed on the front side of the electronic device 100 (that is, when an illumination direction of the flash and a photographing direction of a front-facing camera are on a same side of the electronic device 100), the light compensation method for photographing provided in the related embodiments in FIG. 13A to FIG. 19C may also be applied to control the flash 196 disposed on the front side, to adjust a light compensation effect of front-facing photographing in any photographing mode. Details are not described herein again.

In some embodiments of this application, the light compensation icon 207 shown in FIG. 2B and the light compensation icon 701 shown in FIG. 13A may be simultaneously displayed on the photographing interface 11. The user may trigger, through the light compensation icon 207, the electronic device to perform light compensation through a light compensation layer on the display (referring to FIG. 2A to FIG. 9I), and may further trigger, through the light compensation icon 701, the electronic device to perform light compensation by using a flash (referring to FIG. 13A to FIG. 19C).

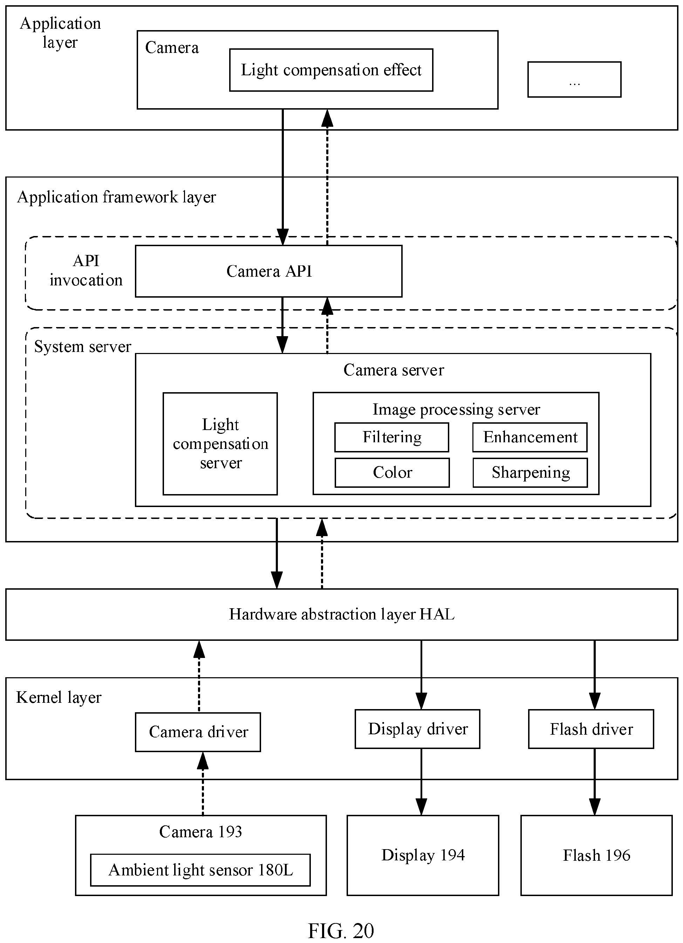

FIG. 20 shows a block diagram of an example of another software structure of the electronic device according to this embodiment of this application. The electronic device 100 may display a light compensation control on a photographing interface, and determine a light compensation intensity of a flash of the electronic device 100 by receiving a user operation performed on the light compensation control, to improve a light condition in a photographing environment, effectively improve image quality of front-facing photographing, and improve photographing experience of a user.

As shown in FIG. 20, a layered architecture divides software into several layers, each with a clear role and division of labor. The layers communicate with each other through a software interface. In some embodiments, an Android system may be divided into an application layer, an application framework layer, a hardware abstraction layer (hardware abstraction layer, HAL), and a kernel (kernel) layer from top to bottom.

As shown in FIG. 20, the application framework layer may mainly include an API and a system server (System Server). The API is for implementing communication between the application layer and the HAL layer and between the application layer and the kernel layer. For example, a camera API may provide communication between a camera application and the HAL layer and between the camera application and the kernel layer. The system server may include a camera server and a view management system. For example, the camera server may include a light compensation server, and an image processing server. The electronic device 100 may invoke a corresponding camera server by invoking the camera API. The camera server may send a related parameter of the camera server to the HAL layer by invoking an HAL interface of the camera. For example, the light compensation server or the image processing server is invoked through the camera API, and a related parameter (for example, a drive current corresponding to a light value of each flash) of the light compensation server and a related parameter of the image processing server (including image optimization, target object identification, or the like) are sent to the HAL layer and the kernel layer, so that the HAL layer and the kernel layer perform a corresponding operation based on the foregoing related parameters.

In this embodiment of this application, a motion detector (motion detector) may be further added to the application framework layer, to perform logical determining on an obtained input event and identify a type of the input event. For example, the motion detector determines, based on information such as touch coordinates and a timestamp of a touch operation included in the input event, that the input event is a knuckle touch event, a finger pad touch event, or the like. In addition, the motion detector may further record a track of the input event, determine a gesture rule of the input event, and respond to different operations based on different gestures.

The HAL layer and the kernel layer are configured to perform a corresponding operation in response to a function invoked by the system server at the application framework layer. The kernel layer is a layer between hardware and software. The kernel layer may include a camera driver and a display region, and may further include an audio driver, a sensor driver, and the like. The display driver of the kernel layer displays the photographing interface 11 by using a hardware device (for example, the display 194), and a light compensation effect may be presented through the photographing interface 11. In some embodiments, the camera server periodically sends a related parameter (including ambient light luminance and the like) of the light compensation server to the HAL layer by invoking a camera HAL interface, and the HAL layer invokes a light compensation algorithm to determine a real-time optimal light compensation intensity, a light compensation intensity 1, a light compensation intensity 2, a light compensation intensity 3, and the like of the electronic device 100. The HAL layer may also send the optimal light compensation intensity, the light compensation intensity 1, the light compensation intensity 2, the light compensation intensity 3, and the like to the camera application through the application framework layer. In some embodiments, only when the electronic device receives a user operation of determining the light compensation effect, the camera server invokes the HAL layer to calculate a light compensation intensity corresponding to the light compensation effect determined by the user.

Based on the block diagram of the software structure shown in FIG. 20, the following describes in detail, by using an example, a front-facing light compensation method for photographing provided in an embodiment of this application.

First, the electronic device enables a camera application (or another application that can provide front-facing photographing). When the touch sensor 180K receives a touch operation, a corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and the event manager determines whether the touch coordinates are in a specified region. If the touch coordinates are in the specified region, a control corresponding to the original input event is identified. In an example in which the touch operation is a touch tap operation, and a control corresponding to the tap operation is a control of a camera application icon, the camera application invokes an interface of the application framework layer to enable the camera application, then enables the camera driver by invoking the kernel layer, and captures a static image or a video through the camera 193. Herein, for a manner of enabling the camera application, refer to related descriptions in the embodiment in FIG. 2A. As shown in FIG. 2A, the electronic device may display the control 105D shown in FIG. 2A on a screen, so that the user enables the camera application.

When capturing a static image or a video by using the front-facing camera 193, the electronic device 100 periodically obtains ambient light luminance by using the ambient light sensor 180L. The application framework layer obtains the ambient light luminance from the kernel layer, and sends the ambient light luminance to the camera application. The camera application invokes the light compensation server of the camera server through the camera API. The camera server sends a related parameter (including the ambient light luminance) of the light compensation server to the HAL layer. The HAL layer invokes, based on the related parameter of the light compensation server, a light compensation algorithm to determine an optimal light compensation intensity, a light compensation intensity 1, a light compensation intensity 2, a light compensation intensity 3, and the like of each of the M flashes when the electronic device 100 performs photographing. The camera application obtains the optimal light compensation intensity, the light compensation intensity 1, the light compensation intensity 2, the light compensation intensity 3, and the like through the application framework layer. In some other embodiments, the camera server may send the related parameter of the light compensation server and the image data of the preview image to the HAL layer. The HAL layer invokes an image recognition algorithm based on the image data of the preview image to identify the target object, and then invokes the light compensation algorithm to determine, based on an area of the target object in the preview image in each of the M regions of the display region 205 and the related parameter of the light compensation server, the optimal light compensation intensity, the light compensation intensity 1, the light compensation intensity 2, and the light compensation intensity 3 of each of the M flashes during photographing of the electronic device 100. In some other embodiments, the camera server may send the related parameter of the light compensation server and the image data of the preview image to the HAL layer. The HAL layer invokes an image processing algorithm based on the image data of the preview image to determine image luminance of the preview image in the M regions, and then invokes the light compensation algorithm to determine, based on the image luminance in the M regions and the related parameter of the light compensation server, the optimal light compensation intensity, the light compensation intensity 1, the light compensation intensity 2, and the light compensation intensity 3 of each of the M flashes during photographing of the electronic device 100.

Then, the electronic device 100 receives a user operation, and the electronic device 100 receives the user operation. The user operation is for determining the light compensation effect of the preview image. For example, refer to FIG. 14B and FIG. 14C. The user operation may alternatively be that the user taps the main beautification control 802B on the photographing interface 11 and then taps the control 803A (or the control 803B or the control 803C). The kernel layer processes the user operation received by the touch sensor 180K into an original input event. The application framework layer obtains the original input event from the kernel layer, and determines the light compensation effect of the preview image (the light compensation effect of the preview image includes light compensation of each flash, and may further include an image processing algorithm corresponding to the preview image). The camera application invokes an interface of the application framework layer to enable the camera server (including the light compensation server and the image processing server). The camera server invokes an HAL interface of the camera application. The HAL layer invokes, based on the related parameter (including a drive current corresponding to a light compensation intensity of each flash and an identifier of the image processing algorithm corresponding to the preview image) sent by the camera server, the kernel layer to enable a flash drive, and drives each flash to adjust display luminance of the flash based on the drive current of the flash. In addition, the HAL layer may further invoke an image processing algorithm corresponding to the identifier of the image processing algorithm to perform image processing on the preview image captured by the camera 193. Then, the HAL layer sends the processed data to the kernel layer, invokes the kernel layer to enable the display driver, and drives the display to display the processed preview image. A light compensation effect may be presented through the preview image. The user operation received by using the display 194 is not limited to determining the light compensation effect of the preview image. In this embodiment of this application, the light compensation effect of the preview image may alternatively be determined through another user operation. This is not specifically limited herein.

All or a part of the foregoing embodiments may be implemented by software, hardware, firmware, or any combination thereof. When software is used to implement embodiments, embodiments may be implemented entirely or partially in a form of a computer program product. The computer program product includes one or more computer instructions. When the computer program instructions are loaded and executed on a computer, the procedure or functions according to embodiments of this application are all or partially generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the methods in the foregoing embodiments may be implemented by a computer program instructing related hardware. The program may be stored in a computer-readable storage medium. When the program is executed, the procedures of the methods in the foregoing embodiments may be performed. The storage medium includes any medium that can store program code, for example, a ROM, a random access memory RAM, a magnetic disk, or an optical disc.

## Claims

1. A light compensation method for photographing, applied to an electronic device, wherein the electronic device comprises M flashes, M is a positive integer, illumination directions of the M flashes and a photographing direction of a camera of the electronic device are on a same side of the electronic device, and the method comprises:
receiving, by the electronic device, a first user operation;
enabling a photographing function in response to the first user operation;
displaying a first interface corresponding to the photographing function, wherein the first interface comprises a preview image captured by the camera and a control;
determining, by the electronic device, a light compensation intensity of the flashes based on image luminance of the preview image; and
adjusting, by the electronic device, luminance of the flashes based on the light compensation intensity of the flashes.

2. The method according to claim 1, wherein before the determining, by the electronic device, a light compensation intensity of the flashes based on image luminance of the preview image, the method further comprises: receiving, by the electronic device, a seventh user operation; and
the determining, by the electronic device, a light compensation intensity of the flashes based on image luminance of the preview image specifically comprises:
determining, by the electronic device, the light compensation intensity of the flashes based on the image luminance of the preview image in response to the received seventh user operation.

3. The method according to claim 2, wherein before the receiving, by the electronic device, a seventh user operation, the method further comprises:
displaying, by the electronic device, a third selection control and a fourth selection control on the first interface, wherein the third selection control corresponds to a first light compensation intensity, and the fourth selection control corresponds to a second light compensation intensity;
the receiving, by the electronic device, a seventh user operation specifically comprises:
receiving, by the electronic device, the seventh user operation performed on the third selection control; and
the determining, by the electronic device, the light compensation intensity of the flashes based on the image luminance of the preview image in response to the received seventh user operation specifically comprises:
determining, by the electronic device based on the image luminance of the preview image, the first light compensation intensity corresponding to the third selection control as the light compensation intensity of the flashes in response to the received seventh user operation.

4. The method according to claim 3, wherein the third selection control corresponds to the first light compensation intensity and a third image processing algorithm;
after the determining, by the electronic device based on the image luminance of the preview image, the first light compensation intensity corresponding to the third selection control as the light compensation intensity of the flashes in response to the received seventh user operation, the method further comprises:
performing, by using the third image processing algorithm, image processing on the preview image captured by the camera; and
the adjusting, by the electronic device, luminance of the flashes based on the light compensation intensity of the flashes comprises:
adjusting, by the electronic device, the luminance of the flashes based on the first light compensation intensity.

5. The method according to any one of claims 1 to 4, wherein the first interface comprises M regions, the M regions are determined based on locations of the M flashes on the electronic device, and the M flashes one-to-one correspond to the M regions; and the determining, by the electronic device, a light compensation intensity of the flashes based on image luminance of the preview image specifically comprises: determining, by the electronic device, a third light compensation intensity based on ambient light luminance;
determining, by the electronic device, a fourth light compensation intensity based on image luminance of the preview image in a first region of the M regions, wherein the first region corresponds to a first flash in the M flashes; and
determining, by the electronic device based on the third light compensation intensity and the fourth light compensation intensity, a light compensation intensity corresponding to the first flash, wherein the electronic device stores a correspondence between the fourth light compensation intensity and the image luminance.

6. The method according to claim 5, wherein the determining, by the electronic device based on the third light compensation intensity and the fourth light compensation intensity, a light compensation intensity corresponding to the first flash specifically comprises:
when a difference between the third light compensation intensity and the fourth light compensation intensity is greater than a first threshold, determining, by the electronic device, the light compensation intensity corresponding to the first flash as the fourth light compensation intensity; or
when the difference between the third light compensation intensity and the fourth light compensation intensity is less than or equal to the first threshold, determining, by the electronic device, the light compensation intensity corresponding to the first flash as the third light compensation intensity.

7. The method according to claim 5 or 6, wherein at least two regions of the M regions overlap.

8. The method according to any one of claims 5 to 7, wherein the determining, by the electronic device, a third light compensation intensity based on ambient light luminance comprises:
determining, by the electronic device, a fifth light compensation intensity based on the ambient light luminance;
identifying, by the electronic device, a target object in the preview image;
determining, by the electronic device, an area of the target object in each of the M regions in the preview image; and
determining, by the electronic device, the third light compensation intensity based on the fifth light compensation intensity and an area of the target object in the M regions in the preview image.

9. The method according to claim 3, wherein before the displaying, by the electronic device, a third selection control and a fourth selection control on the first interface, the method further comprises:
displaying, by the electronic device, a second control on the first interface; and
receiving, by the electronic device, an eighth user operation performed on the second control; and
the displaying, by the electronic device, a third selection control and a fourth selection control on the first interface comprises:
displaying, by the electronic device, the third selection control and the fourth selection control on the first interface in response to the eighth user operation.

10. The method according to claim 4, wherein the fourth selection control corresponds to the second light compensation intensity and a fourth image processing algorithm, and the third image processing algorithm is different from the fourth image processing algorithm.

11. A light compensation method for photographing, wherein the method is applied to an electronic device, the electronic device comprises a display and a front-facing camera, and the method comprises:
receiving, by the electronic device, a first user operation; enabling a photographing function in response to the first user operation; and
displaying a first interface corresponding to the photographing function, wherein the first interface comprises a preview image captured by the front-facing camera and a control, the preview image comprises a preview region and a light compensation region, the preview region displays a preview image obtained by performing light compensation on the light compensation region, and a light compensation intensity of the light compensation region is controlled by the electronic device by adjusting a light compensation parameter of the light compensation region.

12. The method according to claim 11, wherein the light compensation parameter of the light compensation region comprises at least one of transparency of the light compensation region, pixel luminance of the light compensation region of the display, and luminance of a backlight source of the display.

13. The method according to claim 11 or 12, wherein the displaying a first interface corresponding to the photographing function comprises:
displaying, based on a preset light compensation parameter of the light compensation region, the first interface corresponding to the photographing function.

14. The method according to any one of claims 11 to 13, wherein the light compensation region comprises a first light compensation subregion and a second light compensation subregion, and the light compensation intensity of the light compensation region is controlled by the electronic device by adjusting a light compensation parameter of at least one of the first light compensation subregion and the second light compensation subregion.

15. The method according to any one of claims 11 to 14, further comprising:
receiving, by the electronic device, a second user operation; and
determining, by the electronic device, a shape of the preview region or the light compensation region on the first interface in response to the second user operation.

16. The method according to any one of claims 11 to 15, further comprising:
receiving, by the electronic device, a third user operation; and
determining, by the electronic device, a size of the preview region or the light compensation region on the first interface in response to the third user operation.

17. The method according to any one of claims 11 to 16, further comprising:
receiving, by the electronic device, a fourth user operation; and
determining, by the electronic device, a location of the preview region or the light compensation region on the first interface in response to the fourth user operation.

18. The method according to any one of claims 11 to 17, further comprising:
receiving, by the electronic device, a fifth user operation;
determining, by the electronic device, the light compensation parameter of the light compensation region in response to the fifth user operation; and
controlling, by the electronic device, the light compensation intensity of the light compensation region based on the light compensation parameter of the light compensation region.

19. The method according to claim 18, wherein the controlling, by the electronic device, the light compensation intensity of the light compensation region based on the light compensation parameter of the light compensation region comprises:
controlling, by the electronic device, the light compensation intensity of the light compensation region based on the light compensation parameter of at least one of the first light compensation subregion and the second light compensation subregion.

20. The method according to claim 15, wherein before the receiving, by the electronic device, a second user operation, the method further comprises:
displaying, by the electronic device, a first control on the first interface, wherein the first control is for determining the shape of the preview region, and the preview region has at least two shapes;
receiving, by the electronic device, a sixth user operation performed on the first control; and
displaying, by the electronic device, an icon of the shape of the preview region in response to the sixth user operation; and
the receiving, by the electronic device, a second user operation specifically comprises:
receiving, by the electronic device, the second user operation performed on the icon.

21. The method according to claim 15, wherein the second user operation comprises a gesture of sliding a finger of a user on the display; and
the determining, by the electronic device, a shape of the preview region or the light compensation region on the first interface in response to the second user operation specifically comprises:
determining, by the electronic device, the shape of the preview region or the light compensation region on the first interface based on a sliding track of the gesture in the second user operation in response to the second user operation.

22. The method according to claim 18, wherein before the electronic device receives the fifth user operation, the first interface displays a first selection control and a second selection control, the first selection control and the second selection control correspond to different light compensation parameters, and the first selection control corresponds to a first light compensation parameter;
the receiving, by the electronic device, a fifth user operation specifically comprises:
receiving, by the electronic device, the fifth user operation performed on the first selection control; and
the determining, by the electronic device, the light compensation parameter of the light compensation region in response to the fifth user operation specifically comprises:
determining, by the electronic device, the light compensation parameter of the light compensation region as the first light compensation parameter in response to the fifth user operation.

23. The method according to claim 22, wherein the first selection control corresponds to the first light compensation parameter and a first image processing algorithm, and after the determining, by the electronic device, the light compensation parameter of the light compensation region as the first light compensation parameter in response to the fifth user operation, the method further comprises:
performing, by using the first image processing algorithm, image processing on the preview image captured by the front-facing camera.

24. The method according to claim 18, wherein before the electronic device receives the fifth user operation, the first interface displays a first luminance adjustment bar corresponding to the first light compensation subregion and a second luminance adjustment bar corresponding to the second light compensation subregion, the first luminance adjustment bar comprises a first identifier, a length from a first end of the first luminance adjustment bar to the first identifier is for indicating a light compensation intensity of the first light compensation subregion, and a total length from the first end of the first luminance adjustment bar to a second end of the first luminance adjustment bar is for indicating a maximum light compensation intensity;
the receiving, by the electronic device, a fifth user operation specifically comprises:
receiving, by the electronic device, the fifth user operation performed on the first luminance adjustment bar, and adjusting a location of the first identifier on the first luminance adjustment bar; and
the determining, by the electronic device, the light compensation parameter of the light compensation region in response to the fifth user operation specifically comprises:
determining, by the electronic device in response to the fifth user operation, a light compensation parameter of the first light compensation subregion based on a light compensation intensity indicated by the length from the first end to the first identifier.

25. The method according to claim 22, wherein the second selection control corresponds to a second light compensation parameter and a second image processing algorithm, and the first image processing algorithm is different from the second image processing algorithm.
